# EUROPÄISCHE PATENTANMELDUNG

(11) **EP 2 687 753 A2**
(43) Veröffentlichungstag der Anmeldung: **22.01.2014**
(21) Anmeldenummer: 13002565.3
(22) Anmeldetag: 05.08.2005
(51) Int. Cl.: F16H 15/42

(54) **Reibringgetriebe mit zwei voneinander um einen Spalt beabstandeten Walzkörpern**

(30) Priorität: 06.08.2004 DE 102004038585; 06.08.2004 DE 102004038586; 18.10.2004 DE 102004050855
(62) Teilanmeldung aus: 05774441.9
(71) Anmelder: Rohs, Ulrich, 52351 Düren (DE)
(72) Erfinder: Rohs, Ulrich, 52351 Düren (DE)
(74) Vertreter: Reuther, Martin

(57) **Zusammenfassung**

Um ein Reibringgetriebe weiter zu entwickeln, schlägt die Erfindung ein Reibringgetriebe mit zwei voneinander um einen Spalt beabstandeten Wälzkörpern vor, die auf axialen Wälzkörperachsen umlaufend über einen Reibring miteinander korrespondieren, bei welchem der Reibring in einer Verstellbrücke um einen Verstellweg axial verlagerbar entlang dem Spalt angeordnet ist und eine verlagerbare Lagerstelle für den Reibring an der Verstellbrücke vorgesehen ist.

## Beschreibung

Die Erfindung betrifft ein Reibringgetriebe mit zwei voneinander um einen Spalt beabstandeten Wälzkörpern, die auf axialen Wälzkörperachsen umlaufend über einen Reibring miteinander korrespondieren, bei welchem der Reibring in einer axial frei verlagerbaren Verstellbrücke um einen Verstellweg axial entlang dem Spalt verlagerbar angeordnet ist. Auch betrifft die Erfindung ein Reibringgetriebe mit zwei voneinander um einen Spalt beabstandeten Wälzkörper, die auf axialen Wälzkörperachsen umlaufend über einen Reibring miteinander korrespondieren, bei welchem der Reibring in einer, in einem Käfig axial frei geführten Verstellbrücke um einen Verstellweg axial entlang dem Spalt verlagerbar angeordnet ist.

Derartige Verstellbrücken sind aus dem Stand der Technik, wie beispielsweise in der EP 0 878 641 A1 und der EP 0 980 993 A2 beschrieben, bekannt und können in einem Käfig gehalten und über diesen Käfig angelenkt werden. Hierbei besteht jedoch die Gefahr, dass die Verstellbrücke zwischen den Führungsstangen des jeweiligen Käfigs verkantet. Diese Gefahr besteht jedoch nicht nur hinsichtlich eines Käfigs sondern generell, wenn die Verstellbrücke an Führungsstangen gelagert ist.

Es ist Aufgabe vorliegender Erfindung bekannte Reibringgetriebe weiter zu entwickeln und damit auch die beschriebenen Nachteile zu beseitigen. Als Lösung werden Reibringgetriebe mit den Merkmalen der unabhängigen Ansprüche vorgeschlagen.

Ein Reibringgetriebe lässt sich durch ein Reibringgetriebe mit zwei voneinander um einen Spalt beabstandeten Wälzkörpern weiterentwickeln, die auf axialen Wälzkörperachsen umlaufend über einen Reibring miteinander korrespondieren, bei welchem der Reibring in einer axial frei verlagerbaren Verstellbrücke um einen Verstellweg axial entlang dem Spalt verlagerbar angeordnet ist, und die Verstellbrücke mittels einer einzigen axialen Führungseinrichtung gelagert ist. auch lässt sich hierdurch die Gefahr eines Verkantens beseitigen.

In vorliegendem Zusammenhang bezeichnet der Begriff "Verstellbrücke" eine Anordnung, die mit dem Reibring verlagert werden kann, jedoch nicht mit dem Reibring umläuft. Insofern muss die Verstellbrücke nicht zwingend eine Brückenform aufweisen. Andererseits soll die Verstellbrücke frei axial verlagerbar sein, so dass die Verstellbrücke insbesondere eine auf andere Weise bedingte Verlagerung des Reibringes, wie diese beispielsweise erfolgt, wenn der Reibring verkippt wird, folgen kann.

Da die Verstellbrücke vorteilhafter Weise mittels lediglich einer einzigen axialen Führungseinrichtung gelagert ist, existiert vorliegend zwischen der Verstellbrücke und der axialen Führungseinrichtung lediglich ein Führungsbereich, in welchem die Verstellbrücke mit der axialen Führungseinrichtung in Kontakt steht. Hierdurch ist ein Verkanten der Verstellbrücke gegenüber mehreren Führungseinrichtungen vorteilhafter Weise unterbunden. Darüber hinaus kann eine derartige Anordnung äußerst klein bauen.

Der Begriff "Wälzkörper" beschreibt Einrichtungen, die dazu geeignet sind, ein Drehmoment von einer Eingangsseite zu einer Ausgangsseite zu übertragen oder umgekehrt. Beispielsweise sind diese Wälzkörper kegelförmig oder zylindrisch ausgebildete Gebilde, die miteinander mittels eines Reibringes in Kontakt stehen. Hierbei rotiert jeder Wälzkörper beispielsweise um eine axiale Wälzkörperachse, wobei jede axiale Wälzkörperachse eines ersten Wälzkörpers von einer axialen Wälzkörperachse eines weiteren Wälzkörpers beabstandet ist. Durch ein geeignetes Beabstanden der beiden axialen Wälzkörperachsen entsteht zwischen den beiden miteinander korrespondierenden Wälzkörpern ein Spalt, in welchem ein Reibring derart angeordnet ist, dass der Reibring einen der Wälzkörper umgreift und um diesen umläuft.

Im Sinne vorliegender Erfindung versteht man unter dem Begriff "Reibring" eine Einrichtung, mittels welcher zwischen den beiden Wälzkörpern ein Kontakt hergestellt wird, so dass Kräfte, insbesondere Drehmomente, von einem Wälzkörper auf den anderen Wälzkörper übertragen werden können. Eine bevorzugte Ausführungsform des Reibringes sieht vor, dass der Reibring, wie bereits vorstehend angedeutet, zwischen den beiden Wälzkörpern in einem Spalt hin und her wandert und dabei mit beiden Wälzkörpern in Kontakt steht, wobei der Reibring einen der beiden Wälzkörper umgreift. Somit ist zumindest ein Wälzkörper innerhalb des Ringes angeordnet.

Es versteht sich, dass ein Reibring in einer anderen Ausführungsform auch der Gestalt sein kann, bei der er lediglich in dem Spalt zwischen den beiden Wälzkörpern angeordnet ist und keinen der Wälzkörper umgreift bzw. bei der er beide Wälzkörper umgreift, wobei in diesen Ausführungsformen für den Reibring auch eine modifizierte Lagerung vorgesehen werden müsste.

Unter dem Begriff "axiale Führungseinrichtung" versteht man jegliche Einrichtung, die dazu geeignet ist, die Verstellbrücke in dem Reibringgetriebe derart zu lagern, dass die Verstellbrücke im Bereich eines Verstellweges axial entlang der axialen Wälzkörperachsen und damit auch axial entlang des Spaltes verlagerbar ist, wobei durch die axiale Führungseinrichtung die Freiheitsgrade der Verstellbrücke auf eine Ebene senkrecht zu dem Verstellweg beschränkt sind. Vorzugsweise ist die axiale Führungseinrichtung derart ausgestaltet, dass darüber hinaus lediglich eine Rotation um den Verstellweg in dieser Ebene möglich ist. Hierbei kann es ausreichen, wenn die Verstellbrücke hinsichtlich der Rotation bzw. hinsichtlich einer Verlagerung in dieser Ebene beispielsweise durch den Reibring selbst ausreichend fixiert wird.

Die Gefahr eines Verkannten lässt sich darüber hinaus auch unabhängig von den übrigen Merkmalen vorliegender Erfindung beseitigen und ein Reibringgetriebe mit zwei voneinander um einen Spalt beabstandeten Wälzkörper weiterentwickeln, die auf axialen Wälzkörperachsen umlaufend über einen Reibring miteinander korrespondieren, bei welchem der Reibring in einer axial frei verlagerbaren Verstellbrücke um einen Verstellweg axial entlang dem Spalt verlagerbar angeordnet ist, und die Verstellbrücke axial lediglich an einer Seite bezüglich einer durch die Wälzkörperachsen vorgegebenen Fläche gelagert ist.

Unter dem Begriff "durch die Wälzkörperachsen vorgegebene Fläche" versteht man im Wesentlichen eine Ebene, die durch die zwei Wälzkörperachsen aufgespannt ist, und die das Reibringgetriebe zumindest fiktiv in eine erste und in eine zweite Seite aufteilt.

Dadurch, dass die Verstellbrücke axial lediglich an einer Seite bezüglich einer durch die Wälzkörperachse vorgegebenen Fläche gelagert ist, kann die Gesamtanordnung wesentlich kleiner ausgebildet und somit erheblich Bauraum eingespart werden.

Im Zusammenhang mit der einseitig gegenüber der vorgegebenen Fläche angeordneten Verstellbrücke ist es ebenfalls vorteilhaft, wenn die Verstellbrücke mittels einer einzigen axialen Führungseinrichtung gelagert ist. Es versteht sich, dass die Verstellbrücke auch an mehreren axialen Führungseinrichtungen gelagert sein kann, jedoch wird hierbei die Gefahr des Verkantens der Verstellbrücke bei einer Führung durch mehr als eine axiale Führungseinrichtung auch im Zusammenhang mit der einseitig vorgesehenen axialen Führungseinrichtung vergrößert. Somit ist eine einzige axiale Führungseinrichtung auch im Zusammenhang mit einer Verstellbrücke vorteilhaft, die axial lediglich an einer Seite bezüglich einer durch die Wälzkörperachsen vorgegebenen Fläche gelagert ist.

Gefahr eines Verkannten lässt sich auch ohne die übrigen Merkmale vorliegender Erfindung beseitigen und ein Reibringgetriebe mit zwei von einander um einen Spalt beabstandeten Wälzkörpern weiterentwickeln, die auf axialen Wälzkörperachsen umlaufend über einen Reibring korrespondieren, gelöst, bei welchem der Reibring in einer axial frei verlagerbaren Verstellbrücke um einen Verstellweg axial entlang dem Spalt verlagerbar angeordnet ist, und die sich dadurch auszeichnet, dass eine Drehachse eins Käfigs auf einer Seite bezüglich einer durch die Wälzkörperachsen vorgegebenen Fläche angeordnet ist.

Bisher war die Drehachse eines Käfigs in einer durch die Wälzkörperachsen aufgespannten Ebene angeordnet. Um jedoch auftretende Kräfte, die während des Veränderns des Anstellwinkels des Reibringes an der Drehachse auftreten, anwendungsfallbezogen auslegen und abstimmen zu können, ist es vorteilhaft, wenn die Drehachse des Käfigs abweichend hiervon auf einer Seite der durch die Wälzkörperachsen vorgegebenen Fläche beziehungsweise Ebene angeordnet ist. Bei dieser Lösung ist die Käfigdrehachse dann seitlich einer im Wesentlichen senkrecht zum Reibring verlaufenden Ebene angeordnet. Insbesondere lässt sich durch ein derartiges Verlegen der Drehachse die Einstellbarkeit des Anstellwinkels je konstruktiv nach Anwendungsfall gröber oder feiner vorgeben.

Eine Alternative hierzu sieht vor, dass eine Drehachse eines Käfigs außerhalb des Verstellbereichs der Verstellbrücke angeordnet ist. Insbesondere ein Anordnen der Drehachse außerhalb des Verstellbereichs, gewährleistet nahezu beliebig wählbare Hebellängen.

Es versteht sich, dass die Käfigdrehachse aber auch sowohl seitlich der durch die Wälzkörperachsen aufgespannten Ebene als auch außerhalb des Verstellbereichs vorgesehen werden kann.

Mittels der vorstehend beschriebenen unterschiedlichen Positionen der Drehachse lassen sich, auch unabhängig von den übrigen Merkmalen des Reibringgetriebes, bei kleinem Bauraum möglichst große Wege für die ansteuernden Antriebe realisieren, wodurch die Ansteuerung exakter wirksam ist und Fehler minimiert werden.

Die Gefahr eines Verkannten lässt sich außerdem unabhängig von den übrigen Merkmalen vorliegender Erfindung beseitigen und ein Reibringgetriebe mit zwei voneinander um einen Spalt beabstandeten Wälzkörpern weiterentsickeln, die auf axialen Wälzkörperachsen umlaufend über einen Reibring miteinander korrespondieren, bei welchem der Reibring in einer in einem Käfig axial frei geführten Verstellbrücke um einen Verstellweg axial entlang dem Spalt verlagerbar angeordnet ist, und die Verstellbrücke an dem Käfig mittels einer einzigen axialen Führungseinrichtung gelagert ist.

Vorteilhafer Weise ist somit die Verstellbrücke in einem dafür vorgesehenen Käfig derart beweglich angeordnet, dass die Verstellbrücke lediglich axial entlang der axialen Führungseinrichtung hin und her wandern kann, je nach dem wie der Käfig gegenüber den axialen Wälzkörperachsen angestellt ist.

Der Begriff "Käfig" bezeichnet vorliegend eine Baugruppe, welche die Verstellbrücke trägt, und die Baugruppe es der Verstellbrücke zusätzlich ermöglicht, der Bewegung des Reibringes entlang der Wälzkörpermantelfläche zu folgen. Insbesondere braucht der Käfig somit baulich einem Käfig im engeren Sinne nicht zu ähneln. Beispielsweise kann je nach Ausführung auch eine einfache axiale Führungsachse, an welcher die Verstellbrücke gelagert ist, einen Käfig im Sinne der Erfindung darstellen.

Wie vorstehend erläutert, bedingt die axiale Führungseinrichtung eine Axialführung der Verstellbrücke. Eine derartige Axialführung kann baulich besonders einfach dadurch realisiert werden, dass die Verstellbrücke lediglich über eine Führungsstange gelagert ist. Somit ist für die Verstellbrücke eine Gradführung sicher realisiert. Die Führungsstange bildet zudem eine besonders simpel konstruierte axiale Führungsachse.

Im Zusammenhang mit einem Käfig, in welchem eine Verstellbrücke geführt ist, kann die Gefahr eines Verkantens auch unabhängig von den übrigen Merkmalen der Erfindung beseitigt und ein Reibringgetriebe mit zwei voneinander um einen Spalt beabstandeten Wälzkörper weiterentwickelt werden, die auf axialen Wälzkörperachsen umlaufend über einen Reibring miteinander korrespondieren, bei welchem der Reibring in einer in einem Käfig axial frei geführten Verstellbrücke um einen Verstellweg axial entlang dem Spalt verlagerbar angeordnet ist, und die Verstellbrücke axial lediglich an einer Seite bezüglich einer durch die Wälzkörperachsen vorgegebenen Fläche gelagert ist.

Auch hinsichtlich dieser konkreten Lösung ist es, wie bereits vorstehend erläutert wurde, vorteilhaft, wenn die Verstellbrücke an einer einzigen axialen Führungseinrichtung gelagert ist.

Um den Verstellweg der axialen Führungseinrichtung zu begrenzen, ist es vorteilhaft, wenn das Reibringgetriebe eine axiale Führungseinrichtung aufweist, welche Mittel zum Begrenzen des axialen Verstellweges aufweist.

Baulich besonders einfach sind derartige Begrenzungsmittel gebildet, wenn die Begrenzungsmittel in etwa quer zum axial verlaufenden Verstellweg gerichtete Bauteilgruppen sind, wie etwa Querstreben eines Käfigs.

Um zu verhindern, dass die Verstellbrücke eine Drehbewegung um die axiale Führungseinrichtung bzw. um die Führungsstange der axialen Führungseinrichtung durchführt, ist es vorteilhaft, wenn das Reibringgetriebe eine Drehsicherung aufweist, welche ein Drehen der Verstellbrücke um eine Führungsachse einer axialen Führungseinrichtung unterbindet.

Diese Drehsicherung kann durch eine separate Führungseinrichtung oder durch eine Profilierung der Führungsstange einer Axialführung gewährleistet sein.

Insbesondere bei Letzterem ist es vorteilhaft, wenn eine axiale Führungseinrichtung eine interne Drehsicherung aufweist.

Um jedoch an der Verstellbrücke insbesondere sehr hohe auftretende Momente besonders günstig aufnehmen zu können, ist es vorteilhaft, wenn eine Drehsicherung beabstandet von einer Führungseinrichtung angeordnet ist. Insbesondere kann die Drehsicherung auf der anderen Seite der Fläche bzw. Ebene, die durch die Wälzkörperachsen aufgespannt wird, als diejenige auf welche die axiale Führungseinrichtung vorgesehen ist, angeordnet sein. Dort nimmt die Drehsicherung keinen für eine axiale Führungseinrichtung benötigten Bauraum oder zumindest weniger Bauraum als eine axiale Führungseinrichtung ein und kann dennoch hohen Drehmomenten widerstehen. Insofern baut eine derartige Anordnung besonders klein und, da die Gefahr eines Verkantens minimiert ist, besonders betriebsicher. Dementsprechend ist die separate Anordnung von Axialführung und Drehsicherung jeweils auf einer Seite der durch die Wälzkörperachsen aufgespannten Ebene auch unabhängig von den übrigen Merkmalen vorliegender Erfindung vorteilhaft.

Ebenfalls ist es zur Aufnahme von besonders hohen Kräften, insbesondere Momenten, vorteilhaft, wenn die Drehsicherung an einem Gehäuse des Reibringgetriebes angeordnet ist.

Eine Ausführungsvariante sieht vor, dass die Drehsicherung eine Halteschiene zum Halten der Verstellbrücke aufweist. Durch die Halteschiene findet die Verstellbrücke einen zusätzlichen Halt am Getriebegehäuse unabhängig von der Führungseinrichtung.

Wenn die Halteschiene frei von axialen Begrenzungsmitteln ist, ist die Verstellbrücke besonders einfach zu montieren. Weil die Drehsicherung lediglich dafür vorgesehen ist, ein Drehen der Verstellbrücke um die axiale Führungseinrichtung zu verhindern, sind axiale Begrenzungsmittel überflüssig. Derartige Begrenzungsmittel weist in der Regel die axiale Führungseinrichtung selbst auf.

Andererseits können die axialen Begrenzungsmittel auch ausschließlich im Bereich der Drehsicherung vorgesehen sein, um durch den Abstand zur axialen Führungseinrichtung große Drehmomente bzw. Rückstellmomente oder Gegenkräfte aufbringen zu können.

Eine alternative Ausführungsvariante sieht vor, dass die Halteschiene und die Führungsachse der Führungseinrichtung identisch sind. Hierdurch ist die axial geführte Verstellbrücke baulich besonders einfach realisiert.

Es versteht sich, dass die bauliche Trennung von Drehsicherung und axialer Führung, insbesondere auf unterschiedliche Seiten einer durch die Wälzkörperachsen aufgespannten Ebene auch unabhängig von den übrigen Merkmalen vorliegender Erfindung bei einem Reibringgetriebe vorteilhaft ist.

Des Weiteren ist vorgeschlagen, dass eine Führungsachse oder ein Käfig des Reibringgetriebes gegenüber einem Gehäuse des Reibringgetriebes eine elastische Lagereinrichtung aufweist. Durch die elastische Lagereinrichtung kann eine Hysteresis freie Ansteuerung der Anstellbrücke bzw. des Käfigs vorteilhaft realisiert werden.

Auch kann eine derartige elastische Lagerung im Vergleich zu anderen Lagerarten, insbesondere im Vergleich zu den aus dem Stand der Technik diesbezüglich bekannten Wälzlagern, klein bzw. kostengünstig realisiert werden. Bei geeigneter Anordnung der elastischen Elemente der elastischen Lagereinrichtung kann gewährleistet werden, dass der Käfig durch die elastischen Elemente in Richtung einer Sicherheitsposition vorgespannt wird, so dass beispielsweise im Falle einer Betriebsstörung der Käfigverstellung der Käfig automatisch in die Sicherheitsposition verlagert wird. Dies gilt auch hinsichtlich einer Verstellbrücke, welche nicht zusätzlich in einem Käfig gelagert ist, sondern unmittelbar an einer Führungsachse einer Führungseinrichtung.

Als elastische Lagereinrichtungen können Gummielemente, aber auch Stahlfedern, wie Blattfedern, vorteilhaft zur Anwendung kommen. Gummielemente und Stahlfedern haben gute elastische Eigenschaften und sind einfach und kostengünstig herzustellen.

Durch eine geeignete Ausgestaltung bzw. Anordnung der elastischen Elemente kann hinsichtlich nicht erwünschter Freiheitsgrade äußerst kostengünstig eine ausreichende Stabilität gewährleistet werden. Diesbezüglich können andererseits auch andere Führungselemente bzw. Antriebselemente verwendet werden.

In diesem Zusammenhang ist es vorteilhaft, wenn der Käfig aus einem Blechkörper hergestellt ist. Ein Blechkörper kann baulich so ausgelegt werden, dass er sich in bestimmten Bereichen durch besonders gute Federeigenschaften auszeichnet, sodass mittels des Blechkörpers vorteilhaft eine elastische Lagereinrichtung bereit gestellt ist.

Vorzugsweise weist der Blechkörper wenigstens einen Befestigungsbereich und einen elastischen Bereich aufweist, wobei der elastische Bereich elastischer als der Befestigungsbereich ist und eine elastische Lagereinrichtung bereit stellt. Der Befestigungsbereich kann dann, insbesondere in Bezug auf den Freiheitsgrad der Lagereinrichtung, insbesondere stabiler bzw. steifer ausgestaltet sein.

Eine sowohl axial als auch radial zu den Wälzkörperachsen arbeitende elastische Lagereinrichtung ist besonders einfach konstruiert, wenn der Blechkörper im Bereich der elastischen Lagereinrichtung um seine neutrale Faser verdreht, vorzugsweise um 90° verdreht, ausgebildet ist.

Es versteht sich, dass die elastische Lagereinrichtung auch unabhängig von den übrigen Merkmalen vorliegender Erfindung für ein Reibringgetriebe, bei welchem ein Käfig oder eine ähnliche Anordnung in seinem Winkel verstellt werden muss, um den Reibring zu verlagern, vorteilhaft ist.

Kumulativ oder alternativ sowie auch unabhängig von den übrigen Merkmalen der Erfindung ist es vorteilhaft, wenn ein Reibringgetriebe mit zwei voneinander um einen Spalt beabstandeten Wälzkörpern, die auf axialen Wälzkörperachsen umlaufend über einen Reibring miteinander korrespondieren, wobei der Reibring an einer axialen Führungseinrichtung, wie etwa in einem Käfig, axial frei geführten Verstellbrücke um einen Verstellweg axial entlang dem Spalt verlagerbar angeordnet ist, wobei die axiale Führungseinrichtung beziehungsweise der Käfig über ein Gestänge verlagert werden kann und wobei die axiale Führungseinrichtung beziehungsweise der Käfig mittels einer Lagereinrichtung mit einem Bewegungsausgleich an einem Gehäuse gelagert ist.

Mittels des Bewegungsausgleichs ist baulich besonders einfach ein Längenausgleich der Lagereinrichtung, insbesondere auch einer elastischen Lagereinrichtung, realisiert, sodass beispielsweise Dehnungen der Bauteile auf Grund von Temperaturschwankungen vorteilhaft ausgeglichen werden. Dies ist insbesondere bei beweglichen Bauteilen vorteilhaft, da durch einen derartigen Längenausgleich bzw. Bewegungsausgleich Spannungen in Bauteilen bzw. in miteinander korrespondierenden Bauteilen verhindert werden. Darüber hinaus können durch einen derartigen Längenausgleich auch größere Verstellwinkel über eine Hebelanordnung realisiert werden, ohne dass störende Spannungen auftreten. Gegebenenfalls kann ein derartiger Längenausgleich auch unmittelbar durch eine geeignete Lagerung erfolgen.

Um einen derartigen Längenausgleich bereit zu stellen, ist es vorteilhaft, wenn der Bewegungsausgleich eine Lagerbuchse, eine Tellerfeder und/oder eine Gummibuchse umfasst.

Beispielsweise kann die Führungsachse in der Lagerbuchse axial verlagerbar gelagert sein, wobei die Lagerbuchse derart mit der Führungsachse korrespondiert, dass zwischen der Führungsachse und der Lagerbuchse kein oder nur ein sehr geringes radiales Spiel vorhanden ist.

Um ein Verkippen der Führungsachse gegenüber der Lagerbuchse zu ermöglichen, kann kumulativ eine Tellerfeder an der Führungsachse im Bereich der Lagerbuchse vorgesehen sein. Die Tellerfeder garantiert ein Verkippen bei einem minimalen radialen Spiel zwischen der Führungsachse und der Lagerbuchse.

Alternativ oder kumulativ zu der Tellerfeder können auch andere Einrichtungen, wie etwa eine Gummibuchse, vorgesehen werden. Mittels der Gummibuchse ist die Gefahr eines zu großen radialen Spiels zwischen der Führungsachse und der Lagerbuchse weiter verringert, da eine derartige Gummibuchse auch radial sehr eng anliegend ausgestaltet werden kann, gleichzeitig ist jedoch ebenfalls ein Verkippen der Führungsachse gegenüber der Lagerbuchse ermöglicht.

Eine solche Lagereinrichtung ist auch unabhängig von den übrigen Merkmalen vorliegender Erfindung vorteilhaft, da mit dieser kostengünstig und baulich einfach sowie Platz sparend eine elastische Lagerung für den eine Verstellbrücke lagernden Käfig, beispielsweise an einem Gehäuse, bei einem Reibringgetriebe realisiert ist. Insbesondere kann bei einer geeigneten Anordnung der elastischen Elemente gewährleistet werden, dass der Käfig durch die elastischen Elemente in Richtung auf eine Sicherheitsposition vorgespannt wird, so dass im Falle einer Betriebsstörung der Käfigverstellung der Käfig automatisch in die Sicherheitsposition verlagert wird.

Während es aus dem Stand der Technik bekannt ist, den Anstellwinkel des Reibringes über die Lage des Käfigs vorzugeben, ist kumulativ bzw. alternativ zu den vorliegend genannten Anordnungen ein Reibringgetriebe mit einem Reibring und zwei um Wälzkörperachsen umlaufenden, voneinander um einen Spalt beabstandet angeordneten Wälzkörper vorteilhaft, bei welchem der Reibring entlang des Spaltes auf Grund der Rotation des Reibringes und der Wälzkörper in Abhängigkeit von einem Anstellwinkel bezüglich des Spaltes verlagerbar und in seinem Anstellwinkel über eine Verstellbrücke angelenkt ist, die den Reibring an wenigstens zwei Lagerstellen lagert und die sich dadurch auszeichnet, dass wenigstens eine Lagerstelle des Reibringes bezüglich der Verstellbrücke und/oder bezüglich einer weiteren Lagerstelle des Reibringes verlagerbar angeordnet ist. Eine solche Lagerstelle kann insbesondere bei einem Kegelreibringgetriebe mit um Kegelachsen umlaufenden Kegeln vorgesehen werden.

Durch eine derartige Verstellung, welche letztlich hinsichtlich des Reibringes einer Verlagerung der Lagerstellen und somit einer entsprechenden scheinbaren Verlagerung der Verstellbrücke entspricht, kann der Reibring in seinem Anstellwinkel verlagert werden, ohne dass ein beweglicher Käfig vorgesehen sein muss. Insofern kann ein bezüglich eines Gehäuses ortsfester Käfig vorgesehen sein, wodurch dieser wesentlich kostengünstiger ausgestaltet werden kann und die Gesamtanordnung zuverlässig baut.

Es versteht sich, dass die verlagerbare Lagerstelle konstruktiv auf unterschiedliche Art und Weise realisiert werden kann. Eine Ausführungsvariante sieht eine gelenkige Verstellbrücke vor, bei welcher zwei Lagerstellen des Reibringes durch ein Gelenk zueinander verlagerbar an der Verstellbrücke angeordnet sind.

Sollte die Verstellbrücke insbesondere mittels eines Gelenkes zwischen zwei Lagerstellen nicht gelenkig ausgebildet sein, sieht eine bevorzugte Ausführungsvariante vor, dass eine Lagerstelle verlagerbar an einer Kulissenanordnung geführt ist. Vorzugsweise ist bei diesem Ausführungsbeispiel die Kulissenanordnung an der Verstellbrücke angeordnet, so dass die Kulissenanordnung der Verstellbrücke problemlos folgen kann.

Es ist vorteilhaft, wenn die Kulissenanordnung sowohl eine erste Bauteilgruppe aus einer Kulisse mit Kulissennuten und einer Kulissenplatte als auch eine zweite Bauteilgruppe aus Kulissensteine aufweist. Durch eine derartige Kulissenanordnung ist die verlagerbare Lagerstelle sicher und einfach geführt.

In einer bevorzugten Ausführungsvariante ist die Kulissenanordnung zumindest teilweise ein Bestandteil der Verstellbrücke. Vorzugsweise sind die Kulissennuten ummittelbar in der Verstellbrücke eingelassen, wodurch die Kulissenanordnung besonders kompakt und durch die Kulissennuten als Materialaussparungen leicht baut. Innerhalb der Kulissennuten sind dann die Kulissensteine platziert, wobei die Kulissensteine einerseits mittels geeigneter Einrichtungen die Rollen, welche beidseitig mit dem Reibring korrespondieren, halten. Andererseits sind die Kulissensteine mit der Kulissenplatte verbunden, an welcher wiederum ein Ringfolger befestigt sein kann. Durch die gewählte Kulissenanordnung ist der Ringfolger über die Kulissenplatte und den Kulissensteinen in bzw. an den Kulissennuten geführt und gleichzeitig an der Verstellbrücke axial verlagerbar gelagert. Hierdurch kann der Ringfolger zu einem axial entlang der axialen Führungsachse bewegt werden. Zum anderen ist der Ringfolger zusätzlich quer zu der Führungsachse bewegbar in den Kulissennuten geführt.

Da insbesondere mittels der vorliegenden Kulissenanordnung eine verlagerbare Lagerstelle des Reibringes in einem Reibringgetriebe konstruktiv einfach realisiert ist, sind alle Merkmale, die im Zusammenhang mit der Kulissenanordnung stehen, auch unabhängig von den übrigen Merkmalen der Erfindung vorteilhaft.

Aber auch die verlagerbare Lagerstelle, welche ohne die beschriebene Kulissenanordnung auskommt, an welcher der Reibring gelagert ist, lagert allein schon für sich einen Reibring vorteilhaft an einer Verstellbrücke und ist deshalb ebenfalls ohne die übrigen Merkmalen der Erfindung vorteilhaft.

Darüber hinaus kann bei einem Reibringgetriebe mit zwei voneinander um einen Spalt beabstandeten Wälzkörpern, die auf axialen Wälzkörperachsen umlaufend über einen Reibring miteinander korrespondieren, der Reibring in einer axial frei verlagerbaren Verstellbrücke um einen Verstellweg axial entlang dem Spalt verlagerbar angeordnet sein, wobei Mittel zum Auslenken einer verlagerbaren Lagerstelle, mit welchen die verlagerbare Lagerstelle von einer Null-Achse aus einer Null-Position ausgelenkt wird.

Durch die Auslenkmittel für die verlagerbare Lagerstelle ist es möglich, einen Betriebszustand des Reibringgetriebes vorzuwählen, so dass der Reibring des Reibringgetriebes inklusiv der Verstellbrücke der Auslenkung des Auslenkmittels folgt, bis die verlagerbare Lagerstelle wieder in eine Null-Position auf der Null-Achse angelangt ist. Somit folgt der Reibring nicht einer zwangsgeführten Verstellbrücke, sondern die Verstellbrücke folgt dem Reibring. Hierdurch ist ein selbstverfahrendes Verstellsystem geschaffen, welches insbesondere bei einer Störung selbständig in eine Notlaufposition verfährt. Somit sind vorteilhafter Weise Notlaufeigenschaften des Reibringgetriebes vorgegeben, so dass die Zuverlässigkeit des Reibringgetriebes weiter gesteigert ist.

Um eine verlagerbare Lagerstelle von einer Null-Achse aus einer Null-Position auslenken zu können, ist es vorteilhaft, wenn in etwa quer zur Null-Achse die Kulissensteine in Kulissennuten verschiebbar angeordnet sind. Durch die Kulissensteine in den Kulissennuten ist gewährleistet, dass die verlagerbare Lagerstelle fest aber gleichzeitig auch auslenkbar an der Verstellbrücke angeordnet ist. Es versteht sich, dass die verlagerbare Lagerstelle auch mit anderen Einrichtungen derart an der Verstellbrücke befestigt werden kann, dass die verlagerbare Lagerstelle von einer Null-Achse aus einer Null-Position auslenkbar ist.

In diesem Zusammenhang ist es vorteilhaft, wenn die Mittel zum Auslenken einen Stellhebel aufweisen. Der Stellhebel ist vorzugsweise der Gestalt, dass sich mit ihm der Ringfolger in verschiedene Positionen, welche neben der Null-Achse liegen, gebracht werden kann. Hierzu ist der Ringfolger gegenüber dem Stellhebel relativ verlagerbar.

Um ein Auslenken des Ringfolgers aus einer Nullposition der Null-Achse mittels des Stellhebels zu bewirken, ist es vorteilhaft, wenn der Stellhebel exzentrisch zur Null-Achse gelagert ist. Mittels des derart exzentrisch gelagerten Stellhebels kann die verlagerbare Lagerstelle konstruktiv besonders einfach an einer Null-Achse ausgelenkt werden.

Im Zusammenhang mit der Verwendung eines Stellhebels ist es vorteilhaft, wenn eine Null-Position in einem Schnittpunkt der Null-Achse und einer Längsachse des Stellhebels liegt.

Der Reibring bzw. die Verstellbrücke können konstruktiv einfach mit den Auslenkmittel kommunizieren, wenn die Auslenkmittel eine Aufnahme für einen Ringfolger aufweisen. Der Ringfolger ist im vorliegenden Sinne ein Bauteil der verlagerbaren Lagerstelle und vorzugsweise an einer Kulissenplatte befestigt, so dass eine Auslenkung eines Auslenkmittels, wie beispielsweise eines Stellhebels, unmittelbar auf den Ringfolger übertragen werden kann.

Es ist vorteilhaft, wenn die Ringfolgeraufnahme eine Führungsnut aufweist. In der Führungsnut kann der Ringfolger problemlos hin und her wandern. Der Ringfolger ist somit gegenüber den Auslenkmittel relativ bewegbar angeordnet.

Eine Ausführungsvariante sieht hierbei vor, dass die Führungsnut geradlinig ausgestaltet ist. Aber auch gekrümmte oder sonstig geformte Führungsnuten können zum Einsatz kommen.

Steht die verlagerbare Lagerstelle im Zusammenhang mit einer Kulissenanordnung, ist es vorteilhaft, wenn der Ringfolger an der Kulissenplatte angeordnet ist. Der Ringfolger ist hierbei in der Lage mit samt der Kulissenplatte und den Kulissensteinen in den Kulissennuten quer zur Null-Achse verlagert zu werden.

Vorteilhafter Weise sind die Auslenkmittel an einem Gehäuse des Reibringgetriebes gelagert und somit ortfest befestigt.

Damit das Reibringgetriebe insgesamt relativ kompakt baut, ist es vorteilhaft, wenn die Null-Achse im Wesentlichen parallel zu dem Spalt der axialen Führungseinrichtung verläuft.

Darüber hinaus kann kumulativ bzw. alternativ bei einem Reibringgetriebe mit zwei voneinander um einen Spalt beabstandeten Wälzkörpern, die auf axialen Wälzkörperachsen umlaufend über einen Reibring miteinander korrespondieren, der Reibring in einer axial frei verlagerbaren Verstellbrücke um einen Verstellweg axial entlang dem Spalt verlagerbar angeordnet sein, wobei Mittel zum Einlenken einer verlagerbaren Lagerstelle vorgesehen sind, mit welchen die verlagerbare Lagerstelle, welche von einer Null-Achse aus einer ersten Null-Position ausgelenkt wurde, in eine weitere Null-Position einer Null-Achse eingelenkt wird.

Vorteilhafter Weise verlagert sich ein Reibring durch Einlenkmittel der verlagerbaren Lagerstelle selbständig in eine Null-Position und somit auch in eine Ruheposition des Reibringes, wenn eine entsprechende Sollposition erreicht ist.

Unter dem Begriff "Ruheposition" des Reibringes versteht man im Sinne der Erfindung eine Position, in welcher der Reibring zwar um seine Rotationsachse rotieren kann, jedoch keine translatorische Bewegung etwa in Richtung einer axialen Führungsachse durchgeführt.

Unter dem Begriff "Null-Achse" versteht man vorliegend eine Achse entlang der sich eine verlagerbare Lagerstelle in etwa translatorisch bewegen kann. Die verlagerbare Lagerstelle bewegt sich jedoch nur entlang der Null-Achse, wenn, wie vorstehend beschrieben, der Ringfolger aus einer Nullposition der Null-Achse ausgelenkt ist, und nur solange, bis der Ringfolger wieder in eine Null-Position der Null-Achse zurückgekehrt ist.

Eine bevorzugte Ausführungsvariante sieht vor, dass die Einlenkmittel der verlagerbaren Lagerstelle den Reibring aufweisen. Bei dieser gewählten Ausführungsvariante ist der Reibring das Einlenkmittel der verlagerbaren Lagerstelle. Bildet der Reibring selbst das Einlenkmittel, baut das Reibringgetriebe sehr kompakt, da weitere Einrichtungen zum Realisieren der Einlenkmittel nicht benötigt werden. Vorteilhafter Weise ist bei einer derartigen Ausführungsvariante die Störanfälligkeit des vorliegenden Reibringgetriebes weiter verringert, da auf zusätzliche Bauteile, an denen eine Störung auftreten könnte, verzichtet werden kann. Durch die erwähnten Vorteile, sind derartige Einlenkmittel auch unabhängig von den übrigen Merkmalen vorliegender Erfindung vorteilhaft.

Ebenfalls unabhängig von den übrigen Merkmalen kann bei einem Reibringgetriebe mit zwei voneinander um einen Spalt beabstandeten Wälzkörpern, die auf axialen Wälzkörperachsen umlaufend über einen Reibring miteinander korrespondieren, der Reibring in einer axial frei verlagerbaren Verstellbrücke um einen Verstellweg axial entlang dem Spalt verlagerbar angeordnet sein, der Reibring entlang des Spaltes auf Grund der Rotation des Reibrings und der Wälzkörper in Abhängigkeit von einem Einstellwinkel bezüglich des Spaltes verlagerbar sein und sich das Reibringgetriebe dadurch auszeichnen, dass die Verstellbrücke, gegebenenfalls über einen Käfig, mittels eines Linearantriebs mit wenigstens einem Hubmagneten zur Vorgabe des Anstellwinkels ansteuerbar ist.

Mittels der Hubmagnete als Linearantrieb lässt sich die Anzahl der zum Ansteuern benötigten Getriebeglieder unter Berücksichtigung einer ausreichenden Übersetzung zwischen einem Verstellbrückenantrieb und der Verstellbrücke minimieren, was die Genauigkeit der Ansteuerung durch eine Reduktion des möglichen Spiels erhöht. Darüber hinaus hat die Verwendung von Hubmagneten den Vorteil, dass diese äußerst verlustarm und an sich mit wenig Spiel arbeiten.

Für eine besonders exakte Einstellung des Käfigs sieht eine weitere Ausgestaltung vor, dass das Reibringgetriebe einen Linearantrieb mit einer Verstellachse aufweist, welche parallel zu der axialen Führungseinrichtung und/oder zu einer Fläche, die von zwei Wälzkörperachsen gebildet ist, verläuft.

Damit der Verstellbrückenantrieb auf Basis von Hubmagneten besonders einfach gestaltet ist, ist es vorteilhaft, wenn das Reibringgetriebe einen Linearantrieb mit einer Verstellachse aufweist, welche parallel zu der axialen Führungseinrichtung und/oder zu einer Fläche, die von zwei Wälzkörperachsen gebildet ist, verläuft.

Die Betriebssicherheit des Reibringgetriebes wird weiter erhöht, wenn der Linearantrieb mehr als einen Linearantriebsmotor aufweist. Mit mehr als einem Linearantriebsmotor ist ein besonders sicherer Antrieb bereitgestellt, so dass der Anstellwinkel des Reibringes selbst dann noch zuverlässig eingestellt werden kann, wenn ein Linearantriebsmotor ausfällt.

Es werden vorliegend vorzugsweise zwei entgegengerichtet arbeitende Hubmagneten verwendet, so dass sichergestellt ist, dass auch alle denkbaren und notwendigen Käfigpositionen gezielt angesteuert werden können.

Um insbesondere kleinste Veränderungen des Anstellwinkels vorteilhaft vornehmen zu können, ist vorgeschlagen, dass der Linearantrieb eine Puls-Pause-Ansteuerung aufweist. Durch die Länge der Pulse beziehungsweise der Puls-Pause-Ansteuerung sowie durch die Frequenz lässt sich eine gewünschte Auslenkung beziehungsweise Reibringeinstellung besonders einfach realisieren.

Insbesondere Trägheitseffekte und Gegenkräfte durch Federn oder andere Magnete beziehungsweise Antriebe können zusätzlich entsprechend genutzt werden, um eine gewünschte Auslenkung des Reibringes realisieren zu können.

Kumulativ oder alternativ kann unabhängig von den übrigen Merkmalen bei einem Reibringgetriebe mit zwei voneinander um einen Spalt beanstandeten Wälzkörpern, die im axiale Wälzkörperachsen umlaufend über einen Reibring miteinander korrespondieren, der Reibring in einer axial frei verlagerbaren Verstellbrücke um einen Verstellweg axial entlang dem Spalt verlagerbar angeordnet sein, wobei an wenigstens einem Ende des Verstellwegs eine Verstellwegbegrenzung für die axial frei verlagerbare Verstellbrücke angeordnet ist.

Mittels der vorgeschlagenen Verstellwegbegrenzung ist eine Möglichkeit geschaffen, die axial frei verlagerbare Verstellbrücke hinsichtlich Ihres Verstellweges derart einzugrenzen, dass sie selbst bei einer Fehlfunktion zerstörungsfrei in einer vorgegebenen Position verstellt wird. Es versteht sich, dass eine derartige Verstellwegbegrenzung in vielfältiger Weise realisiert sein kann. Es ist beispielsweise möglich, die Verstellwegbegrenzung elektronisch zu realisieren, bei welcher Sensoren die Position der axial frei verlagerbaren Verstellbrücke ermitteln beziehungsweise bestimmen, und die Verstellbrücke anhand der gewonnenen Daten entsprechend verlagert wird.

Eine bevorzugte Ausführungsvariante sieht eine mechanisch wirkende Verstellwegbegrenzung vor, da diese hinsichtlich vorliegender Erfindung störungsunanfälliger ausgebildet werden kann.

Insbesondere um die Verstellwegbegrenzung hinsichtlich unterschiedlicher Umlaufrichtungen des Reibringes einstellen zu können, ist es vorteilhaft, wenn die Verstellwegbegrenzung einen verstellbaren Endanschlag aufweist. Je nach Umlaufsinn des Reibringes kann der verstellbare Endanschlag in eine dafür günstige Position gebracht werden. Auch ansonsten kann durch den verstellbaren Endanschlag die Position des Reibringen in den engen grenzen eines verstellbaren Anschlages angepasst werden, so dass beispielsweise Anfahrvorgänge für den Motor erleichtert werden können, auch wenn an sich das Getriebe ausgefallen ist.

Um möglichst wenig Massen hinsichtlich des verstellbaren Endanschlags bewegen zu müssen, ist es vorteilhaft, wenn der verstellbare Endanschlag einen verlagerbaren Endanschlagsbolzen aufweist, der dann lediglich bewegt werden braucht.

Je nach Ausführungsform ist es vorteilhaft, wenn der verlagerbare Endanschlagsbolzen axial bewegbar zur axialen Führungseinrichtung angeordnet ist. Durch diese axiale Verlagerbarkeit hinsichtlich der axialen Führungseinrichtung ist es auch möglich, den Verstellweg zu verkürzen oder zu verlängern, je nachdem welche Einstellung erforderlich ist.

Insbesondere wenn der verstellbare Endanschlag einen richtungsabhängigen Freilauf aufweist, der in Abhängigkeit der Drehrichtung des Reibringes den Endanschlagsbolzen verlagert, ist es vorteilhaft, wenn der verlagerbare Endanschlagsbolzen axial bewegbar zur axialen Führungseinrichtung am verstellbaren Endanschlag angeordnet ist.

Sollte vorgesehen sein, dass der verstellbare Endanschlag einen derartigen Freilauf nicht aufweist, ist die Verstellung des Endanschlages beziehungsweise die Verlagerung des Endanschlagsbolzens konstruktiv einfach dadurch erzielt, dass der verlagerbare Endanschlag einen Drehmagneten aufweist. Der Drehmagnet kann vorliegend derart mit dem verlagerbaren Endanschlagsbolzen verbunden sein, dass der verlagerbare Endanschlagsbolzen axial bewegbar zur axialen Führungseinrichtung angeordnet ist.

Eine axiale Bewegbarkeit des verlagerbaren Endanschlagsbolzens ist baulich besonders einfach gewährleistet, wenn zwischen dem verlagerbaren Endanschlagsbolzen und einem Drehmagneten eine Anstellscheibe zum Verstellen des verlagerbaren Endanschlagsbolzens angeordnet ist. Beispielsweise ist zum Verstellen des verlagerbaren Endanschlagsbolzens die Anstellscheibe im Kontaktbereich zum verlagerbaren Endanschlagsbolzen hinsichtlich Ihres Umfangs unterschiedlich dick, so dass bei einer Rotation der Anstellscheibe je nach Stellung der Anstellscheibe in diesem Kontaktbereich unterschiedlich dicke Bereiche der Anstellscheibe positioniert sind. Die Anstellscheibe weist somit in einer ersten Anstellposition eine erste Dicke auf, so dass der verlagerbare Endanschlagsbolzen in Bezug auf den Verstellweg in einer ersten Position gebracht ist. Demgegenüber weist die Anstellscheibe, in eine weitere Anstellposition gedreht, im Kontaktbereich zum Endanschlagsbolzen eine von der ersten Dicke verschiedene zweite Dicke auf, so dass der Endanschlagsbolzen in Bezug auf den Verstellweg in einer zweiten Position eingestellt ist.

Auch kann unabhängig von den übrigen Merkmalen der Erfindung bei einem Reibringgetriebe mit zwei voneinander um einen Spalt beabstandeten Wälzkörpern, die auf axialen Wälzkörperachsen umlaufend über einen Reibring miteinander korrespondieren, eine Anpresseinrichtung zum Einstellen einer Anpresskraft zwischen den Wälzkörpern eine Druckreguliereinrichtung mit statischen und dynamischen Druckregulierungsmitteln umfassen, wobei die dynamischen Druckreguliermittel relativ zu den statischen Druckreguliermitteln verlagerbar an einem der Wälzkörper gelagert sind.

Reibringgetriebe, bei welchen eine Anpresseinrichtung die Anpresskraft zwischen Wälzkörpern bzw. zwischen Wälzkörpern und einem Reibring insbesondere mittels einer hydraulisch arbeitenden Druckreguliereinrichtung einstellen, sind bereits aus dem Stand der Technik bekannt. So ist beispielsweise in der WO 2004/06 1336 A1 eine hydraulische Anpresseinrichtung zum Verspannen zweier Reibkegel, die über einen verstellbaren Reibring miteinander wechselwirken, beschrieben. In einem dieser Reibkegel, dem Ausgangskegel, ist die Anpresseinrichtung angeordnet, die mittels eines Hydraulikdrucks über eine Hydraulikleitung angesteuert wird. Je nachdem mit wie viel Druck die Anpresseinrichtung beaufschlagt wird, stellt sich eine entsprechende Anpresskraft zwischen den Reibkegeln bzw. zwischen den Reibkegeln und dem Reibring ein. Mittels einer derartig platzierten und wirkenden Anpresseinrichtung können unterschiedliche Reibverhältnisse zwischen den Reibkegeln und dem Reibring baulich einfach und damit vorteilhaft eingestellt werden.

Mittels der vorliegenden Anpresseinrichtung mit einer Druckreguliereinrichtung, bei welcher dynamische Druckreguliermittel innerhalb eines Wälzkörpers, also innerhalb eines Reibkegels, angeordnet sind, ist es möglich, bekannte Druckreguliereinrichtungen und damit bekannte Anpresseinrichtungen konstruktiv nochmals zu optimieren. Insbesondere auf Grund der Tatsache, dass die dynamischen Druckreguliermittel der Druckreguliereinrichtung in einem der Wälzkörper verlagerbar gelagert ist, baut die Anpresseinrichtung besonders kompakt.

In diesem Zusammenhang bezeichnet der Begriff "dynamische Druckreguliermittel" Baugruppen, die bewegt werden, um entsprechend Druck aufbauen zu können, während der Begriff "statische Druckreguliermittel" Baugruppen bezeichnet, die ortsfest sind und gegen die sich die dynamischen Druckreguliermittel abstützen, um den Druck aufzubauen.

Eine bevorzugte Ausführungsvariante sieht vor, dass die dynamischen Druckreguliermittel an einer Zusatzwelle eines Wälzkörpers gelagert sind, welche zumindest teilweise innerhalb des Wälzkörpers angeordnet ist. Oftmals ist in einer derartigen Zusatzwelle eine Öldruckleitung zum Ansteuern eines Öldrucks in der Anpresseinrichtung an- bzw. eingearbeitet, so dass die dynamischen Druckreguliermittel über diese Öldruckleitung den Öldruck der Anpresseinrichtung vor Ort unmittelbar an oder in der Öldruckleitung einstellen können. Somit kann auf eine externe Druckreguliereinrichtung, welche zusätzlichen Bauraum an einem Reibringgetriebe einnimmt, verzichtet werden. Durch die erfinderische Druckreguliereinrichtung ist ein Reibringgetriebe auch unabhängig von den übrigen Merkmalen der Erfindung vorteilhaft weiter gebildet.

Im Gegensatz zu der vorstehend beschriebenen Lagerung der dynamischen Druckreguliermittel, ist es vorteilhaft, wenn die statischen Druckreguliermittel an einem weiteren, den Wälzkörpern fremden Bauteil des Reibringgetriebes angeordnet sind. Beispielsweise sind die statischen Druckreguliermittel ortsfest an dem Reibringgetriebegehäuse befestigt, so dass die statischen Druckreguliermittel gehäusefest in dem Reibringgetriebe befestigt sind und sich die dynamischen Druckreguliermittel relativ zu den statischen Druckreguliermitteln verlagern können.

Baulich besonders einfach können die dynamischen Druckreguliermittel verlagerbar in einen der Wälzkörper bzw. in einer Zusatzwelle eines der Wälzkörper angeordnet werden, wenn die dynamischen Druckreguliermittel einen mit einem Wälzkörper umlaufenden Kolben aufweisen, der von den statischen Druckreguliermitteln anregbar ist.

Eine bevorzugte Ausführungsvariante sieht vor, dass die statischen Druckreguliermittel einen Hubmagneten aufweisen. Mittels des Hubmagnets ist es auf geringstem Raum möglich, den mit dem Wälzkörper umlaufenden Kolben besonders einfach zu verlagern und einen Druck aufzubauen.

Besonders vorteilhaft und betriebssicher kann ein derart umlaufender Kolben von dem Hubmagneten angeregt werden, wenn der umlaufende Kolben einen magnetischen Zapfen aufweist, der innerhalb des Hubmagnetes angeordnet ist. Hierbei läuft der Zapfen vorzugsweise berührungsfrei innerhalb des Hubmagneten um und wird durch entsprechende elektromagnetische Impulse innerhalb des Hubmagnets bewegt, so dass sich mittels des umlaufenden Kolbens unterschiedliche Druckverhältnisse hinsichtlich der Anpresseinrichtung einstellen lassen. Der umlaufende Kolben wird beispielsweise entlang einer Wälzkörperachse, um welche sich der die Anpresseinrichtung aufweisende Wälzköper rotiert, axial bewegt.

Auch kann unabhängig von den übrigen Merkmalen vorliegender Erfindung bei einem Reibringgetriebe mit zwei voneinander um einen Spalt beabstandeten Wälzkörpern, die auf axialen Wälzkörperachsen umlaufend über einen Reibring miteinander korrespondieren, der Reibring in einer axial frei verlagerbaren Verstellbrücke um einen Verstellweg axial entlang dem Spalt verlagerbar angeordnet sein und der Reibring eine geteilte Lauffläche aufweisen.

Dadurch dass die Lauffläche des Reibringes geteilt ist, lässt sich die Stabilität des Reibringes gegenüber Kippmomenten bezüglich des Spaltes zwischen den beiden Wälzkörpern verbessern, da durch die geteilte Lauffläche bei gleicher Flächenpressung größere Hebel realisiert werden können. Hierbei versteht es sich, dass die Lauffläche unabhängig von dem Spalt zusätzlich noch Rillungen aufweisen kann, die einer besseren Fluidverteilung sowie einer Anpassung der Flächenpressung dienen.

Weiter ist es vorteilhaft, wenn die geteilte Lauffläche einen Spalt, welcher die Lauffläche in eine erste Laufflächenhälfte und in eine weitere Laufflächenhälfte teilt, mit einer Spaltbreite aufweist, die mindestens 10 % der Breite des Reibringes, vorzugsweise mindestens 10 % der Breite der effektiven Lauffläche, beträgt.

Vorliegend ist der Begriff "Spalt" nicht mit dem Begriff "Rille" bzw. "Rillungen" gleichzusetzen, da die Lauffläche im Bereich der Rillungen eine genügend große Flächenpressung gegenüber Wälzkörpern aufweist, um entsprechend hohe Drehmomente zwischen dem Reibring und den Wälzkörpern zu übertragen. Bei einem Bereich der Lauffläche, der einen Spalt umfasst, ist dies jedoch nicht möglich, da der Spalt eine derartige Geometrie aufweist, dass im Bereich des Spaltes keine Drehmoment zwischen der Lauffläche des Reibringes und eines Wälzkörpers übertragen werden können. Ein Spalt ist also, in Abhängigkeit von den verwendeten Traktionsfluiden in der Regel breiter bzw. tiefer als eine Rillung oder Rille.

Mit dem Begriff "effektive Lauffläche" ist im Sinne der Erfindung diejenige Lauffläche des Reibringes beschrieben, mit welcher der Reibring tatsächlich mit einem der Wälzkörper in Kontakt steht bzw. Drehmomente überträgt. Die Breite der effektiven Lauffläche ist demnach die Differenz zwischen der Breite des Reibringes minus der erfindungsgemäßen Spaltbreite und Fasen am Umfangsrand des Reibringes.

Auch können bei einem Reibringgetriebe mit zwei voneinander um einen Spalt beabstandeten Wälzkörpern, die auf axiale Wälzkörperachsen umlaufend über einen Reibring miteinander korrespondieren, der Reibring in einer axial frei verlagerbaren Verstellbrücke um einen Verstellweg axial entlang dem Spalt verlagerbar angeordnet und Wälzkörper hauptkrafteinleitungsfrei in einem Reibringgetriebegehäuse angeordnet sein.

Es wurde gefunden, dass es vorteilhaft ist, wenn die Wälzkörper derart in einem Reibringgetriebegehäuse angeordnet sind, dass im Wesentlichen primäre Kräfte, die hauptsächlich beim gegeneinander Verspannen zweier Wälzkörper axial oder radial der Wälzkörperachsen auftreten, möglichst nicht in das Reibringgetriebegehäuse des vorliegenden Reibringgetriebes eingeleitet werden, sondern vorher bereits aufgenommen werden. Wird das Einleiten solcher Primärkräfte in das Reibringgehäuse verhindert, sind die Wälzkörper im Sinne der Erfindung hauptkrafteinleitungsfrei in dem Reibringgetriebegehäuse gelagert, während die Hauptkräfte beispielsweise von einem separaten Rahmen aufgenommen werden können.

Das Reibringgetriebegehäuse braucht in einem derartigen Fall lediglich Sekundärkräfte aufzunehmen, so dass es wesentlich filigraner und damit auch leichter gebaut werden kann. Sekundärkräfte wären beispielsweise Kräfte, die auf Grund von Lastwechselmomenten während des Betriebs auftreten können.

Eine diesbezüglich bevorzugte Ausführungsvariante sieht vor, zumindest eine Seite der Wälzkörper miteinander verspannt in einer von einem Reibringgetriebegehäuse autarken Wälzkörperlagereinrichtung an dem Reibringgetriebegehäuse anzuordnen.

Unter dem Begriff "autarke Wälzkörperlagereinrichtung" versteht man im Sinne der Erfindung jede Lagereinrichtung, mit welcher Wälzkörper miteinander unabhängig von einem Reibringgetriebegehäuse zumindest bei Stillstand des Getriebes verspannt und zueinander fixiert werden können.

Es hat sich gezeigt, dass es besonders vorteilhaft ist, wenn die Wälzkörperlagereinrichtung einen Stahlrahmen aufweist. Insbesondere mittels eines Stahlrahmens können Primärkräfte besonders gut aufgenommen werden, da Stahl eine hohe Festigkeit aufweist. Stahlrahmen können insbesondere als einer Blechkonstruktion kostengünstig derart hergestellt werden, dass die Wälzkörperlagereinrichtung neben einer hohen Festigkeit auch eine hohe Steifigkeit aufweist.

Eine bevorzugte Ausführungsvariante sieht vor, dass die Wälzkörper beidseits miteinander verspannt in autarken Wälzkörperlagereinrichtungen gelagert sind. Werden Wälzkörper auf beiden Seiten miteinander verspannt in autarken Wälzkörperlagereinrichtungen, wie beispielsweise Stahlrahmen, gelagert, ist das Entlastungspotenzial hinsichtlich Kräfte, die ansonsten in das Reibringgetriebegehäuse eingeleitet würden, besonders groß.

Zur weiteren Aussteifung der Wälzkörperlagereinrichtungen ist es vorteilhaft, wenn die autarken Wälzkörperlagereinrichtungen, insbesondere mittels eines Stahlgestells, miteinander verbunden sind. Hierdurch kann das eigentliche Gehäuse weiter entlastet werden. Natürlich eignen sich auch andere Materialien als Stahl, um ein derartiges Gestell zu realisieren.

Um die Wälzkörper ortsfest gegenüber weiteren Getriebegliedern des Reibringgetriebes anordnen zu können, ist es vorteilhaft, wenn die autarken Wälzkörperlagereinrichtungen in dem Reibringgetriebegehäuse angeordnet sind.

Durch eine derartige Anordnung kann insbesondere das Gehäuse wesentlich leichter und auch in seiner Geometrie filigraner ausgebildet werden, so dass diesbezüglich der Bauraum minimiert werden kann. Gleichwohl können durch die Wälzkörperlagereinrichtung eine ausreichende Stabilität und eine hohe Anpresskraft zwischen den wälzenden Baugruppen gewährleistet werden.

Eine weitere vorteilhafte Ausführungsvariante sieht ein Reibringgetriebe mit einem Differenzialgetriebe vor, welches dem Reibringgetriebe zugeschaltet und ebenfalls in der Wälzkörperlagereinrichtung gelagert ist. Ähnlich wie hinsichtlich zweier Wälzkörper, die mittels einer autarken Wälzkörperlagereinrichtung miteinander sehr steif verbunden werden können, ist es möglich, zusätzlich ein Differenzialgetriebe bzw. Getriebeglieder davon gegenüber Wälzkörpern in einer Wälzkörperlagereinrichtung, wie beispielsweise dem vorstehend erwähnten Stahlrahmen, zu lagern.

Die Getriebeglieder sind dann insbesondere auch hinsichtlich Temperaturschwankungen besonders vorteilhaft gelagert, da der Stahlrahmen wesentlich günstigerere Ausdehnungskoeffizienten aufweist als beispielsweise ein Gehäuse aus einem Aluminiumguss. Insbesondere können insgesamt die Eigenschaften des Wälzkörperlagereinrichtung geeignet an die Eigenschaften der zu lagernden Getriebeglieder angepasst werden, ohne auf das Gehäuse Rücksicht nehmen zu müssen, welches dann besonders leicht und mit einer komplexen Form ausgebildet werden kann.

Da die Lagerung von Wälzkörpern in autarken Wälzkörperlagereinrichtungen, wie beispielsweise in einem Stahlrahmen, ein Reibringgetriebe besonders vorteilhaft weiterentwickeln, sind die Merkmale hinsichtlich der autarken Wälzkörperlagereinrichtung auch unabhängig von den übrigen Merkmalen der vorliegenden Erfindung vorteilhaft.

Darüber hinaus ist es vorteilhaft, wenn die Wälzkörper des Reibringgetriebes, insbesondere die Reibkegel, der Reibring und/oder vorgesehene Wälzkörperwellen, wie etwa Zusatzwellen eines Reibkegels, aus Stahl bzw. aus demselben Material wie die Wälzkörperlagereinrichtung, gefertigt sind. Das Material Stahl hat den Vorteil, dass es eine sehr hohe Festigkeit und Steifigkeit aufweist. Daraus hergestellte Bauteile beziehungsweise Getriebeglieder des Reibringgetriebes sind dann besonders haltbar und widerstandsfähig, wodurch die Betriebssicherheit des Reibringsgetriebes weiter erhöht ist. Deshalb sind die Merkmale hinsichtlich der aus Stahl gefertigten Bauteile beziehungsweise Getriebeglieder auch unabhängig von den übrigen Merkmalen der Erfindung vorteilhaft.

Damit ein Drehmoment, welches mit dem Reibringgetriebe wechselwirkt, nicht über stillstehende Zahlräder übertragen werden muss, wie dieses bei Anordnungen aus dem Stand der Technik der Fall ist, ist auch unabhängig von den übrigen Merkmalen vorliegender Erfindung ein Reibringgetriebe mit zwei von einander um einen Spalt beabstandeten Wälzkörpern, die auf axiale Wälzkörper umlaufend über einen Reibring miteinander korrespondieren, vorteilhaft, bei welchem der Reibring in einer axialen frei verlagerbaren Verstellbrücke um einen Verstellweg axial entlang dem Spalt verlagerbar angeordnet ist, wobei an dem Reibringgetriebe ein Doppelplanetengetriebe angeordnet ist.

Darüber hinaus ist mit dem Doppelplantetengetriebe ein Rückwärtsgang bei vorliegendem Reibringgetriebe konstruktiv einfach realisiert. Der Rückwärtsgang kann bei kleinem Bauraum und einer minimalen Anzahl an Getriebegliedern im Zusammenspiel mit dem durch das Reibringgetriebe vorgegebenen Drehrichtungen realisiert werden.

Ebenfalls unabhängig von den übrigen Merkmalen der Erfindung ist ein Reibringgetriebe mit zwei voneinander um einen Spalt beabstandeten Wälzkörpern, die auf axiale Wälzkörperachsen umlaufend über einen Reibring miteinander korrespondieren, vorteilhaft, bei welchem der Reibring in einer axial frei verlagerbaren Verstellbrücke um einen Verstellweg axial entlang dem Spalt verlagerbar angeordnet ist, und ein Anlenker der Verstellbrücke oder eines Führungskäfigs der Verstellbrücke einerseits mit einem Antrieb, wie beispielsweise mit einem Exzentermotor, wirkverbunden und andererseits an einem Anlenkerdrehpunkt der Verstellbrücke oder des Führungskäfigs gelagert ist, und der Anlenker eine Überlastsicherung aufweist.

Auf diese Weise kann der Antrieb insbesondere bei einer Fehlfunktion, wie einer Überlast, an dem Anlenker von der Verstellbrücke beziehungsweise von dem Führungskäfig getrennt werden, sodass die Verstellbrücke beziehungsweise der Führungskäfig frei einer anderweitig vorgegebenen Bewegung folgen kann. Darüber hinaus kann eine durch Überlast getrennte Überlastsicherung bei geeigneter Ausgestaltung im Bedarfsfall unmittelbar nach Beheben des Problems schnell und unkompliziert wieder eingerastet werden, wenn sich die Überlastsicherung am Anlenker befindet.

Die Überlastsicherung ist gegen äußere Einflüsse besonders gut geschützt, wenn die Überlastsicherung innerhalb des Anlenkers angeordnet ist.

Eine in diesem Zusammenhang baulich besonders einfache Ausführungsform sieht vor, dass der Anlenker ein Rohr aufweist, in welchem die Überlastsicherung angeordnet ist. Es versteht sich, dass eine derartige Überlastsicherung andererseits konstruktiv vielfältig realisiert sein kann.

Beispielsweise sieht eine bevorzugte Ausführungsvariante vor, dass die Überlastsicherung zerstörungsfreie Überlastsicherungsmittel aufweist. Dies hat den Vorteil, dass zumindest bei einer geringen Überlast die Überlastsicherung nicht direkt zerstört wird, sondern die Überlastsicherung zumindest geringe Überlasten eigenständig kompensiert, sodass nach der Überlast ein Betrieb des Getriebes hinsichtlich der axial verlagerbaren Verstellbrücke unbeeinflusst fortgeführt werden kann.

Um zerstörungsfreie Überlastsicherungsmittel bereit zu stellen, ist es vorteilhaft, wenn die Überlastsicherung wenigstens ein Druckelement und/oder wenigstens ein Zugelement aufweist.

Wie die Bezeichnung "Druckelement" bereits darlegt, ist das Druckelement der Überlastsicherung dafür vorgesehen, Druckspitzen, welche auf die Verstellbrücke, und damit auch auf den Anlenker wirken, zumindest in einem unkritischen Bereich zu kompensieren.

Dementsprechend kompensiert das "Zugelement" unkritische Zugkräfte, die zwischen der Verstellbrücke und dem Antrieb auftreten.

Die Überlastsicherung ist Platz sparend realisiert, wenn das Druckelement und das Zugelement relativ zueinander verlagerbar angeordnet sind. Vorzugsweise sind das Druckelement und das Zugelement zumindest teilweise ineinander verschachtelt und dabei relativ zueinander verlagerbar, sodass die Überlastsicherung sehr kompakt baut.

Zum Ausgleichen von Druck- beziehungsweise Zugkräften ist es ebenfalls vorteilhaft, sowohl das Druckelement als auch das Zugelement gegenüber dem Anlenker verlagerbar gelagert sind.

Eine vorteilhafte Vorspannung erhält die Überlastsicherung, wenn das Druckelement und/oder das Zugelement jeweils mit einem Fehlerelement vorgespannt sind. Mittels der Vorspannung gelingt es, dass weder das Druckelement noch das Zugelement an einem starren Anschlag anliegen, sondern dass sie im Wesentlichen entlang einer Anlenkerachse in beide Richtungen verlagert werden können.

Im Zusammenhang mit vorliegender Erfindung sind das Druckelement und/oder das Zugelement dynamisch wirkende Überlastsicherungsmittel. Dynamisch wirken die Überlastsicherungsmittel deshalb, weil durch ihr Verlagern zerstörungsfreie Überlastsicherungsmittel der Überlastsicherung realisiert sind, wodurch zumindest geringe, unkritische Überlastspitzen zerstörungsfrei kompensiert werden können.

Eine konstruktiv klein bauende Ausführungsvariante sieht vor, dass das Zugelement an einem Antrieb der Verstellbrücke oder des Führungskäfigs der Verstellbrücke gelagert ist. Dadurch, dass das Zugelement der Überlastsicherung unmittelbar an dem Antrieb gelagert ist, entfällt die Notwendigkeit weitere Bauteile zum Verbinden der Überlastsicherung mit der Verstellbrücke oder des Käfigs zu erreichen.

Kumulativ bzw. alternativ hierzu wird vorgeschlagen, dass das Druckelement an der Verstellbrücke oder an dem Führungskäfig der Verstellbrücke gelagert ist. Durch das Anordnen des Druckelements unmittelbar an der Verstellbrücke oder an dem Führungskäfig werden auch diesbezüglich weitere zusätzliche Bauteile überflüssig, sodass die Überlastsicherung mit möglichst wenigen Bauteilen realisiert ist und möglichst kompakt baut.

Es versteht sich, dass bei einer weiteren Ausführungsvariante das Zugelement unmittelbar an der Verstellbrücke und das Druckelement unmittelbar an dem Antrieb der Verstellbrücke befestigt sein können. Hierdurch bleiben die Funktionssicherheit und die Funktionsweise der Überlastsicherung unbeeinträchtigt.

Treten sehr hohe Überlasten auf, kann es unabhängig von den übrigen Merkmalen vorliegender Erfindung vorteilhaft sein, wenn die Überlastsicherung zerstörbare Überlastsicherungsmittel als Sollbruchstelle aufweist. Dies ist insbesondere dann vorteilhaft, wenn die Überlastkräfte derart in einen kritischen Bereich gelangen, dass sie durch die dynamisch wirkenden Überlastsicherungsmittel nicht mehr kompensiert werden können.

Im Gegensatz zu den dynamisch wirkenden Überlastsicherungsmittel, ist die Sollbruchstelle im Sinne der Erfindung ein statisch wirkendes Überlastsicherungsmittel. Dieses ist nach einem Auslösen zerstört, sodass es ausgewechselt werden muss, bevor die Überlastsicherung wieder funktionsfähig ist.

Des Weiteren kann sich unabhängig von den übrigen hier beschriebenen Merkmalen ein Reibringgetriebe mit zwei voneinander um einen Spalt beabstandeten Wälzkörpern, die auf axialen Wälzkörperachsen umlaufend über einen Reibring miteinander korrespondieren, vorgesehen sein, bei welchem der Reibring in einer axial frei verlagerbaren Verstellbrücke um einen Verstellweg axial entlang dem Spalt verlagerbar angeordnet ist, und welches sich durch eine Ausfallsicherung mit Mitteln zum Einstellen der Verstellbrücke oder eines Führungskäfigs der Verstellbrücke in einer Notlaufposition unabhängig von einem Primärantrieb der Verstellbrücke oder des Führungskäfigs auszeichnet.

Durch die Ausfallsicherung ist es möglich, das vorliegende Reibringgetriebe selbst dann noch zu betreiben, wenn der Primärantrieb der Verstellbrücke oder des Führungskäfigs ausfällt beziehungsweise nur noch gestört arbeitet. Somit ist ein eine Ausfallsicherung aufweisendes Reibringsgetriebe besonders betriebssicher gegenüber herkömmlichen Reibringgetrieben aus dem Stand der Technik.

Besonders vorteilhaft ist es, wenn die Ausfallsicherung einen Sekundärantrieb für die Verstellbrücke oder für den Führungskäfig darstellt. Durch die Ausfallsicherung als Sekundärantrieb erhält die Verstellbrücke beziehungsweise der Führungskäfig der Verstellbrücke einen redundanten Antrieb, wodurch die Betriebssicherheit des Reibringsgetriebes weiter erhöht ist.

Baulich besonders einfach und Platz sparend ist die Ausfallsicherung im Reibringgetriebe realisiert, wenn die Ausfallsicherung zwischen der Verstellbrücke und einem Primärantrieb der Verstellbrücke angeordnet ist.

Damit ein nicht ordnungsgemäß arbeitender Primärantrieb von der Verstellbrücke beziehungsweise von dem Führungskäfig entkoppelt werden und die Verstellbrücke oder der Führungskäfig anderweitig eingestellt werden kann, ist es vorteilhaft, wenn die Ausfallsicherung eine Sperr-/Entsperreinrichtung für einen Kraftfluss zwischen der Verstellbrücke und dem Primärantrieb aufweist.

Es versteht sich, dass entsprechende Einstellmittel der Verstellbrücke beziehungsweise des Führungskäfigs, die der vorstehend beschriebenen, anderweitigen Einstellung dienen, vielfältig realisiert werden können. Eine besonders einfache Ausführungsvariante sieht vor, dass die Einstellmittel eine Nockenscheibe und einen darauf wälzenden Nockenfolger aufweisen. Hierbei wird der Nockenfolger mittels eines Federelementes gegen die Nockenscheibe gedrückt. Mittels des Nockenfolger kann die Nockenscheibe eine Notlaufposition "eingerastet" werden. Durch geeignete Maßnahmen kann dann ohne weiteres realisiert werden, dass dieses Einrasten nur im Notfall erfolgt, indem beispielsweise der Nockenfolgen im normalen Betriebszustand daran gehindert wird einzurasten.

Vorteilhafter Weise ist beim Einrasten der Nockenfolger beispielsweise in einer Notlaufposition zwischen zwei Nocken der Nockenscheibe angeordnet. Dort verbleibt der Nockenfolger so lange und blockiert dadurch eine Rotation der Nockenscheibe, bis die Funktion des Primärantriebs wieder einwandfrei hergestellt ist.

Um den Kraftfluss zwischen einem Antrieb der Verstellbrücke und der Verstellbrücke beziehungsweise dem Führungskäfig der Verstellbrücke unterbrechen zu können, ist es vorteilhaft, wenn die Sperr-/Entsperreinrichtung zum Sperren eines Kraftflusses einen Ausrücker, wie etwa einen elektrisch angetriebenen Kolben, und zum Entsperren des Kraftflusses einen Einrücker, wie etwa ein Federelement, aufweist. Durch den Ausrücker kann darüber hinaus auch der Nockenfolger derart freigegeben werden, dass er in die Nockenscheibe einrasten kann.

Beispielsweise rückt der Ausrücker eine erste Kupplungsscheibe eine Notfallkupplung von der Nockenscheibe, welche eine zweite Kupplungsscheibe der Notfallkupplung darstellt, weg, sodass die beiden Kupplungsscheiben voneinander getrennt werden. Der Ausrücker verlagert hierbei die erste der Kupplungsscheiben derart von der Nockenscheibe weg, dass dieses den Nockenfolger nicht mehr blockiert, so dass die Nockenscheibe solange frei dreht, bis der darauf wälzende Nockenfolger zwischen zwei Nocken der Nockenscheibe einrastet und diese in der Notlaufposition fixiert.

Ist der Primärantrieb wieder hergestellt, kann der Ausrücker in seine Ursprungsposition zurückverfahren und die erste Kupplungsscheibe mittels des Federelements des Einrückers wieder in Richtung Nockenscheibe verlagert werden, bis die Nockenscheibe, also die zweite Kupplungsscheibe mit der ersten Kupplungsscheibe wieder ordnungsgemäß wechselwirkt.

Weitere Vorteile, Ziele und Eigenschaften vorliegender Erfindung werden anhand nachfolgender Erläuterung anliegender Zeichnung beschrieben, in welcher beispielhaft Reibringgetriebe sowie Bauteilgruppen davon dargestellt sind.

Es zeigt
- Figur 1: schematisch eine Aufsicht eines Käfigs mit einer Blattfeder als elastische Lagereinrichtung eines Reibringgetriebes,
- Figur 2: schematisch einen Querschnitt des Käfigs aus der Figur 1,
- Figur 3: schematisch eine Aufsicht eines weiteren Käfigs mit einem Gummielement als elastische Lagereinrichtung eines Reibringgetriebes,
- Figur 4: schematisch einen Querschnitt des weiteren Käfigs aus der Figur 3,
- Figur 5: schematisch eine Aufsicht eines Käfigs mit einem Verstellmotor als alternative elastische Lagereinrichtung eines Reibringgetriebes,
- Figur 6: schematisch einen Querschnitt des Käfigs aus der Figur 5,
- Figur 7: schematisch eine Ansicht der Verbindung zwischen dem Verstellmotor und einer axialen Führungsachse des Käfigs aus den Figuren 5 und 6,
- Figur 8: schematisch eine perspektivische Ansicht eines zur Ausführungsform nach den Figuren 5 bis 7 alternativen Käfigs eines Reibringgetriebes;
- Figur 9: eine schematische Aufsicht des Käfigs und der Verstellbrücke nach der Figur 8;
- Figur 10: eine Alternative zu dem Käfig nach der Figur 9;
- Figur 11: eine Alternative zu den Käfigen nach den Figuren 9 und 10;
- Figur 12: eine weitere Alternative zu den Käfigen nach den Figuren 9 bis 11;
- Figur 13: schematisch einen Querschnitt eines Reibringgetriebes, in welchem einer der vorstehend beschriebenen Käfige angeordnet sein kann, hinsichtlich der Schnittfläche "I - I" aus der Figur 14;
- Figur 14: schematisch eine Aufsicht des Reibringgetriebes nach der Figur 13;
- Figur 15: schematisch einen Längsschnitt durch einen Fahrzeugantrieb für einen Frontantrieb mit einem Reibringgetriebe;
- Figur 16: schematisch eine Darstellung einer Verstellbrücke hinsichtlich der Schnittfläche "IV-IV" des Reibringgetriebes aus der Figur 15;
- Figur 17: schematisch eine Einzelheit der Verstellbrücke aus der Figur 16 hinsichtlich der Schnittfläche "V - V";
- Figur 18: schematisch einen Längsschnitt durch einen Hinterradantrieb für ein Fahrzeug mit einem Reibringgetriebe;
- Figur 19: schematisch eine Aufsicht eines Käfigs mit einer Kulissenanordnung eines Reibringgetriebes;
- Figur 20: schematisch einen Längsschnitt durch den Käfig mit der Kulissenanordnung nach der Figur 19;
- Figur 21: schematisch eine Ansicht eines konkreten Ausführungsbeispiels eines Käfigs mit einer Kulissenanordnung nach Figuren 19 und 20 im Zusammenspiel mit Reibkegeln aus einer ersten Perspektive;
- Figur 22: schematisch eine Ansicht des konkreten Ausführungsbeispiels nach der Figur 21 ohne Reibkegel aus der ersten Perspektive;
- Figur 23: schematisch eine Ansicht des konkreten Ausführungsbeispiels mit Reibregel nach den Figuren 21 und 22 aus einer weiteren Perspektive;
- Figur 24: schematisch eine Ansicht des konkreten Ausführungsbeispiels nach der Figur 22 ohne Reibkegel aus der weiteren Perspektive;
- Figur 25: schematisch eine Aufsicht des konkreten Ausführungsbeispiels nach den Figuren 21 bis 24 mit Reibkegel aus einer weiteren Perspektive;
- Figur 26: schematisch eine Aufsicht des konkreten Ausführungsbeispiels nach der Figur 25 mit Reibkegel aus der weiteren Perspektive;
- Figur 27: schematisch eine Aufsicht des konkreten Ausführungsbeispiels nach den Figuren 21 bis 26 mit Reibkegel aus einer weiteren Perspektive;
- Figur 28: schematisch eine Aufsicht des konkreten Ausführungsbeispiels nach der Figur 27 ohne Reibkegel aus der weiteren Perspektive;
- Figur 29: schematisch eine Ansicht des konkreten Ausführungsbeispiels nach den Figuren 21 bis 28 mit Reibkegel aus einer weiteren Perspektive;
- Figur 30: schematisch das konkrete Ausführungsbeispiel aus der Figur 29 ohne Reibkegel,
- Figur 31: schematisch eine Aufsicht des konkreten Ausführungsbeispiels nach den Figuren 21 bis 3027 ohne Reibkegel aus der weiteren Perspektive;
- Figur 32: schematisch das konkrete Ausführungsbeispiel aus der Figur 31 Reibkegel aus der weiteren Perspektive;
- Figur 33: schematisch eine Aufsicht eines Käfigs mit einem Linearantrieb und einer hinsichtlich des Käfigs zentrisch angeordneten Käfigdrehachse;
- Figur 34: schematisch eine Aufsicht eines Käfigs mit einem Linearantrieb einer hinsichtlich des Käfigs außerhalb der Führungsachse des Käfigs angeordneten Drehachse;
- Figur 35: schematisch eine Aufsicht eines weiteren Käfigs mit einem Linearmotor und außerhalb des Käfigrundkörpers angeordnete Käfigdrehachse;
- Figur 36: schematisch eine perspektivische Ansicht eines Antriebs eines verstellbaren Endanschlags;
- Figur 37: schematisch einen Längsschnitt durch den Antrieb des verstellbaren Endanschlags aus der Figur 36 in einer ersten Position;
- Figur 38: schematisch ein Längsschnitt durch den Antrieb des verstellbaren Endanschlages aus der Figur 36 in einer zweiten Position;
- Figur 39: schematisch einen Längsschnitt durch eine Anordnung zweier miteinander korrespondierender Reibkegel;
- Figur 40: schematisch einen Querschnitt eines zweiflächigen Reibringes zwischen zwei Reibkegel;
- Figur 41: schematisch ein Reibringgetriebe mit einem Reibringgetriebegehäuse aus Aluminium und autarken Reibkegellagereinrichtungen;
- Figur 42: schematisch eine perspektivische Ansicht des Reibringgetriebegehäuses aus der Figur 41 in einer ersten Explosionsdarstellung;
- Figur 43: schematisch eine perspektivische Ansicht des Reibringgetriebegehäuses aus den Figuren 41 und 42 in einer weiteren Explosionsdarstellung;
- Figur 44: schematisch eine Ansicht eines Reibringgetriebes mit einem eingangsseitig angeordneten Doppelplanetengetriebe;
- Figur 45: schematisch eine Ansicht eines Reibringgetriebes mit einem ausgangsseitig angeordneten Doppelplanetengetriebe;
- Figur 46: schematisch eine Ansicht eines Führungskäfigs für eine Verstellbrücke mit einer Überlastsicherung;
- Figur 47: schematisch eine Ansicht des Führungskäfigs aus der Figur 46 in einer ersten geschnittenen Darstellung;
- Figur 48: schematisch eine Ansicht des Führungskäfigs aus den Figuren 46 und 47 in einer weiteren geschnittenen Darstellung;
- Figur 49: schematisch einen Längsschnitt durch eine alternative Überlastsicherung in einem Anlenker;
- Figur 50: schematisch eine Ansicht einer deaktivierten Ausfallsicherung mit geschlossenem Kraftfluss;
- Figur 51: schematisch die Ansicht der deaktivierten Ausfallsicherung aus der Figur 50 im Querschnitt;
- Figur 52: schematisch eine Ansicht einer aktivierten Ausfallsicherung mit unterbrochenem Kraftfluss und
- Figur 53: schematisch die Ansicht der deaktivierten Ausfallsicherung aus der Figur 52 im Querschnitt.

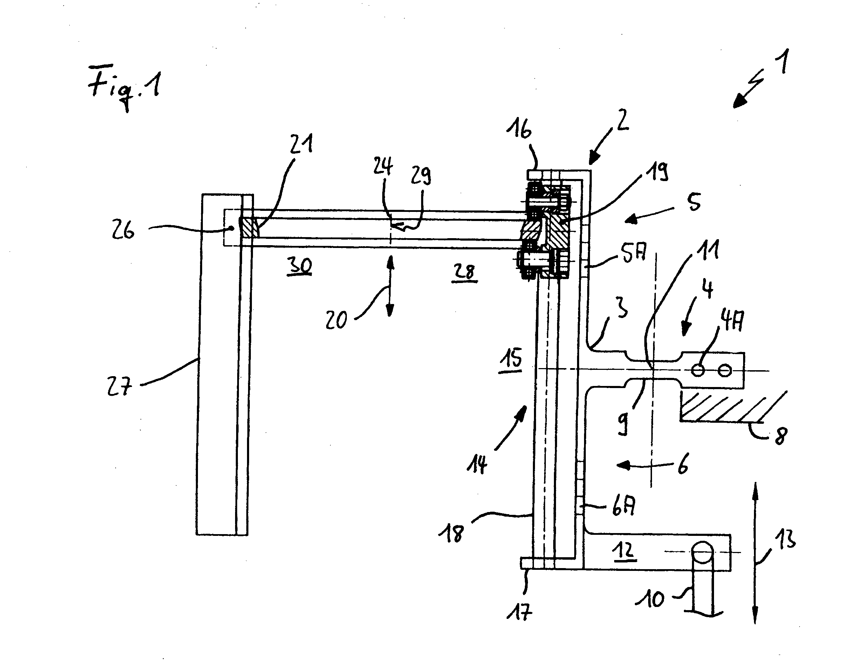

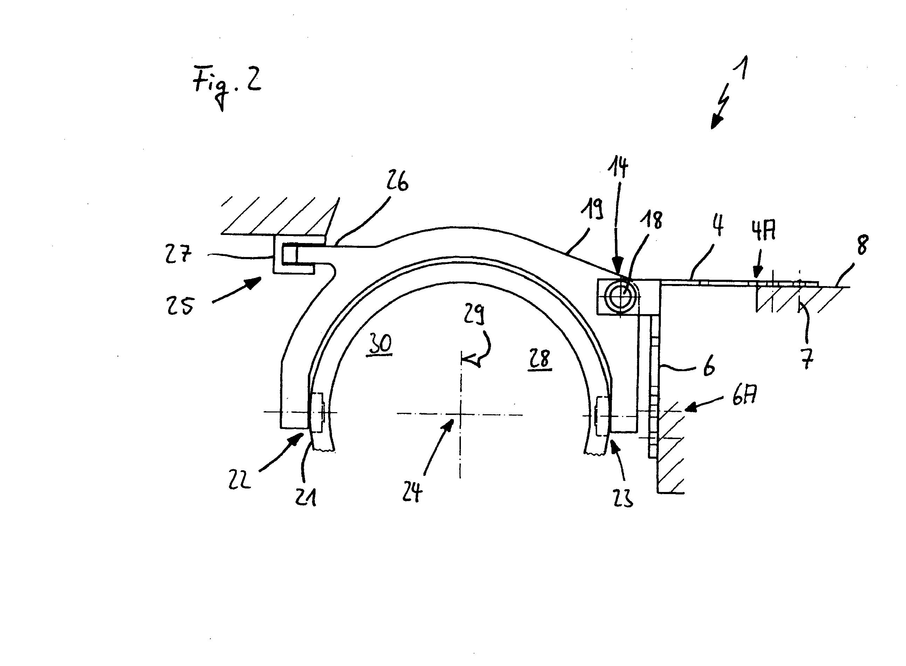

Die in der Figur 1 gezeigte Anordnung 1 des Reibringgetriebes umfasst insbesondere einen Käfig 2, der im Wesentlichen als Blechkörper 3 ausgebildet ist. Auf Grund der Konstruktion dieses Blechkörpers 3 weist der Käfig 2 eine erste elastische Lagereinrichtung 4, eine zweite elastische Lagereinrichtung 5 und eine dritte elastische Lagereinrichtung 6 auf. An jeder seiner elastischen Lagereinrichtungen 4, 5 und 6 sind Bohrungen 4A, 5A bzw. 6A (hier nur exemplarisch beziffert) vorgesehen, sodass der Käfig 2 über Schraubverbindungen 7 (nur exemplarisch hinsichtlich der Figur 2 gezeigt) an einem Reibringgetriebegehäuse 8 angeschraubt werden kann. Vorliegend weist zumindest die erste elastische Lagereinrichtung 4 eine Querschnittsverjüngung 9 auf, sodass der Käfig 2 mittels eines Anstellhebels 10 in der Papierebene der Figur 1 um eine Drehachse 11 geschwenkt werden kann. Hierzu ist der Anstellhebel 10 mittels eines Anstellhebelaufnahmeblechs 12 gelenkig an dem Käfig 2 gelagert. Der Anstellhebel 10 wird in diesem Ausführungsbeispiel zum Schwenken des Käfigs 2 gemäß des Doppelpfeils 13 translatorisch hin und her bewegt.

Darüber hinaus weist die Anordnung 1 eine axiale Führungseinrichtung 14 auf, welche in einem U-förmig gebogenen Bereich 15 des Käfigs 2 zwischen einem ersten Schenkel 16 des Blechkörpers 3 und einem zweiten Schenkel 17 des Blechkörpers 3 angeordnet ist. Die axiale Führungseinrichtung 14 umfasst vorliegend eine zylindrische Führungsachse 18, an welcher eine Verstellbrücke 19 gemäß der Richtungen des Doppelpfeils 20 frei verfahren werden kann. Die axiale Führungseinrichtung 14 stellt vorliegend auf baulich besonders einfache Art und Weise eine einseitige Axialführung der Verstellbrücke 19 innerhalb des Käfigs 2 dar.

Mit der Verstellbrücke 19 wird ein Reibring 21, der eine Verbindung zwischen zwei hier nicht näher gezeigten Wälzkörpern in an sich bekannter Weise herstellt, mittels eines ersten Rollenhalters 22 und eines zweiten Rollenhalters 23 drehbar gelagert. Der erste Rollenhalter 22 stellt eine erste Lagerstelle im Sinne der Erfindung dar. Dementsprechend stellt der zweite Rollenhalter 23 eine zweite Lagerstelle im Sinne der Erfindung dar. In der Darstellung nach Figur 2 ist eine erste Wälzkörperachse 24 eines ersten der beiden Wälzkörper schematisch dargestellt.

Um zu unterbinden, dass die Verstellbrücke 19 um die zylindrische Führungsachse 18 rotiert, weist die Verstellbrücke 19 eine Drehsicherung 25 auf. Die Drehsicherung 25 besteht in diesem Ausführungsbeispiel aus einem Drehsicherungszapfen 26, der ein Bestandteil der Verstellbrücke 19 ist. Darüber hinaus weist die Drehsicherung 25 eine Laufschiene 27 auf, in welcher der Drehsicherungszapfen 26 gemäß den Richtungen des Doppelpfeils 20 hin und her gleiten kann. Die Laufschiene 27 der Drehsicherung 25 ist am Reibbringgetriebegehäuse 8 befestigt, sodass von der Drehsicherung 25 problemlos auch größere Kräfte aufgenommen und in das Reibringgetriebegehäuse 8 geleitet werden können.

In diesem Ausführungsbeispiel ist die Drehsicherung 25 gegenüberliegend der axialen Führungseinrichtung 14 vorgesehen, wobei die axiale Führungseinrichtung 14 im Bereich einer ersten Flächenseite 28 einer durch die beiden Wälzkörperachsen aufgespannten Fläche 29 angeordnet ist, während die Drehsicherung 25 auf einer zweiten Flächenseite 30 der Fläche 29 angeordnet ist. Die Verstellbrücke 19 ist somit axial lediglich an einer einzigen Flächenseite 28 bezüglich der durch die Wälzkörperachsen (hier nur die erste Wälzkörperachse 24 des ersten Wälzkörpers dargestellt) vorgegebenen Fläche 29 gelagert.

Die Fläche 29 ist mittels und entlang der beiden Wälzkörperachsen, stellvertretend dargestellt durch die erste Wälzkörperachse 24 des ersten Wälzkörpers, gebildet. Die hier zu Grunde liegende Fläche 29 und damit auch die durch die Fläche 29 beschriebene Ebene verläuft nach den Darstellungen der Figuren 1 und 2 rechtwinkelig zu der Papierebene. Die Fläche 29 kann auch die erste Fläche 29 unter einem spitzen Winkel schneiden.

Durch die einseitige Lagerung der Verstellbrücke 19 ist die Gefahr verringert, dass die Verstellbrücke 19 hinsichtlich zweier axialer Führungseinrichtungen verklemmt und dabei die einwandfreie Funktion des Reibringgetriebes nicht mehr gewährleistet oder zumindest eingeschränkt wäre. Damit ist durch die einzige axiale Führungseinrichtung 14 der Verstellbrücke 19 das Verstellen des Reibringes 21 hinsichtlich eines Verstellweges (der Übersichtigkeit halber hier nicht eingezeichnet) zwischen dem ersten Schenkel 16 des Blechkörpers 3 und dem zweiten Schenkel 17 des Blechkörpers 3 sehr betriebssicher gestaltet.

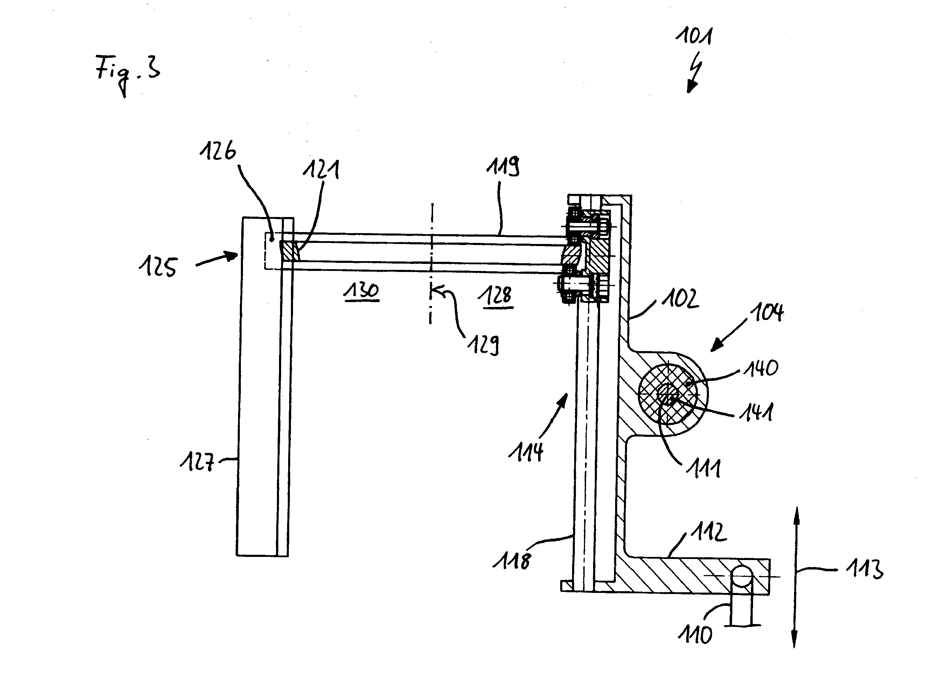

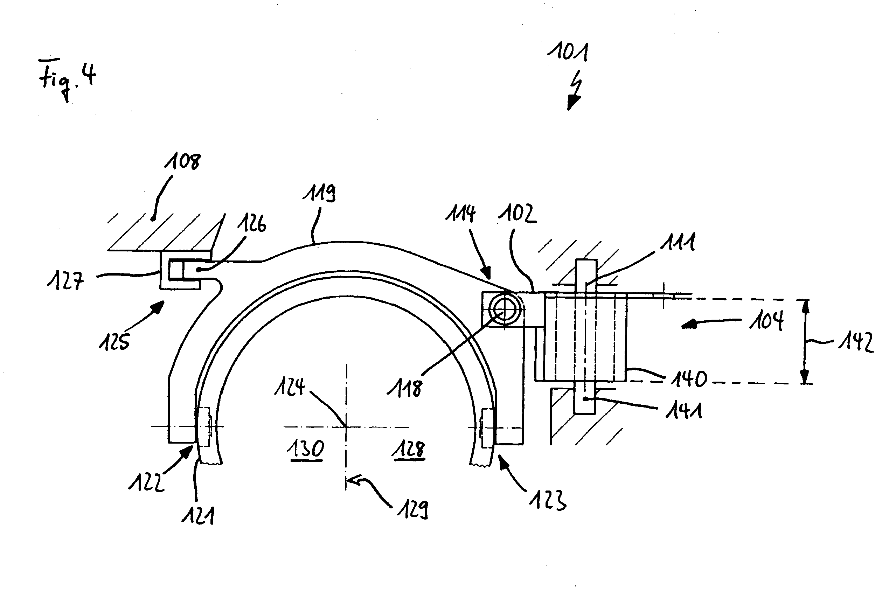

Die in den Figuren 3 und 4 gezeigte Anordnung 101 eines Reibringgetriebes umfasst im Wesentlichen einen Käfig 102, in welchem eine Verstellbrücke 119 mittels einer axialen Führungseinrichtung 114 gelagert ist. Mit der Verstellbrücke 119 wird ein Reibring 121 mittels eines ersten Rollenhalters 122 und eines zweiten Rollenhalters 123 geführt. Um ein Verdrehen der Verstellbrücke 119 gegenüber einer Führungsachse 118 der axialen Führungseinrichtung 114 zu verhindern, weist die Verstellbrücke 119 eine Drehsicherung 125 auf, die hinsichtlich der Verstellbrücke 119 einen Drehsicherungszapfen 126 umfasst. Der Drehsicherungszapfen 126 korrespondiert mit einer Laufschiene 127, welche an einem Reibringgetriebegehäuse 108 befestigt ist. Neben der Laufschiene 127 ist auch der Käfig 102 im Reibringgetriebegehäuse 108 befestigt. Dagegen ist die Verstellbrücke 119 lediglich mittels der axialen Führungseinrichtung 114 an dem Käfig 102 gelagert. Somit ist die Verstellbrücke 119 nur mittels einer einzigen Lagerung an dem Käfig 102 gelagert. Hierdurch ist die Gefahr eines Verkantens der Verstellbrücke 119 hinsichtlich der axialen Führungseinrichtung 114 nahezu vollständig ausgeschlossen, sodass die Verstellung des Reibringes 121 gegenüber den miteinander korrespondierenden Wälzkörpern (der Übersichtigkeit halber hier nicht dargestellt) besonders betriebssicher gestaltet ist.

Auch in diesem Ausführungsbeispiel befindet sich die axiale Führungseinrichtung 114 lediglich auf einer ersten Flächenseite 128 bezüglich einer Fläche 129. Die Drehsicherung 125 hingegen befindet sich auf einer zweiten Flächenseite 130 der Fläche 129. Die Fläche 129 verläuft durch die und entlang der beiden Wälzkörperachsen der hier nicht näher dargestellten Wälzkörper, die mittels des Reibringes 121 miteinander wechselwirken können. Die Fläche 129 erstreckt sich nach den Darstellungen der Figuren 3 und 4 senkrecht zu der Papierebene. Die Fläche 129 kann auch die erste Fläche 129 unter einem spitzen Winkel schneiden.

Der wesentliche Unterschied zwischen der Anordnung 1 nach den Figuren 1 und 2 und der Anordnung 101 nach den Figuren 3 und 4 liegt im Aufbau der Käfige 2 und 102, insbesondere in den unterschiedlichen elastischen Lagerungen 4, 5, 6 bzw. 104 der beiden Käfige 2 und 102. Die elastische Lagereinrichtung 104 bei der Anordnung 101 ist aus einem Gummielement 140 mit einem festen Befestigungskern 141 realisiert, über welches der Käfig 102 mit dem Reibringgetriebegehäuse 108 korrespondiert. Mittels des Gummielementes 140 der elastischen Lagereinerichtung 104 ist es möglich, den Käfig 102 um eine Drehachse 111 anstellen zu können, sodass durch einen unterschiedlichen Anstellwinkel der Käfig 102 entlang der axialen Führungseinrichtung 114 eingestellt werden kann.

Um hierzu benötigte Anstellkräfte auf den Käfig 102 übertragen zu können, ist an dem Käfig 102 ein Anstellhebelaufnahmeblech 112 vorgesehen, an welchem ein Anstellhebel 110 gelenkig befestigt ist. Der gelenkig befestigte Anstellhebel 110 kann gemäß des Doppelpfeils 113 hin und her bewegt werden, sodass als Folge daraus der Käfig 102 um die Drehachse 111 gedreht wird.

Die Stabilität bzw. der Festigkeitsgrad der Lagerung des Käfigs 102 innerhalb des Reibringgetriebes richtet sich neben der Werkstoffwahl auch nach der gewählten Länge 142 des Gummielementes 140. Bei geeignet gewählten Längenverhältnissen des Gummielementes 140 findet der Käfig 102 trotz der elastischen Lagereinrichtung 104 ausreichenden Halt innerhalb des Reibringgetriebes, sodass ein sicheres Verstellen der Verstellbrücke 119 und damit auch des Reibringes 121 gegenüber Wälzkörpern (der Übersichtlichkeit halber hier nicht explizit dargestellt) sowie eine ausreichend stabile Lagerung senkrecht zu dem hierfür benötigten Freiheitsgrad gewährleistet ist.

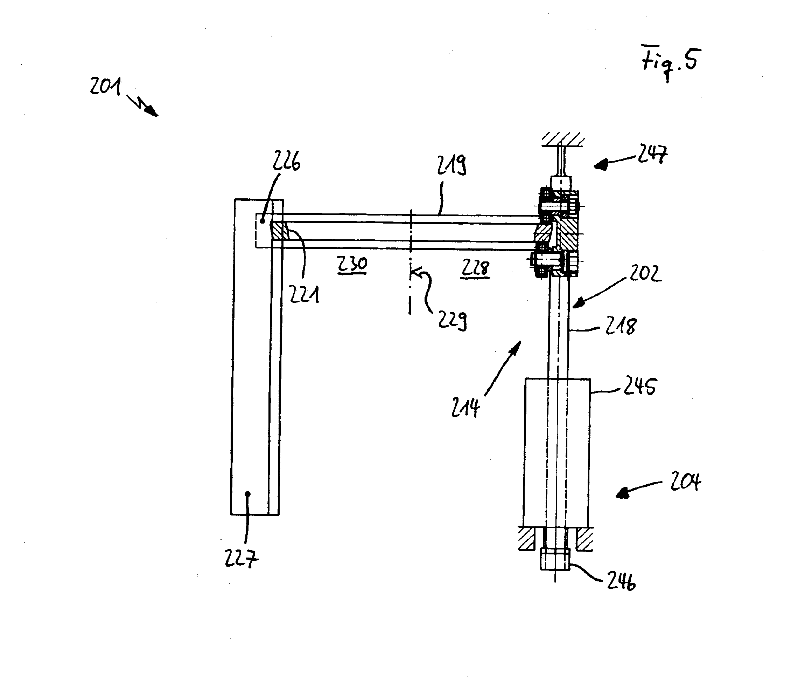

Die in den Figuren 5 bis 7 gezeigte alternative Anordnung 201 im Bereich eines Käfigs 202 eines Reibringgetriebes weist zur Realisierung einer elastischen Lagereinrichtung 204 für den Käfig 202 einen Verstellmotor 245 auf, welcher über eine Getriebeanordnung 246 mit einer zylindrischen Führungsachse 218 einer axialen Führungseinrichtung 214 gekoppelt ist. Im vorliegenden Ausführungsbeispiel stellt die zylindrische Führungsachse 218 den eigentlichen Käfig 202 der Anordnung 201 dar. Mittels des Verstellmotors 245 und der Getriebeanordnung 246 wird die zylindrische Führungsachse 218 pendelnd hin und her bewegt, sodass eine Verstellbrücke 219 gegenüber hier nicht näher gezeigten Wälzkörper eingestellt werden kann.

Auch in diesem Ausführungsbeispiel ist die Verstellbrücke 219 einseitig an der axialen Führungseinrichtung 214 gelagert. Wie auch in den zuvor erläuterten Ausführungsbeispielen weist die Verstellbrücke 219 neben der axialen Führungseinrichtung 214 eine Drehsicherung 225 auf, die verstellbrückenseitig einen Drehsicherungszapfen 226 umfasst, der innerhalb einer Laufschiene 227 gleitend eingelegt ist. Die Laufschiene 227 ist in einem Reibringgetriebegehäuse 208 befestigt. Unmittelbar an dem Reibringgetriebegehäuse 208 ist ebenfalls der Verstellmotor 245 sowie die dem Verstellmotor 245 gegenüberliegende Seite des Käfigs 202 befestigt.

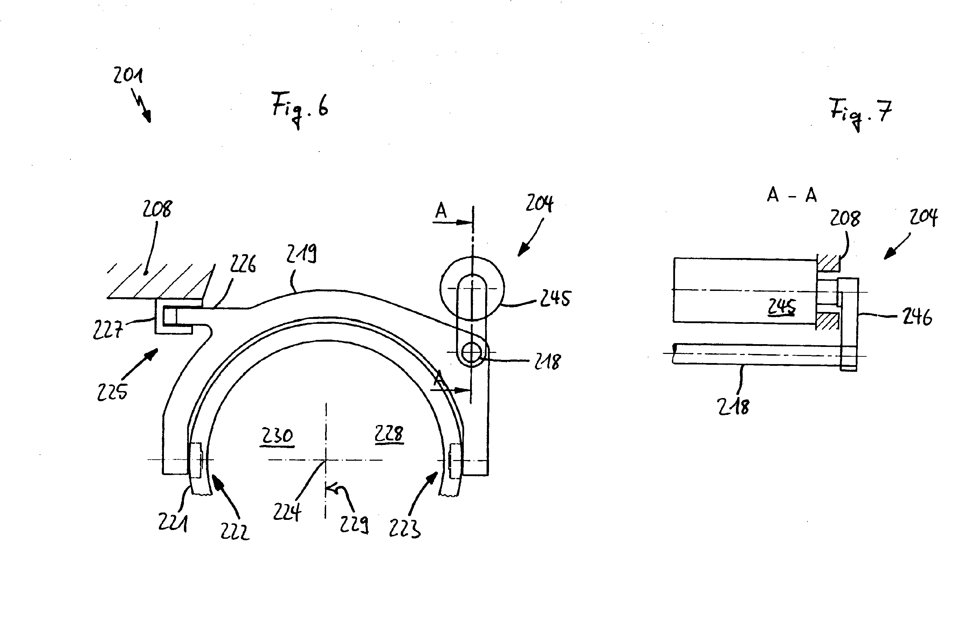

An der Verstellbrücke 219 selbst ist, wie auch bei den vorbeschriebenen Ausführungsbeispielen, ein Reibring 221 gelagert. Der Reibring 221 rotiert um eine Wälzkörperachse 224. Damit sich der Reibring 221 entsprechend gegenüber der Verstellbrücke 219 bewegen kann, ist der Reibring 221 an der Verstellbrücke 219 mittels eines ersten Rollenhalters 222 und eines zweiten Rollenhalters 223 rotierbar befestigt. Wie auch bei den beiden zuvor erläuterten Ausführungsbeispielen ist die Verstellbrücke 219 gegenüber dem Käfig 202 lediglich mittels einer einzigen axialen Führungseinrichtung 214 innerhalb des Reibringgetriebegehäuses 208 gelagert. Die eine einzige axiale Führungseinrichtung 214 befindet sich hierbei auf einer ersten Flächenseite 228 der Fläche 229. Die Fläche 229 ist auch bei diesem Ausführungsbeispiel im Wesentlichen eine Ebene, die durch zwei Wälzkörperachsen 224 zweier Wälzkörper aufgespannt ist. Sie erstreckt sich gemäß der Darstellungen nach den Figuren 5 und 6 senkrecht zur Papierebene. Die Fläche 229 kann auch die erste Fläche 229 unter einem spitzen Winkel schneiden.

Durch eine derartige Anordnung 201 ist die Verstellbrücke 219 vorteilhafter Weise axial lediglich an einer Seite 228 bezüglich einer durch die Wälzkörperachse 224 vorgegebenen Fläche 229 gelagert. Hierdurch ist ein Verklemmen der Verstellbrücke 219 an der axialen Führungseinrichtung 214 des Käfigs 202 unterbunden.

Bei diesem Ausführungsbeispiel erfolgt die elastische Lagerung 204 über eine Blattfeder 248, die beispielsweise auch einstückig mit dem Käfig 202 mit der Führungsachse 218 ausgebildet sein kann. Wie unmittelbar ersichtlich können durch die elastischen Lagerungen der vorstehend beschriebenen Ausführungsbeispiele Rückstellkräfte aufgebracht werden. Bei geeigneter Umsetzung können diese Rückstellkräfte derart gewählt werden, dass der Käfig bzw. die Verstellbrücke durch diese Rückstellkräfte in eine Notfallposition gebracht werden, wenn der Antrieb, beispielsweise der Verstellmotor 245, ausfällt.

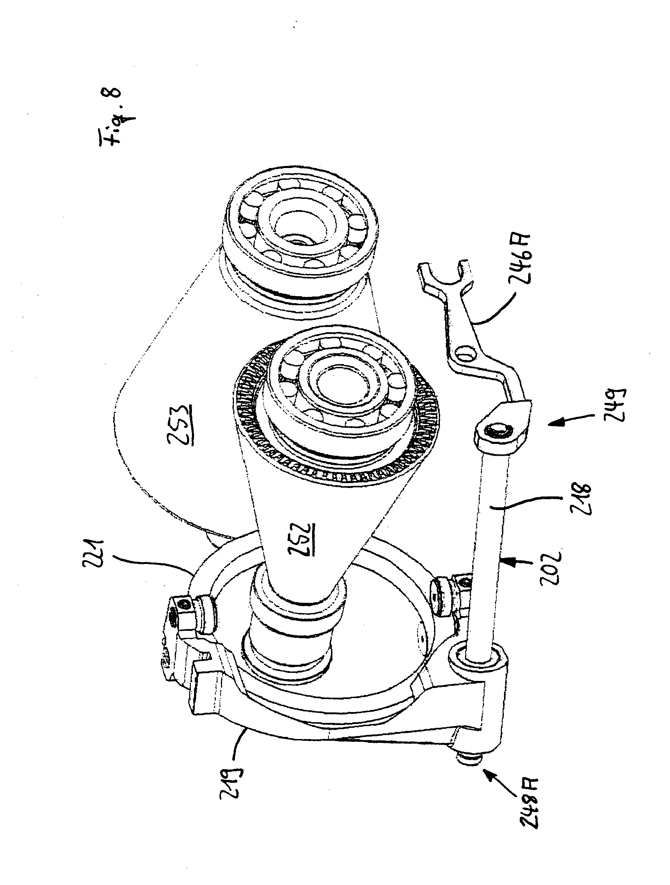

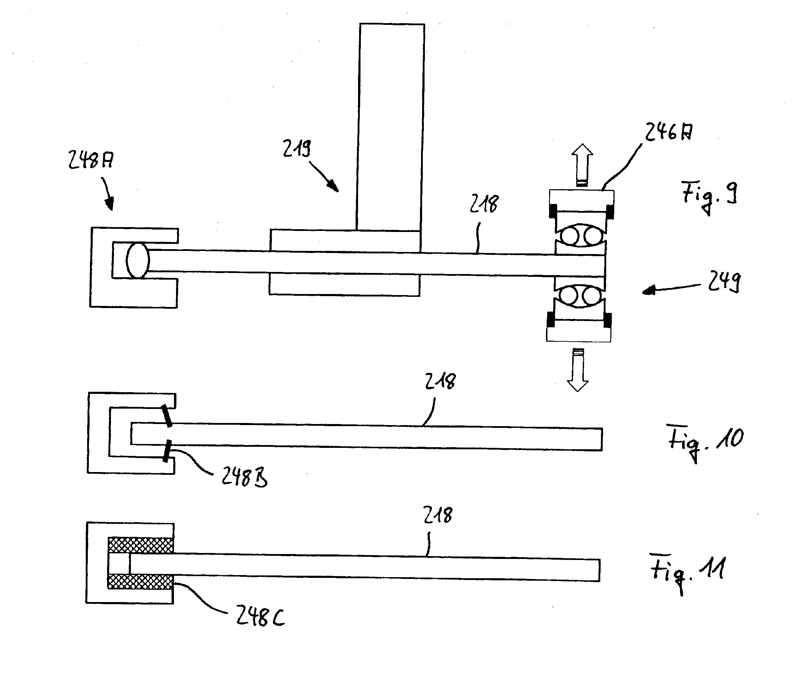

Eine Alternative zu der Ausführungsform nach Figuren 5 bis 7 ist in Figuren 8 und 9 dargestellt. Diese entspricht im Wesentlichen der Ausführungsform nach Figuren 5 bis 7, so dass identische Baugruppen auch identisch beziffert und nicht mehr explizit erläutert werden. Auch hier läuft ein Reibring 221 zwischen zwei Kegelreibrädern 252 und 253 eines der Kegelreibräder 252, 253 umgreifend um und wird von einer Verstellbrücke 219 geführt, die ihrerseits an einem Käfig 202 axial frei verlagerbar gelagert ist. Der Käfig 202 bzw. die Führungsachse 218 ist jedoch nicht über eine Blattfeder sondern über eine Lagerbuchse 248A axial verlagerbar gelagert, wobei über einen geeigneten Lagerpunkt gewährleistet ist, dass die Führungsachse 218 in der Lagerbuchse 248A radial kein bzw. nur ein äußerst geringes Spiel aufweist, jedoch in der Lagerbuchse 248A verkippen kann.

Mit einer Tellerfeder 248B, wie in der Figur 10 dargestellt, kann ein derartiges Verkippen bei minimalem radialen Spiel alternativ baulich besonders einfach realisiert werden. Auch kann stattdessen eine kippelastische Gummibuchse 248C (siehe Figur 11) zur Anwendung kommen.

Darüber hinaus ist bei den Anordnungen nach den Figuren 8 bis 11 ein am Gehäuse gelagerter Hebel 246A vorgesehen, der von einem nicht näher dargestellten Exzentermotor, ähnlich dem Verstellmotor 245 angetrieben werden kann. Darüber hinaus ist die Führungsachse 218 über ein Lager 249 drehbeweglich an dem Hebel 246A gelagert. Insofern gibt der Hebel 246A die Bewegung vor und kann sehr genau mit lediglich einem rotatorischen Freiheitsgrad gelagert werden, während die Lagerung der Führungsachse 218 für den entsprechenden Ausgleich sorgen kann. Hierin liegt eine Abweichung zu dem Ausführungsbeispiel nach Figuren 5 bis 7, bei welchem der Ausgleich im Wesentlichen durch ein Spiel zwischen der Führungsachse 218, dem Hebel bzw. der Getriebeanordnung 246 und dem Verstellmotor 245 erfolgt.

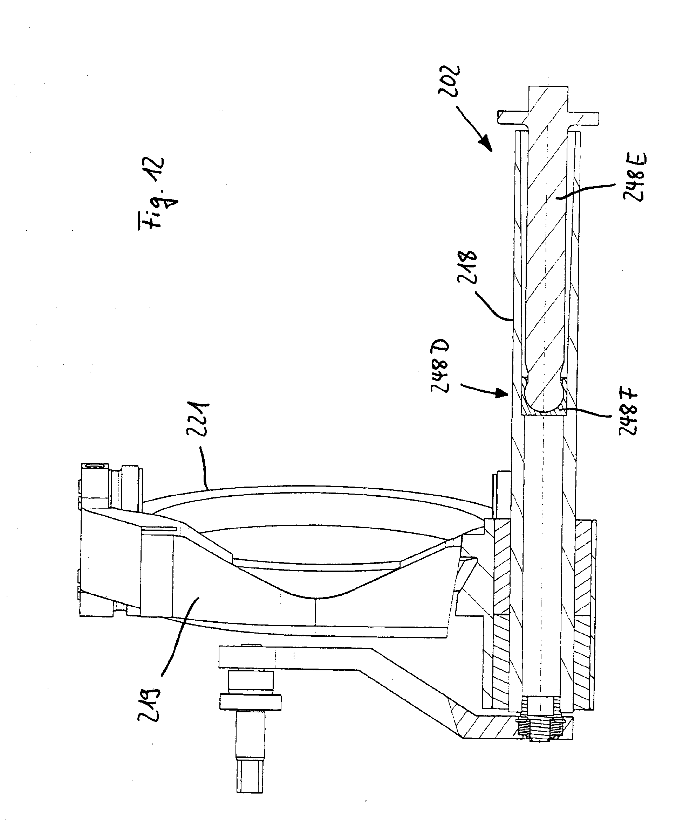

Auch das Ausführungsbeispiel nach Figur 12 entspricht im Wesentlichen dem vorgenannten Ausführungsbeispiel. Jedoch ist bei diesem Ausführungsbeispiel der Lagerpunkt für die Führungsachse 218 in Richtung Kegelmitte verlegt. Insofern liegt bei dieser Anordnung der Drehpunkt für die Führungsstange 218 und somit auch für den Käfig 202 in einer von der Führungsstange 218 aufgespannten und parallel zu den Wellenachsen angeordneten Ebene, was zu äußerst kleinen Ausschlägen der Führungsstange 218 bzw. des Käfigs 202 führt, wodurch diese Anordnung sehr wenig Platz verbraucht. Vorzugsweise erfolgt die Lagerung innerhalb der Führungsachse 218, was besonders Platz sparend ist. Bei vorliegendem Ausführungsbeispiel wird dieses durch einen Lagerkopf 248D realisiert, der an einer Stange 248E befestigt ist und in einer Lagerpfanne 248F ruht, die ihrerseits in der Führungsachse 218 angeordnet ist.

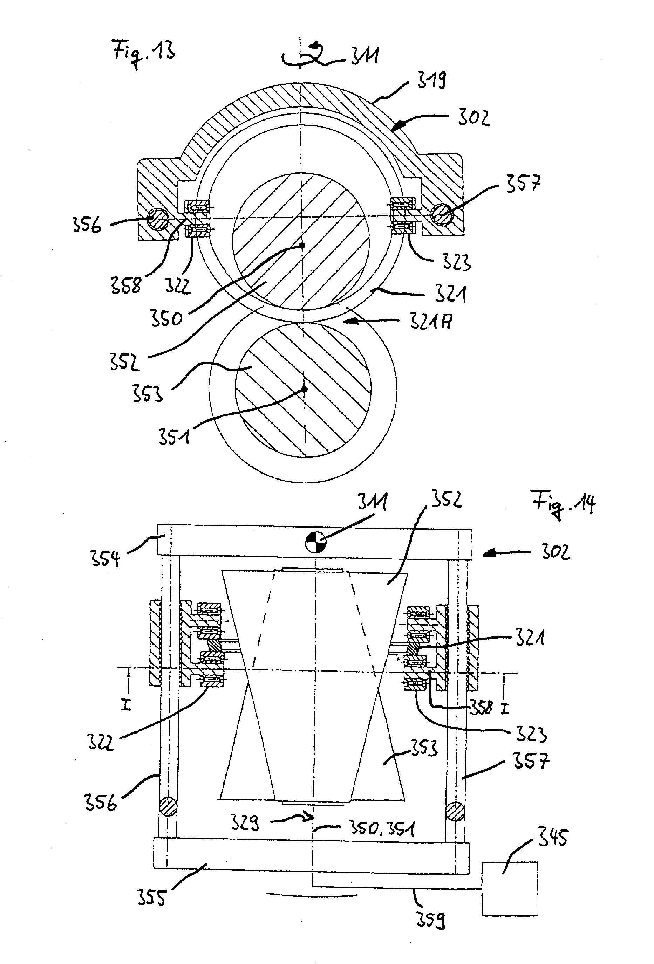

Die vorstehend beschriebenen Anordnungen 1, 101 und 201 eignen sich insbesondere auch dazu, an bzw. in Reibringgetrieben nach den Figuren 13 bis 18 angeordnet zu werden.

Die in den Figuren 13 bis 18 dargestellten Reibringgetriebe bestehen im Wesentlichen aus zwei auf parallelen Wälzkörperachsen 350 und 351 mit radialem Abstand angeordneten Kegelreibrädern 352 und 353, die zueinander gegensinnig angeordnet sind und gleiche Kegelwinkel β haben. Zwischen den Kegelreibrädern 352 und 353 ist ein den radialen Abstand überbrückender Reibring 321 angeordnet, der das erste Kegelreibrad 352 umgibt und in einem Käfig 302 gehalten ist. Durch den Abstand zwischen den beiden Kegelreibrädern 352 und 353 ist also ein Spalt 321 A vorhanden.

Der Käfig 302 besteht aus einem Rahmen, der von zwei Querhäuptern 354 und 355 und zwei darin aufgenommenen parallelen Führungsachsen 356 und 357 gebildet ist. Diese Führungsachsen 356, 357 sind parallel zu den Kegelreibradachsen 350 und 351 und zugleich zu den unter dem Winkel β geneigten Erzeugenden der Kegelreibräder 352 und 353 angeordnet und tragen eine Verstellbrücke 319 mit zwei aufeinander zuweisenden Zapfen 358 (hier nur exemplarisch beziffert), auf denen ein erster Rollenhalter 322 bzw. ein zweiter Rollenhalter 323 sitzen. Die Rollenhalter 322 und 323 greifen beiderseits des Reibringes 321 an und geben diesem die notwendige axiale Führung.

Die Mitte des Querhauptes 354 bildet eine lotrechte Drehachse 311, um die der gesamte Käfig 302 schwenkbar ist. Zu diesem Zweck ist das untere Querhaupt 355 mit einem daran angreifenden und nicht näher dargestellten Querantrieb 359 und mit einem Verstellmotor 345 verbunden.

Die Drehachse 311 liegt bei diesem Ausführungsbeispiel in der durch die Kegelreibradachsen 350 und 351 der Kegelreibräder 352 und 353 bestimmten Fläche 329, die eine Ebene darstellt. Die Fläche 329 kann auch in einer hierzu parallelen Ebene liegen oder die erste Fläche 329 unter einem spitzen Winkel schneiden.

Wird der Käfig 302 um wenige Winkelgrade verschwenkt, so wird der Reibantrieb eine axiale Verstellung der Verstellbrücke 319 und damit eine Änderung des Übersetzungsverhältnisses der Kegelreibräder 352 und 353. Hierzu genügt ein winziger Energieaufwand.

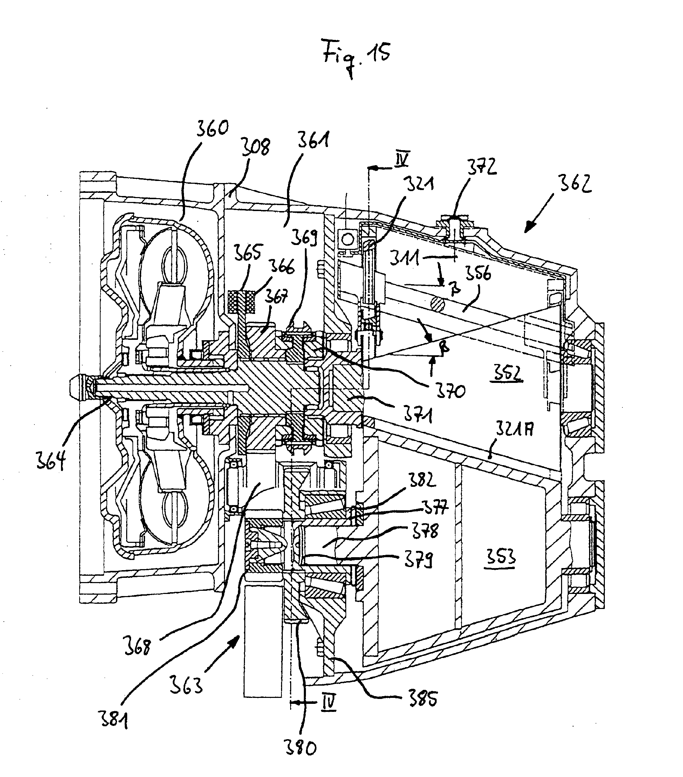

Der in der Figur 15 gezeigte Frontantrieb für ein Fahrzeug weist ein Kegelreibringgetriebe 360 auf. Der Frontantrieb besteht im Wesentlichen aus einem hydraulischen Wandler bzw. einer Flüssigkeitskupplung 360, einem dieser nachgeordneten Schalteinheit 361, dem Kegelreibringgetriebe 362 und einem Abtrieb 363.

Der Antriebsteil der Flüssigkeitskupplung 360 sitzt auf einer Welle 364, auf der auch eine Bremsscheibe 365 angeordnet ist, die mit dem Kegelreibringgehäuse 308 gehaltenen Bremsbacken 366 zusammen wirkt und elektronisch ansteuerbar ist. Unmittelbar hinter der Bremsscheibe 365 sitzt ein freilaufendes Zahnrad 367, das mit einem nur teilweise dargestellten Vorgelege 368 in Eingriff steht und im Abtrieb 363 den Rückwärtsgang bewirken kann. Das Zahnrad 367 weist auf einer Seite eine Kronenverzahnung auf, mit der es mit einer auf der Welle 364 gehaltenen und axial verschiebbaren, eine innere Axialverzahnung aufeisenden Schaltmuffe 369 in Eingriff gebracht und aktiviert werden kann.

Wird eine Drehrichtungsumkehr gewünscht, so wird zunächst die Bremse bestehend aus Bremsscheibe 365 und Bremsbacken 366 betätigt, damit das nachfolgende Getriebe nicht von dem Drehmomentstoß beeinträchtigt wird. Sodann wird die Schaltmuffe 369 in Figur 15 aus ihrer dort gezeigten neutralen Stellung nach rechts bewegt und gelangt mit einem Ritzel 370 in Eingriff, welches fest mit der Antriebswelle 371 des Kegelreibrades 353 des Kegelreibringgetriebes 362 verbunden ist.

Das Kegelreibringgetriebe 362 besteht, wie auch anhand der Figuren 13 und 14 beschrieben, aus zwei entgegengesetzt und mit radialem Abstand zueinander angeordneten Kegelreibrädern 352 und 353 mit gleichem Kegelwinkel und parallelen Achsen. Ferner ist das erste Kegelreibrad 352 (hier das obere Kegelreibrad) von dem Reibring 321 umschlossen, der mit seiner inneren Mantelfläche mit dem zweiten Kegelreibrad 353 und mit seiner äußeren Mantelfläche mit dem ersten Kegelreibrad 352 in Reibeingriff steht.

Die beiden Kegelreibräder 352, 353 können, wie dargestellt, unterschiedliche Durchmesser haben, wodurch gegebenenfalls eine Übersetzungsstufe beim nachfolgenden Antrieb 363 eingespart wird. Aus Gewichtsgründen können die Kegelreibräder 352 und 353 auch hohl ausgebildet sein, da es lediglich auf ihre Mantelfläche ankommt.

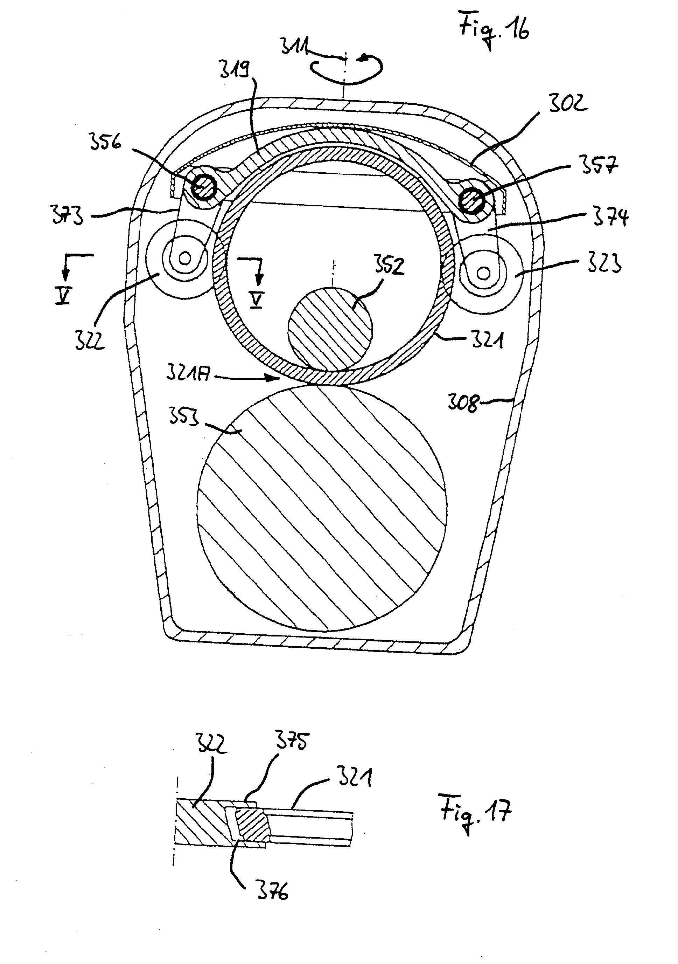

Der Reibring 321 ist, wie auch die Figuren 16 und 17 zeigen, in einem Käfig 302 gehalten, der an der Stelle 372 (Figur 10) im Reibringgetriebegehäuse 308 um eine Drehachse 311 schwenkbar angeordnet ist, die in der durch die Kegelreibradachsen 350 bzw. 351 der Kegelreibräder 352 bzw. 353 bestimmten Ebene liegt. Um große Schwenkwege zu vermeiden, liegt sie etwa in der Mitte der axialen Länge der Kegelreibräder 352, 353. Die Drehachse 311 kann, wie oben erwähnt, auch in einer hierzu parallelen Ebene liegen und die erstgenannte Ebene unter einem spitzen Winkel schneiden.

Im Käfig 302 sind zwei parallele Führungsachsen 356 und 357 gehalten, deren Steigungswinkel β zur Waagerechten gleich dem Kegelwinkel β der Kegelreibräder 352 und 353 ist. Auf diesen Führungsachsen 356 und 357 ist eine Verstellbrücke 319 geführt, die Ansätze 373 bzw. 374 aufweist, an denen Rollenhalter 322 bzw. Rollenhalter 323 gelagert sind. Diese haben, wie in Figur 12 gezeigt, eine Umfangsnut 357 und umgreifen mit ihren Flanschen 376 den Reibring 321.

Der Reibring 321 kann mit seiner Achse parallel zu den Kegelreibradachsen 350, 351 der Kegelreibräder 352 und 353 angeordnet sein. Er kann aber auch so im Käfig 302 gehalten sein, dass seine Achse parallel zur Erzeugenden der aneinander zugewandten Kegelreibräder 352, 353 liegt und senkrecht auf der Mantelfläche der Kegelreibräder 352, 353 steht.

Für die Verstellung des Käfigs 302 ist eine im Gehäuse 308 gelagerte Verstellspindel 377 vorgesehen, die mit einem nicht dargestellten Verstellmotor oder Magneten verbunden ist und am Käfig 302 angreift.

Bei leichter Drehung des Käfigs 302 wird der Reibring 321 um die Achse 311 gedreht, wodurch sich die relative Lage zu den Kegelreibrädern 352 und 353 verändert, sodass der Reibring 321 selbsttätig seine Position verfährt und das Übersetzungsverhältnis des Kegelreibringgetriebes 362 verändert.

Die Abtriebswelle 378 des Kegelreibrades 353 ist in einer Anpresseinrichtung 379 aufgenommen, die ihrerseits im Gehäuse 308 gelagert ist, und trägt Abtriebsritzel 380, 381.

Die Anpresseinrichtung 379 besteht aus einer die Abtriebswelle 378 übergreifenden Verlängerungswelle mit einem dem Kegelreibrad 353 zugewandten Flansch 382 mit einer Radialverzahnung, die mit einer entsprechenden Radialverzahnung am Kegelreibrad 353 zusammenwirkt. Die Radialverzahnung bewirkt einen axialen Druck auf das Kegelreibrad 353.

Vorteilhaft ist das Reibringgetriebegehäuse 308 zwischen dem An- und Abtrieb 360, 361, 363 einerseits und dem Kegelreibringgetriebe 362 andererseits durch eine Trennwand 385 abgeteilt. Damit ist es möglich, im Gehäuseteil für das Reibringgetriebe 362 eine Kühlflüssigkeit ohne Schmiereigenschaften, zum Beispiel Silikonöl, einlaufen zu lassen, sodass der Reibwert nicht beeinflusst wird. Als Kühlflüssigkeit für das Reibringgetriebe 362 eignen sich auch Traktionsfluide oder Öle mit Keramikpulver oder anderen Feststoffpartikeln.

Vorteilhaft bestehen die Reibflächen mindestens eines Getriebeteiles des Reibringgetriebes 362, zum Beispiel die Kegelreibräder 352, 353 oder der Reibring 321 aus einer Beschichtung aus Hartmetall oder Keramik, zum Beispiel Titannitrid, Titancarbonnitrid, Titanaluminiumnitrid oder dergleichen.

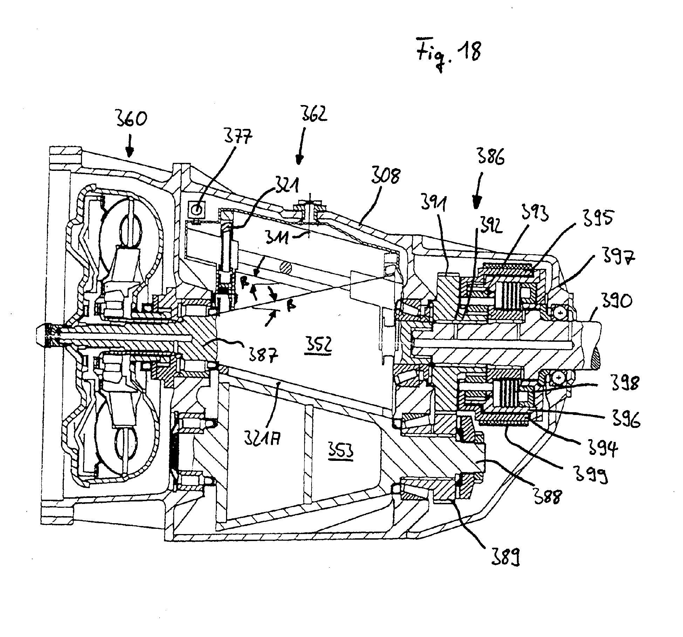

Die in der Figur 18 gezeigte Anwendung des Reibringgetriebes 362 ist einem Hinterradantrieb eines Fahrzeuges beigeordnet und entspricht im Wesentlichen der Anordnung nach Figuren 15 bis 17, so dass gleich wirkende Baugruppen auch identisch beziffert sind. Vor dem Reibringgetriebe 362 befindet sich eine Flüssigkeitskupplung bzw. ein hydraulischer Wandler 360 und hinter dem Reibringgetriebe 362 ein Planetengetriebe 386.

Die Abtriebswelle der Flüssigkeitskupplung 360 bildet zugleich die Welle 387 des oberen ersten Kegelreibrades 352, das über den Reibring 321 das zweite Kegelreibrad 353 antreibt, auf dessen Abtriebswelle 388 ein Ritzel 389 sitzt, das mit einem frei drehbaren auf einer Getriebeabtriebswelle 390 sitzenden Zahnrad 391 kämmt. Die Getriebeabtriebswelle 390 fluchtet mit der Welle 387 und ist in dieser frei drehbar aufgenommen. Ein mit dem Zahnrad 391 einstückig verbundenes Ritzel 392 bildet das Sonnenrad des Planetengetriebes 386. Dieses kämmt mit Planetenzahnrädern 393, die in einem Planetenträger 394 gehalten sind, der um die Getriebeabtriebswelle 390 zu laufen vermag. Der Planetenträger 394 weist einen zylindrischen Ansatz 395 auf, der ein Hohlrad 396 einschließt, das mit den Planetenzahnrädern 393 kämmt und mit der Getriebeabtriebswelle 390 über eine Längsverzahnung 397 fest verbunden ist. Im Planetengetriebe 386 ist ferner eine Lamellenkupplung 398 vorgesehen, welche die Getriebeabtriebswelle 390 mit dem Hohlrad 396 verbinden kann. Schließlich ist dem zylindrischen Ansatz 395 des Planetenträgers 392 eine Bremse zugeordnet.

Durch Betätigen der Lamellenkupplung wird der Vorwärtsgang eingeschaltet. Wird die Bremse betätigt, wird der Planetenträger festgehalten und es ergibt sich eine Drehrichtungsänderung der Getriebeabtriebswelle 390, das heißt ein Rückwärtsantrieb.

Wie unmittelbar ersichtlich ist bei den Ausführungsformen nach Figuren 13 bis 18 die Drehachse für den Käfig jeweils im Bereich der Kegel bzw. der Kegelachsen angeordnet. Dieses ist bei den Ausführungsbeispielen nach Figuren 1 bis 12 anders. Hier liegt die Drehachse außerhalb des durch die Kegel und Kegelachsen eingenommenen Raumes, wenn die Anordnung von obern, in der durch die Kegelachsen aufgespannten Ebene betrachtet wird. Zwar werden durch letztere Anordnung die Verstellwege länger, jedoch ermöglicht letztere Anordnung dafür eine sensiblere Einstellung und ein Aufbringen größerer Kräfte.

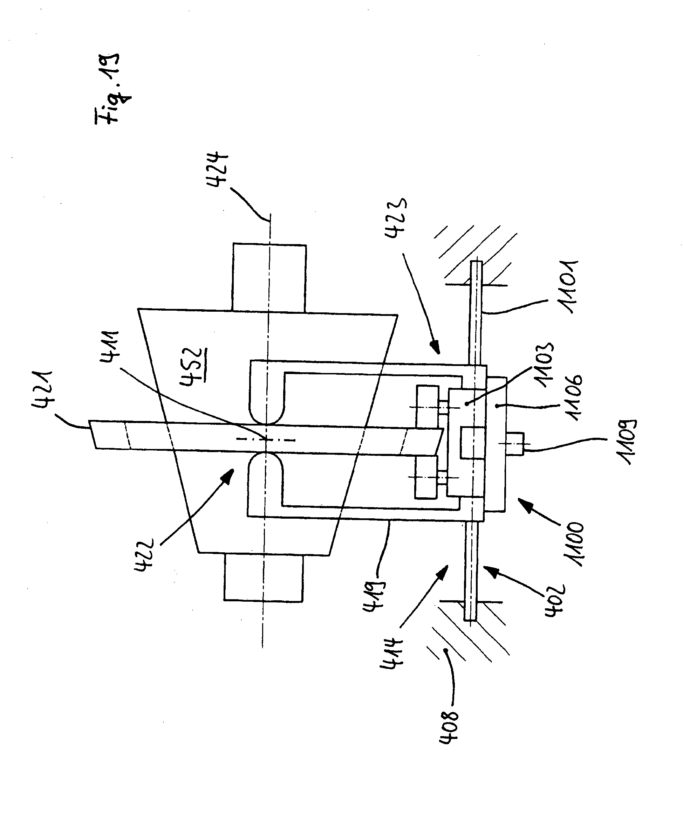

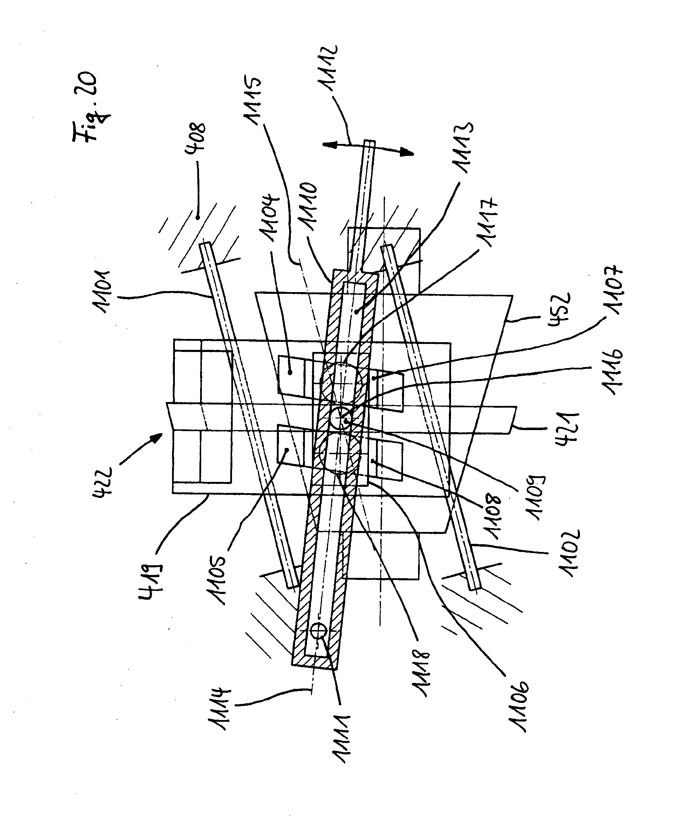

Das in den Figuren 19 und 20 gezeigte Kegelreibringgetriebe weist einen Reibring 421 und zwei Kegelreibräder 452, 453 auf (hier nur Kegelreibrad 452 gezeigt), bei welchem der Reibring 421 über eine Verstellbrücke 419 angelenkt ist, die den Reibring 421 an einer ersten Lagerstelle 422 und an einer zweiten Lagerstelle 423 lagert. Der Reibring dreht sich beim Verstellen um die Drehachse 411.

Die zweite Lagerstelle 423 ist in diesem Ausführungsbeispiel eine verstellbare Lagerstelle, so dass die verstellbare Lagerstelle 423 zum einen gegenüber der ersten Lagerstelle 422 und zum anderen gegenüber der Verstellbrücke 419 verstellbar ist. Zum Verstellen ist die Verstellbrücke 419 in diesem Ausführungsbeispiel mittels einer Kulissenanordnung 1100 an einen Käfig 402, der eine axiale Führungseineinrichtung 414 bestehend aus einer ersten zylindrischen Führungsachse 1101 und einer zweiten zylindrischen Führungsachse 1102 aufweist, geführt. Sowohl die erste zylindrische Führungsachse 1101 als auch die zweite zylindrische Führungsachse 1102 des Käfigs 402 sind in einem Reibringgetriebegehäuse 408 befestigt.

Die Kulissenanordnung 1100 besteht im Wesentlichen aus einer Kulisse 1103, welche eine erste Kulissennut 1104 und eine zweite Kulissennut 1105 aufweist, aus einer Kulissenplatte 1106 mit einem ersten Kulissenstein 1107 und einem zweiten Kulissenstein 1108 und aus einem Ringfolger 1109.

Um den Ringfolger 1109 der Kulissenanordnung 1100 zu führen, ist an dem Reibringgetriebegehäuse 408 ein Stellhebel 1110 drehbar mittels eines Führungsstiftes 1111 gelagert, so dass die gesamte Ringfolgeraufnahme 1110 gemäß des Doppelpfeils 1112 verschwenkbar um den Führungsstift 1111 befestigt ist. Die Ringfolgeraufnahme 1110 weist eine Ringfolgerführungsnut 1113 auf, in welcher der Ringfolger 1109 entlang einer Längsachse 1114 des Stellhebels 1110 bewegt werden kann.

Im normalen Betriebszustand ist der Ringfolger 1109 zentrisch auf einer Null-Achse 1115 angeordnet. Wird der Stellhebel 1110 in eine der beiden Richtungen des Doppelpfeils 1112 um den Führungsstift 1111 bewegt, wird der Ringfolger 1109 von der Null-Achse 1115 ausgehend nach links oder nach rechts der Null-Achse 1115 ausgelenkt. Dieses bedingt eine Verlagerung der verstellbaren Lagerstelle 423, und somit ein Kippen des Reibringes, der damit zu Wandern anfängt und den Ringfolger 1109 wieder zurück auf die Null-Achse 1115 zu bewegt. Da somit der Ringfolger 1109 stets bestrebt ist, zentrisch auch der Null-Achse 1115 zu verweilen, wandert der Ringfolger 1109 solang entlang der Längsachse 1114 innerhalb der Führungsnut 1113 des Stellhebels 1110, bis der Ringfolger 1109 wieder zentrisch, dass heißt auf einer Null-Position 1116 auf der Null-Achse 1115 angekommen ist.

Die jeweilige Null-Position 1116 ist definiert durch den Schnittpunkt der mittleren Längsachse 1114 des Stellhebels 1110 und der Null-Achse 1115.

Dadurch, dass der Ringfolger 1109 sich in Abhängigkeit der Stellung des Stellhebels 1110 selbsttätig entlang der mittleren Längsachse 1114 des Stellhebels 1110 bewegt, ist eine besonders zuverlässige, einfache und reaktionsschnelle Verstellung des Reibringes 422 gegenüber den Kegelreibrädern 452, 453 möglich. Die vorliegende Null-Achse 1115 verläuft vorzugsweise im Wesentlichen parallel zu dem Spalt zwischen den beiden Kegelreibrädern 452, 453.

Der Reibring 421 stellt bei vorliegender Anordnung ein Mittel zum Einlenken der verlagerbaren Lagerstelle 423 da. Das Einlenkmittel, also der Reibring, lenkt den Ringfolger 1109 und damit auch die verlagerbare Lagerstelle 423 insgesamt wieder in eine Null-Position 1109 auf der Null-Achse 1115 ein. Es versteht sich, dass entlang der Null-Achse 1115 mehrere unterschiedliche Null-Positionen je nach Stellung des Stellhebels 1110 existieren.

An den Kulissensteinen 1107 und 1108 sind durch geeignete Einrichtungen eine erste Rolle 1117 beziehungsweise eine zweite Rolle 1118 zum Führen des Reibrings 421 befestigt.

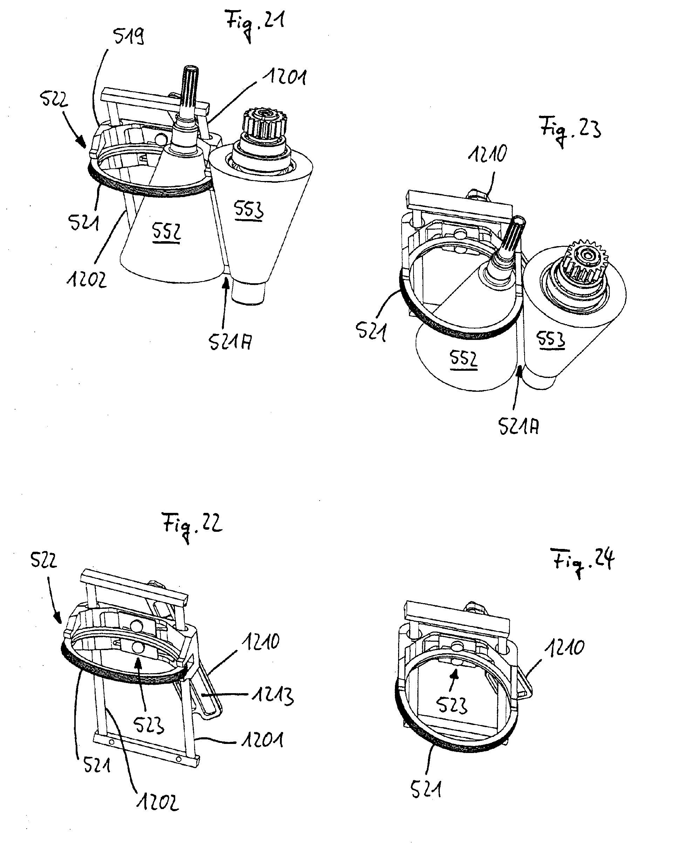

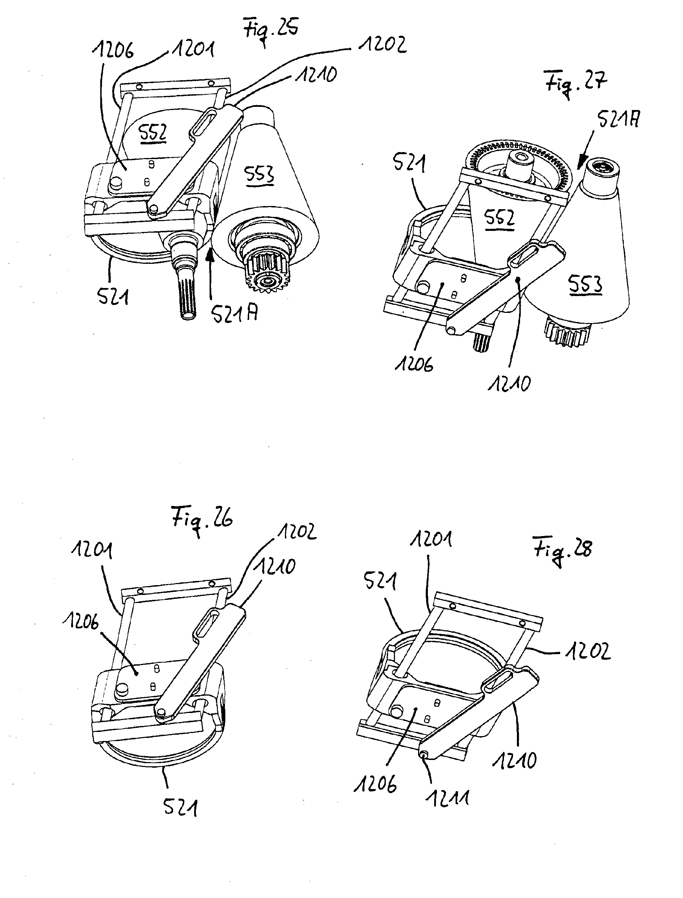

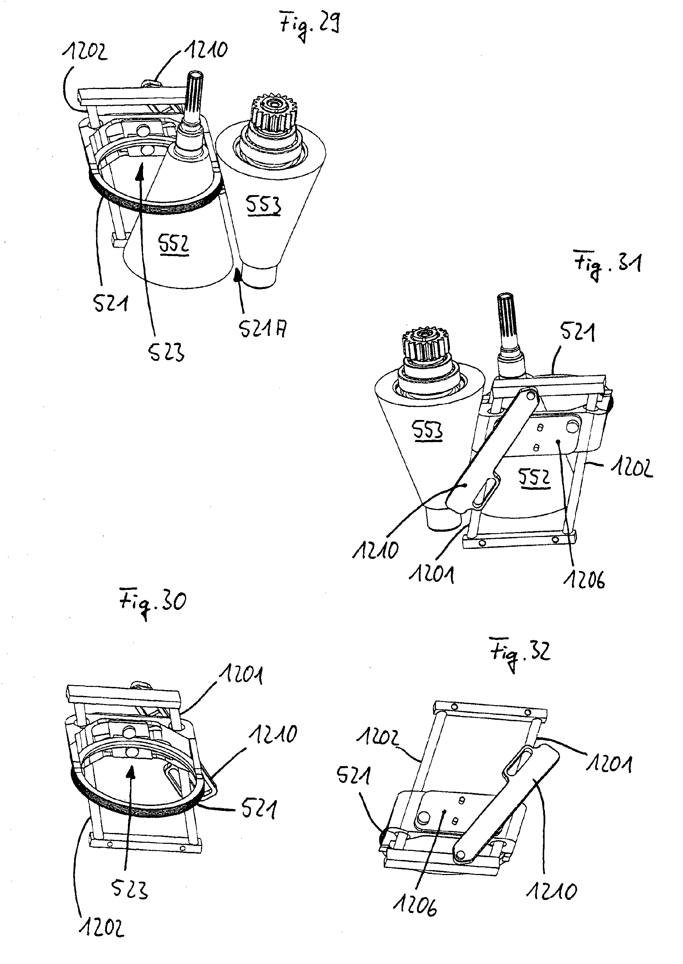

In den Figuren 21 bis 32 ist ein konkretes Ausführungsbeispiel der Ausgestaltung nach den Figuren 19 und 20 in verschiedenen Perspektiven gezeigt. Hierbei zeigen jeweils die Figurenpaare 21 und 22, 23 und 24, 25 und 26, 27 und 28, 29 und 30 sowie 31 und 32 das Ausführungsbeispiel einmal mit Kegelreibräder 552, 553 und einmal ohne die Kegelreibräder 552, 553. Zwischen den Kegelreibrädern ist ein Spalt 521A vorgesehen, der von einem Reibring 521 überbrückt wird. Der Reibring 521 wird in bezüglich der Verstellbrücke 519 ortsfesten ersten Lagerstellen 522 (hier nur exemplarisch beziffert) und in bezüglich der Verstellbrücke 519 verlagerbaren Lagerstelle 523 geführt. Wie unmittelbar ersichtlich ist die Lagerstelle 523 nicht nur der Verstellbrücke sondern auch bezüglich der anderen beiden Lagerstellen 522 verstellbar. Die anderen beiden Lagerstellen 522 sind vorzugsweise zentral, dass heißt, in der Drehachse des Reibringes 521, welche als Freiheitsgrad durch den Spalt 521A zwischen den beiden Kegelreibrädern 552, 553 verbleibt und den jeweiligen Anstellwinkel zum Wandern des Reibringes 521 ermöglicht, angeordnet. Einer der beiden Lagerstellen 522 befindet sich im Spalt 521 A zischen den beiden Kegelreibrädern 552 und 553. Hierdurch kann die Verstellbrücke 519 bezüglich der exakten Ringposition axial verlagert werden und dem Reibring 521 axial exakt folgen. Auch in dem Spalt 521 A kann eine entsprechende zentrale Lagerstelle vorgesehen sein, wobei die Lagerstellen auch an anderer Umfangsposition am Reibring 521 vorgesehen sein können.

Die verstellbare Lagerstelle 523 ist bei diesem Ausführungsbeispiel an der Verstellbrücke 519 über Kulissensteine (hier nicht sichtbar) gelagert, die eine bezüglich des Reibringweges entlang des Spaltes 521A axiale Verlagerung der verlagerbaren Lagerstelle 523 und eine Verlagerung senkrecht zum Verstellweg der Verstellbrücke 519 ermöglichen. Hierdurch kann über einen Stellhebel 1210 eine axiale Verstellung der verstellbaren Lagerstelle 523 bedingt werden. Wird der Stellhebel 1210 exzentrisch bezüglich des Weges der gesamten Vertellbrücke 519 gelagert, so kann dessen Position als Maß für die Position des Reibringes 521 genutzt werden. Wird der Stellhebel 1210 in eine bestimmte Position eingestellt, so bedingt dieses eine Verstellung der verlagerbaren Lagerstelle 523 und der Reibring 521 wandert in Richtung auf die durch die Stellung des Stellhebels 1210 vorgegebene Position. Je mehr er sich dieser Position nähert, desto mehr wird der Ringfolger 1211, der in einer Führungsnut 1213 des Stellhebels 1210 geführt ist, für die Kulisse seiner Ruhe- bzw. Neutralposition angenähert, die er genau in der Sollposition des Reibringes 521 erreicht, so dass letzterer zur Ruhe kommt.

Insofern wird hierdurch exemplarisch eine Anordnung bereitgestellt, bei welcher über eine Stelleinrichtung der Anstellwinkel des Reibringes 521 verstellt werden kann, wobei die Stelleinrichtung, beispielsweise der Stellhebel 1210, in Bezug auf eine Anstellwinkelnullposition des Reibringes 521, in welcher der Reibring 521 jeweils seine axiale Position bezüglich seines Stellweges beibehält, jeweils unterschiedlich angestellt ist. Wird somit die Stelleinrichtung verstellt, wenn der Reibring 521 in einer Anstellwinkelnullposition ist, so wird der Reibring 521 um einen entsprechenden Winkel angestellt. Er wandert dann solange entsprechend seiner Anstellung, bis er wieder eine Anstellwinkelnullposition bzw. Null-Position auf der Null-Achse erreicht, und zwar an einer anderen Axialposition, nämlich an der Axialposition, welche der eingestellten Lage der Stelleinrichtung entspricht.

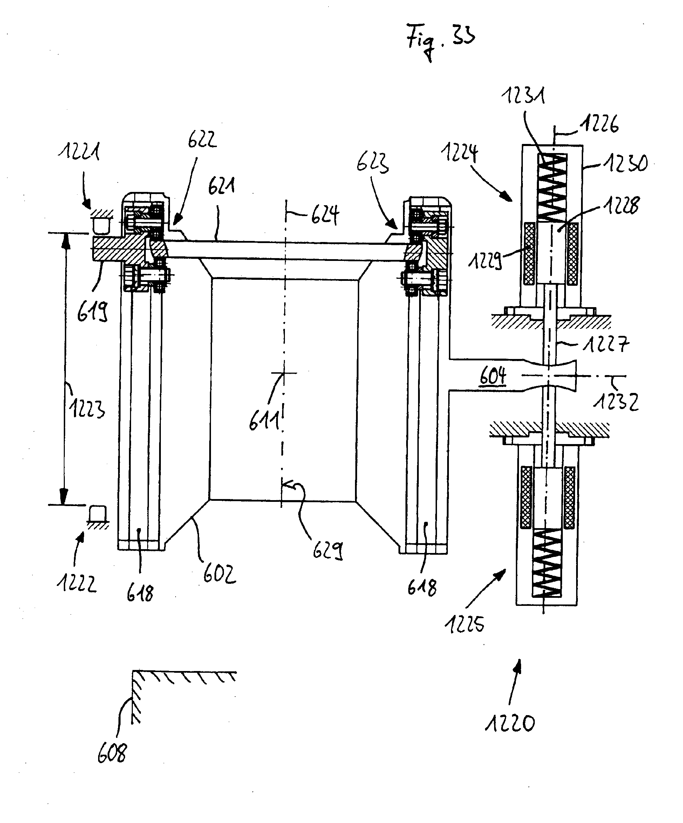

Der in der Figur 33 gezeigte Käfig 602 eines weiteren Ausführungsbeispiels ist mittels eines Linearantriebs 1220 um eine Drehachse 611 in einem Reibringgetriebegehäuse 608 anstellbar gelagert. Der Käfig 602 weist zwei Führungsachsen 618 auf, an welchen eine Verstellbrücke 619 zwischen einem ersten Endanschlag 1221 und einem zweiten Endanschlag 1222 um einen Verstellweg 1223 verlagerbar angeordnet ist. An der Verstellbrücke 619 ist ein Reibring 621 vorgesehen, der mittels eines ersten Rollenhalter 622 und mittels eines zweiten Rollenhalter 623 an der Verstellbrücke 619 gelagert ist.

In diesem Ausführungsbeispiel liegt die Drehachse 611 des Käfigs 602 zum einen innerhalb des Bereichs des Verstellwegs 1223 und zum anderen in der Ebene, welche durch eine Fläche 629, die durch die Wälzkörperachsen 624 gebildet ist.

Der Linearantrieb 1220 weist einen ersten Hubmagneten 1224 und einen zweiten Hubmagneten 1225 auf. Die beiden Hubmagneten 1224 und 1225 haben in diesem Ausführungsbeispiel den gleichen Aufbau. Deshalb werden der Aufbau und die Funktion der Hubmagneten 1224 und 1225 lediglich an dem ersten Hubmagneten 1224 erläutert. Beide Hubmagneten 1224, 1225 sind am Reibringgetriebegehäuse 608 befestigt und liegen sich auf einer Verstellachse 1226 derart gegenüber, dass jeweils ein Verstellkolben 1227 des ersten Hubmagnets 1224 sowie des zweiten Hubmagnets 1225 mit einer Lagereinrichtung 604 des Käfigs 602 korrespondiert. Um den Verstellkolben 1227 entlang der Verstellachse 1226 zu verlagern, weist jeder der Hubmagneten 1224, 1225 an einem Ende des Verstellkolbens 1227 einen Metallkern 1228 auf, der von einer Magnetspule 1229 umgeben ist, welche in einem Hubmagnetgehäuse 1230 untergebracht ist. Zum Bewegen des Verstellkolbens 1227 wird die Magnetspule 1229 in einem Puls-Pause-Betrieb angesteuert, wodurch der Käfig 602 besonders exakt angestellt bzw. angesteuert werden kann. Die Hubmagneten 1224 und 1225 weisen jeweils ein Federelement 1231 auf, welches den Verstellkolben 1227 eines Hubmagneten 1224 permanent in Richtung der Lagereinrichtung 604 drückt. Da die beiden Hubmagneten 1224, 1225 sich auf einer gemeinsamen Verstellachse 1226 gegenüber liegen, heben sich die Federkräfte der Federelemente 1231 der einzelnen Hubmagnete 1224, 1225 gegenseitig auf, wodurch die Lagereinrichtung 604 des Käfigs 602 hinsichtlich einer Mittellage 1232 im Gleichgewicht gehalten ist.

Das Vorsehen zweier Hubmagnete 1224, 1225 hat den Vorteil, dass hinsichtlich des verwendeten Linearantriebs 1220 eine Redundanz vorliegt, so dass die Betriebssicherheit des Linearantriebs 1220 selbst dann gewährleistet ist, wenn einer der Hubmagneten 1224, 1225 ausfallen sollte.

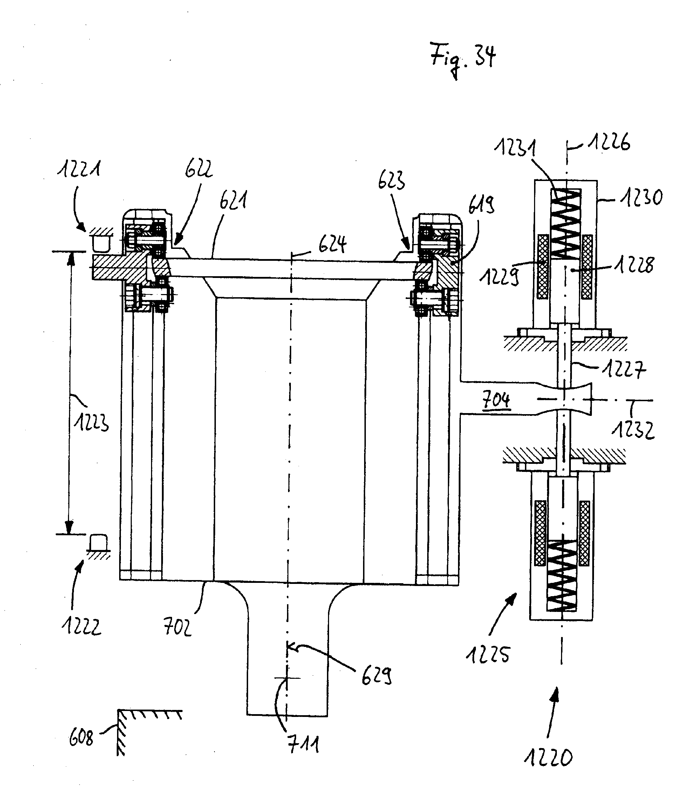

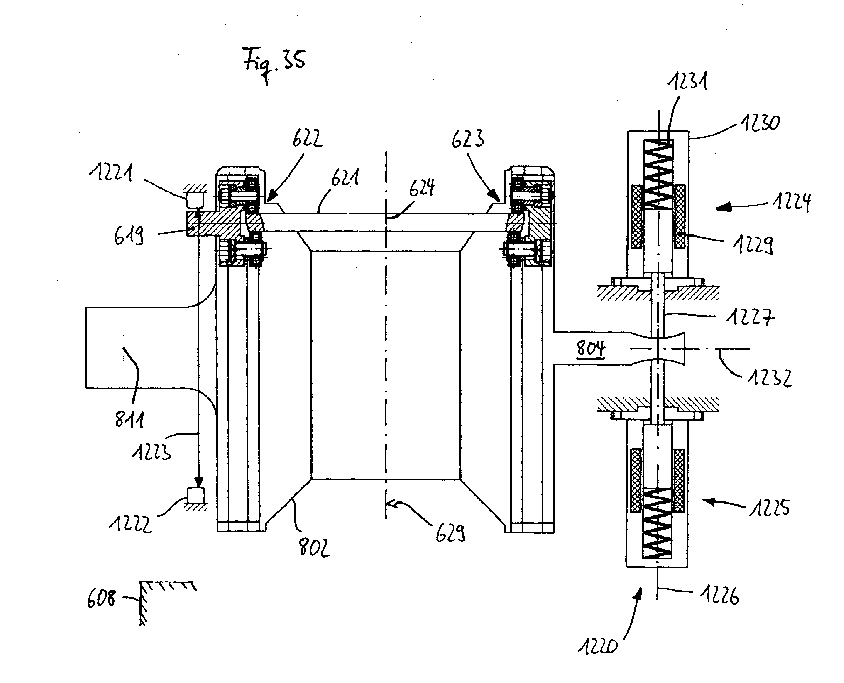

Die Ausführungsbeispiele nach den Figuren 34 und 35 haben im Wesentlichen den gleichen Aufbau wie das Ausführungsbeispiel aus der Figur 33, so dass gleiche und/oder gleich wirkende Bauteilgruppen eine identische Bezifferung aufweisen. Die Ausführungsbeispiele nach den Figuren 34 und 35 unterscheiden sich lediglich durch den Aufbau des jeweiligen Käfigs 702 bzw. 802.

Bei dem Käfig 702 nach Figur 34 liegt die Drehachse 711 des Käfigs 702 außerhalb des Bereiches des Verstellweges 1223 der Verstellbrücke 619 jedoch innerhalb der Ebene, welche durch die Fläche 629 bestimmt ist. Somit liegen bei den Ausführungsbeispielen nach Figuren 33 und 34 die Drehachsen jeweils ebenfalls in einem durch die Kegel und die Kegelwellen überdeckten Bereich, wie dieses schon bei den Ausführungsbeispielen nach Figuren 13 bis 32 der Fall erläutert wurde. Dadurch, dass bei dem Ausführungsbeispiel nach Figur 34 die Position der Drehachse 711 gegenüber der Position der Drehachse 611 außerhalb des Verstellweges 1223 angeordnet ist, ergeben sich zwischen der Drehachse 711 und der Verstellachse 1226 beim Käfig 702 andere Hebeldimensionen als zwischen der Drehachse 611 und der Verstellachse 1226 beim Käfig 602.

Gleiches gilt hinsichtlich des Käfigs 802 aus der Figur 35, da die Drehachse 811 des Käfigs 802 zwar zwischen dem ersten Endanschlag 1221 und dem zweiten Endanschlag 1222, somit im Bereich des Verstellwegs 1223, angeordnet ist. Jedoch ist die Drehachse 811 versetzt zu der Ebene der Fläche 629 und außerhalb eines durch die Kegel und die Kegelwellen eingenommenen Bereichs angeordnet, so dass sich zwischen der Drehachse 811 und der Verstellachse 1226 andere Hebeldimensionen ergeben, wodurch die Empfindlichkeit der Anstellbarkeit bzw. der Justierbarkeit des Reibringes 621 wieder anders gewählt ist.

Die Verstellbrücke kann gegen die Endanschläge 1221 und 1222 anlaufen, wenn der Antrieb für den Käfig ausfällt. Diese Anschläge sorgen dafür, dass die Verstellbrücke in eine Neutralposition verkippt wird und nicht weiter wandert. Auf diese Weise kann eine kompletten Zerstörung des Getriebes in diesen Fällen entgegen gewirkt und ein Kraftfahrzeug mit diesem Getriebe noch fortbewegt werden.

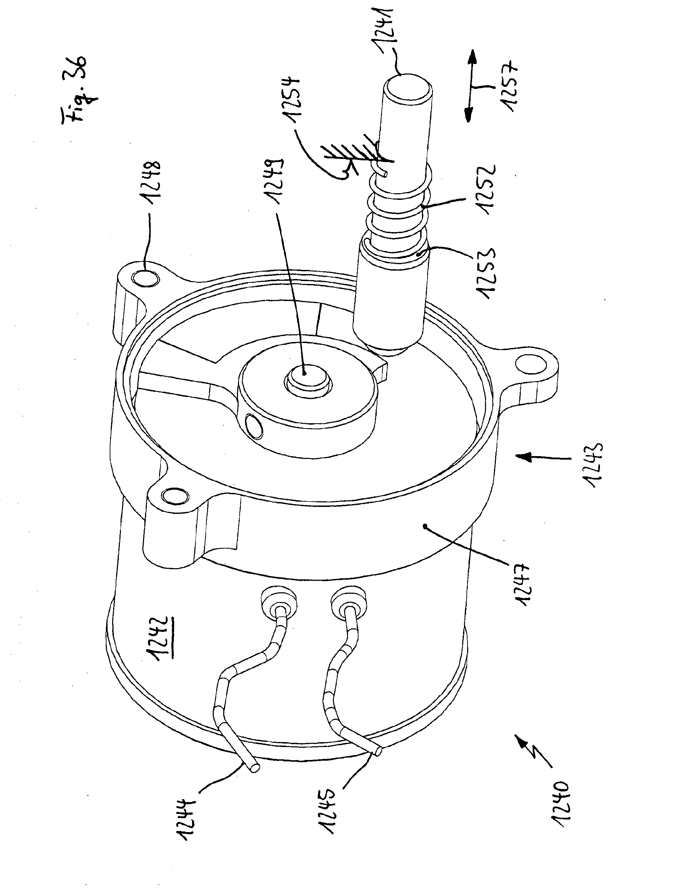

Der in den Figuren 36 bis 38 gezeigte verstellbare Endanschlag 1240 weist einen verlagerbaren Endanschlagsbolzen 1241 auf und bildet für ein Reibringgetriebe mit wechselndem Drehrichtungssinn eine bevorzugte Verstellwegbegrenzung. Der verstellbare Endanschlag 1240 besteht im Weiteren im Wesentlichen aus einem Drehmagneten 1242 und einer Verstellmechanik 1243. Der Drehmagnet 1242 wird über zwei elektrische Kabel 1244 und 1245 mit Elektrizität versorgt und kann somit die Verstellmechanik 1243 antreiben.

Der verstellbare Endanschlag 1240 wird mittels Schraubverbindungen 1246 (hier nur exemplarisch beziffert) an ein Reibringgetriebegehäuse 908 angeflanscht. Hierzu weist die Verstellmechanik 1243 ein entsprechendes Verstellmechanikgehäuse 1247 mit entsprechenden Gewindebuchsen 1248 auf. In diesem Ausführungsbeispiel umfasst das Verstellmechanikgehäuse 1247 insgesamt drei Gewindebuchsen 1248 (hier nur exemplarisch beziffert).

Der Drehmagnet 1242 ist über eine Drehmagnetwelle 1249 mit einer Anstellscheibe 1250 der Verstellmechanik 1243 verbunden. Die Drehmagnetwelle 1249 und die Anstellscheibe 1250 bilden in diesem Ausführungsbeispiel eine Wellen-Nabe-Verbindung. Zwischen der Anstellscheibe 1250 und dem Endanschlagsbolzen 1241 ist eine Lagerkugel 1251 vorgesehen. Über diese Lagerkugel 1251 werden zum einen Kräfte zwischen dem Endanschlagsbolzen 1241 und der Anstellscheibe 1250 problemlos übertragen und zum anderen ist die Anstellscheibe 1250 konstruktiv einfach relativ verlagerbar gegenüber dem Endanschlagsbolzen 1241 gelagert. Damit der Endanschlagsbolzen 1241 über die Lagerkugel 1251 stets an die Anstellscheibe 1250 gedrückt und hierdurch eindeutig gegenüber der Anstellscheibe 1250 positioniert ist, umgreift eine Druckfeder 1252 den Endanschlagsbolzen 1241. Damit die Druckfeder 1252 eine genügend große Druckkraft aufbringen kann, ist die Druckfeder 1252 zwischen einem Absatz 1253 des Endanschlagsbolzens 1241 und einem Gehäuseanschlag 1254 geklemmt.

Um die auf dem Endanschlagsbolzen 1241 bzw. der Anstellscheibe 1250 wirkenden Kräfte auf das Verstellmechanikgehäuse 1247 zu übertragen, ist zwischen der Anstellscheibe 1250 und dem Verstellmechanikgehäuse 1247 eine Lagerscheibe 1255 vorgesehen, die ein Gleitlager 1256 zwischen der Anstellscheibe 1250 und dem Verstellmechanikgehäuse 1247 bewirkt.

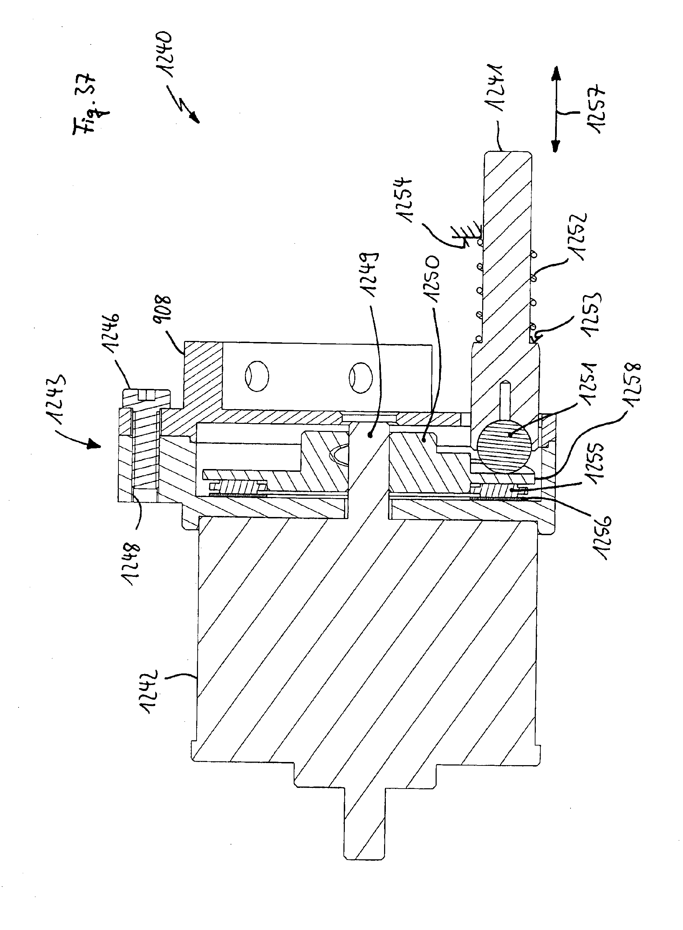

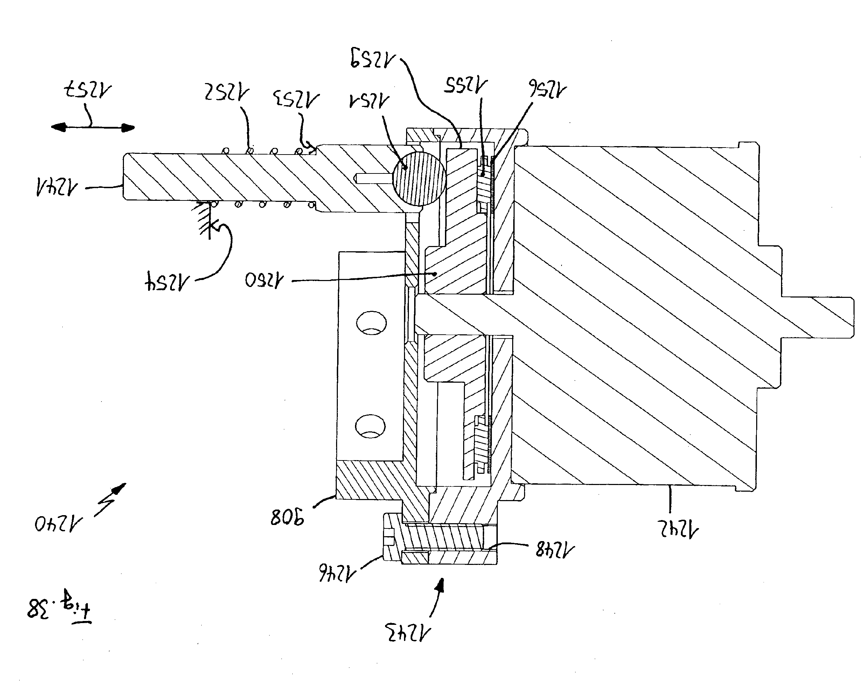

Die Anstellscheibe 1250 weist im Bereich ihres äußeren Radius unterschiedliche Dicken auf, so dass der verlagerbare Endanschlagsbolzen 1241 des verstellbaren Endanschlags 1240 gemäß der Doppelpfeilrichtung 1257 baulich besonders einfach verlagert werden kann. So stellt die Anstellscheibe 1250 in einer ersten Position eine Anfangsdicke 1258 (siehe Figur 37) im Bereich des verlagerbaren Endanschlagsbolzen 1241 bereit, während sie in einer weiteren Position eine Enddicke 1259 (siehe Figur 38) im Bereich des verlagerbaren Endanschlagsbolzen 1241 bereit stellt.

Der vorliegend verstellbare Endanschlag 1240 kann zum einen vorgesehen werden, um eine Verstellbrücke bzw. einen Reibring im Notfall oder in Grenzfällen dagegen anlaufen zu lassen. Bei einer geeigneten Anordnung des verstellbaren Endanschlags 1240 führt dies dazu, dass sich ein gegen das Ende eines Verstellwegs anlaufender Reibring gerade stellt und zerstörungsfrei in dieser Position verbleibt. Diese Funktionsweise hängt jedoch von der Drehrichtung des Reibringes ab, so dass der verstellbare Endanschlag 1240 je nach Drehsinn des Reibrings unterschiedlich eingestellt werden muss. Deshalb ist es vorteilhaft, wenn je nach Drehrichtung des Reibrings der Drehmagnet 1242 entsprechend der benötigten Endposition des Endanschlagsbolzens 1241 betätigt wird. An dieser Stelle sei nochmals angemerkt, dass neben dem Ausführungsbeispiel mit vorgeschlagenem Drehmagneten 1242 auch eine rein mechanische Lösung über einen richtungsabhängigen Freilauf (hier nicht dargestellt) vorgesehen werden kann, wobei der Freilauf in Abhängigkeit von der Drehrichtung des Reibringes einen Endanschlagsbolzen 1241 entsprechend verlagert.

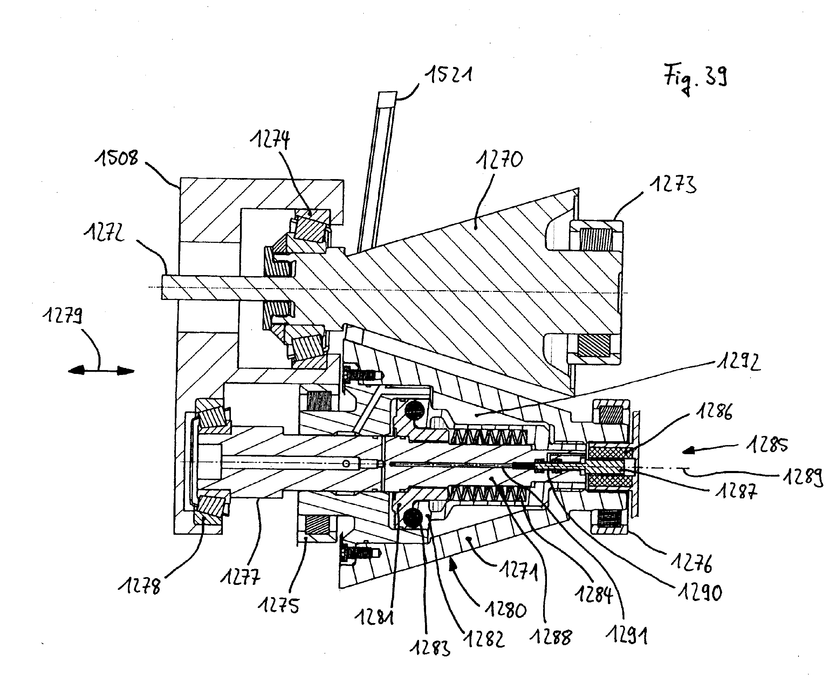

Die in der Figur 39 gezeigte Anordnung besteht im Wesentlichen aus einem Eingangskegel 1270, einem Ausgangskegel 2171 und einem Reibring 2021. Der Eingangskegel 1270 ist mit einer Antriebswelle 1272 wirkverbunden und zum einen mittels Zylinderrollenlager 1273 und zum anderen mittels Kegelrollenlager 1274 an einem Reibringgetriebegehäuse 2008 gelagert. Die Kegelrollenlager 1274 eignen sich besonders gut dazu, neben radial wirkenden Kräften zusätzlich auch axial wirkende Kräfte aufzunehmen.

Der Ausgangskegel 1271 ist dagegen lediglich mittels Zylinderrollenlager 1275 bzw. 1276 an dem Reibringgetriebegehäuse 2008 gelagert. Der Ausgangskegel 1271 ist mit einer Abtriebswelle 1277 wirkverbunden. Die Abtriebswelle 1277 ist zum einen unmittelbar an dem Ausgangskegel 1271 gelagert und zusätzlich mittels Kegelrollenlager 1278 an dem Reibringgetriebegehäuse 2008. Durch die Lager 1274, 1278, 1273, 1275 und 1276 sind der Eingangskegel 1270 und der Ausgangskegel 1271 in axialer Richtung 1279 derart gegeneinander verspannt, dass notwendige Anpresskräfte zwischen dem Eingangskegel 1270, dem Reibring 1521 und dem Ausgangskegel 1271 aufgebracht werden, um Kräfte, insbesondere Drehmomente, zwischen diesen Bauteilen problemlos übertragen zu können. Zum Verspannen bzw. zum Erzeugen einer zusätzlichen Anpresskraft ist zwischen der Antriebswelle 1277 und dem Ausgangskegel 1271 eine Anpresseinrichtung 1280 vorgesehen. Mittels der Anpresseinrichtung 1280 besteht die Möglichkeit einen Abstand in axialer Richtung 1279 zwischen dem Ausgangskegel 1271 und dem Kegelrollenlager 1278 an der Antriebswelle 1277 zu variieren bzw. insbesondere im verspannten Zustand, entsprechend variierende Anpresskräfte zu erzeugen.

Das Variieren der Anpresskräfte zwischen dem Eingangskegel 1270, dem Ausgangskegel 1271 und dem Reibring 1521 ist vorteilhaft, da beim Verlagern des Reibringes 1571 nicht nur das Übersetzungsverhältnis sondern auch auf die Anordnung wirkende Kräfte, insbesondere Drehmomente und Flächenanpresskräfte, sich ändern. Um die Anpresskräfte und damit auch die Reibverbindung zwischen den beiden Reibkegeln 1270, 1271 und dem Reibring 1521 an diese unterschiedliche Betriebsbedingungen vorteilhaft anpassen zu können, wirkt die Anpresseinrichtung 1280 nicht nur mit einer konstanten Kraft, sondern kann zusätzlich eingestellt werden. Hierzu umfasst die Anpresseinrichtung 1280 eine erste Anstellscheibe 1281 und eine zweite Anstellscheibe 1282, zwischen denen eine Kugel 1283 auf entsprechenden Führungsbahnen (hier nicht explizit dargestellt) der einzelnen Anstellscheiben 1281, 1282 geführt ist. Die Führungsbahnen für die Kugeln 1283 sind derart ausgestaltet, dass ein erhöhtes Drehmoment eine Rotation der beiden Anstellscheiben 1281, 1282 zueinander bedingt, welche wiederum dazu führt, dass sich die Kugeln 1283 entlang der Führungsbahn verlagern, wodurch die Anstellscheiben 1281, 1282 auseinander gedrückt werden. Auf diese Weise erzeugt die Anpresseinrichtung 1280 eine vom Ausgangsdrehmoment abhängige Anpresskraft. Vorteilhafter Weise hat die hier beschriebene Anordnung als mechanische Einrichtung extrem kurze Reaktionszeiten und kann insbesondere auf Stöße im ausgangsseitigen Antriebsstrang sehr gut reagieren.

Zusätzlich zu der Wirkungsweise der Kugeln 1283 werden die Anstellscheiben 1281, 1282 mittels einer Federanordnung 1284 auseinandergedrückt, und die Federanordnung 1284 stellt vorliegend eine gewisse Grundlast der Anpresseinrichtung 1280 bereit.

Da sich die Kennlinie der vorliegenden Anpresseinrichtung 1280 nur bedingt optimieren lässt, weist die Anpresseinrichtung 1280 eine Kraftkompensation, insbesondere für Teillastbereiche, auf. Diese erfolgt mittels einer hydraulischen Druckreguliereinrichtung 1285, die in diesem Ausführungsbeispiel einen Hubmagneten 1286 und einen mit dem Antriebskegel 1271 umlaufenden magnetischen Kolben 1287 aufweist. Der Hubmagnet 1286 ist ortsfest in dem Reibringgetriebegehäuse 1508 befestigt. Der magnetische Kolben 1287 dagegen ist in einer Zusatzwelle 1288 beweglich gelagert.

Die Zusatzwelle 1288 kann mit dem Ausgangskegel 1271 umlaufen und hierbei den magnetischen Kolben 1287 der hydraulischen Druckreguliereinrichtung 1285 "mitnehmen", so dass der magnetische Kolben 1278 mit dem Ausgangskegel 1271 um dessen Rotationsachse 1289 rotiert. Hierzu weist die Zusatzwelle 1288 eine Lagerungsbohrung 1290 für den magnetischen Kolben 1287 auf, wobei die Lagerungsbohrung 1290 in eine Hydraulikölbohrung 1291 übergeht. Die Hydraulikölbohrung 1291 wiederum ist mit einem Ölraum 1292 des Ausgangskegels 1271 wirkverbunden.

Mittels des in dem Hydraulikölraum 1292 bevorrateten Hydrauliköls können die Kräfte welche auf die zweite Anstellscheibe 1282 mittels der Federanordnung 1284 und/oder welche über die Kugeln 1283 von der ersten Anstellscheibe 1281 übertragen werden, kompensiert werden.

Um nun einen entsprechenden Druckausgleich in dem Hydraulikölraum 1292 vornehmen zu können, wird der magnetische Kolben 1287 mittels des Hubmagnets 1286 entlang der Rotationsachse 1289 der Ausgangswelle 1271 axial verschoben. Je nachdem, wie der magnetische Kolben 1287 durch den Hubmagneten 1286 angeregt und entlang der Rotationsachse 1288 axial verlagert wird, vergrößert sich das Volumen der Lagerungsbohrung 1290, wodurch in dieser Lagerungsbohrung 1290 verschiedene Hydrauliköldrücke eingestellt werden. Diese Druckvariationen übertragen sich über die Ölhydraulikbohrung 1291 auf den Ölraum 1292, so dass hierüber die von dem Hydrauliköl des Hydraulikölraums 1292 auf die zweite Anstellscheibe 1282 wirkende Kräfte unterschiedlich einstellen lassen.

Die beschriebene hydraulische Druckreguliereinrichtung 1295 der Anpresseinrichtung 1280 baut besonders kompakt und benötigt daher sehr wenig Bauraum. Vorteilhafter Weise ist sie nahezu vollständig innerhalb des Ausgangskegels 1271 anordenbar. Lediglich der Hubmagnet 1286 als Gehäuse festes und damit statisch befestigtes Bauteil benötigt eine Lagerung an einem Reibringgetriebebauteil, welches der Ausgangswelle 1271 nicht unmittelbar zugehörig ist. Besonders vorteilhaft ist es in diesem Zusammenhang, dass der mit dem Hubmagneten 1286 zusammenwirkende magnetische Kolben 1287 als dynamisch bewegtes Bauteil der hydraulischen Druckreguliereinrichtung 1285 mittelbar oder unmittelbar an dem Ausgangskegel 1271 verlagerbar gelagert ist. Im vorliegenden Ausführungsbeispiel ist der magnetische Kolben 1287 besonders betriebssicher an der Zusatzwelle 1288 des Ausgangskegels 1271 gelagert.

Es versteht sich, dass durch den Hubmagneten 1286 nicht unbedingt ein Kolben einer hydraulischen Anordnung angetrieben werden muss. Es kann vielmehr auch jedes andere dynamische Bauteil einer Anpresseinrichtung, insbesondere einer kompensierend wirksamen bzw. motorisch angetriebenen Anpresseinrichtung entsprechend angetrieben werden.

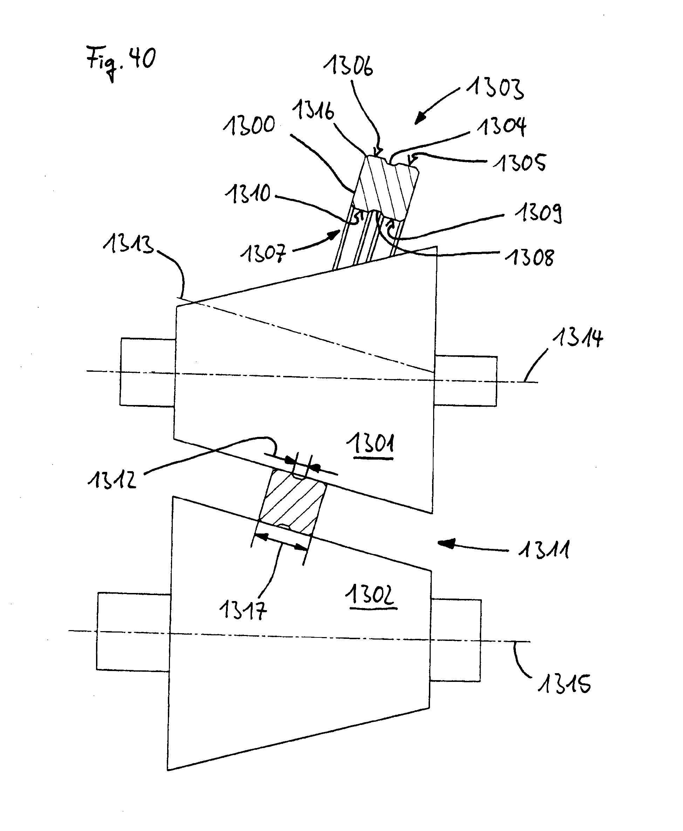

Entsprechend der Darstellung nach Figur 40 wird ein geteilter Reibring 1300 für ein Kegelreibringgetriebe mit einem ersten Reibkegel 1301 und mit einem zweiten Reibkegel 1302 vorgeschlagen. Der geteilte Reibring 1300 weist an seiner äußeren Lauffläche 1303 einen Spalt 1304 auf, welcher die äußere Lauffläche 1303 in eine erste Laufflächenhälfte 1305 und in eine weitere Laufflächenhälfte 1306 teilt. Darüber hinaus weist der geteilte Reibring 1300 an seiner inneren Lauffläche 1307 einen inneren Spalt 1308 auf, der die innere Lauffläche 1307 in eine erste innere Laufflächenhälfte 1309 und in eine zweite innere Laufflächenhälfte 1310 teilt.

Durch die geteilte äußere Lauffläche 1303 und die geteilte innere Lauffläche 1307 lässt sich die Stabilität des geteilten Reibringes 1303 gegen Kippmomente bezüglich eines Spaltes 1311 zwischen den beiden Reibkegeln 1301 und 1302 (gegen Drehbewegungen in der Zeichenebene von Figur 40) verbessern, da durch die geteilten Laufflächen 1303, 1307 bei gleicher Flächenpressung größere Hebel realisiert werden können.

Es versteht sich, dass die geteilten Laufflächen 1303, 1307 unabhängig hiervon noch Rillungen (der Übersichtigkeit halber hier nicht explizit gezeigt) aufweisen können. Mittels derartiger Rillungen wird eine bessere Fluidverteilung sowie eine verbesserte Anpassung der Flächenpressung erzielt. Es hat sich herausgestellt, dass die vorgenannten Effekte bei breiteren Spalten nicht mehr wesentlich wirksam beeinflusst werden können, so dass bei einer Spaltbreite 1312 von über 10 % der Breite der ersten Laufflächenhälfte 1305 bzw. 1309 und der zweiten Laufflächenhälfte 1306 bzw. 1310 die Stabilisierung des geteilten Reibringes 1300 wesentlich zum Tragen kommt.

Der geteilte Reibring 1300 rotiert hierbei um eine Reibringrotationsachse 1313, während der erste Reibkegel 1301 um eine Reibkegelachse 1314 und der zweite Reibkegel 1302 um eine Reibkegelachse 1315 rotiert. Der geteilte Reibring 1300 umschließt hierbei den ersten Reibkegel 1301 und ist zumindest teilweise in dem Spalt 1311 zwischen dem ersten Reibkegel 1301 und dem zweiten Reibkegel 1302 angeordnet. Gemäß der äußeren Gestalt der Reibkegel 1301, 1302 weist die Reibringachse 1313 einen Winkel 1316 gegenüber den Reibkegelrotationsachsen 1314 und 1315 auf. Er kann jedoch auch ohne Weiteres mit diesem Spalt in kegelförmigen Laufflächen parallel zu den Kegelachsen ausgereichtet werden.

Somit zählen die Bereiche der Spalten 1304, 1308 ebenso wenig zu der effektiven Lauffläche 1303 bzw. 1307 wie etwa an den geteilten Reibring 1300 angebrachte Fasen (der Übersichtigkeit halber nur beispielhaft beziffert). Der geteilte Reibring 1300 hat eine Gesamtbreite 1317. Es versteht sich, dass ein derartiger Spalt auch lediglich auf einer der beiden Laufflächen vorgesehen sein kann.

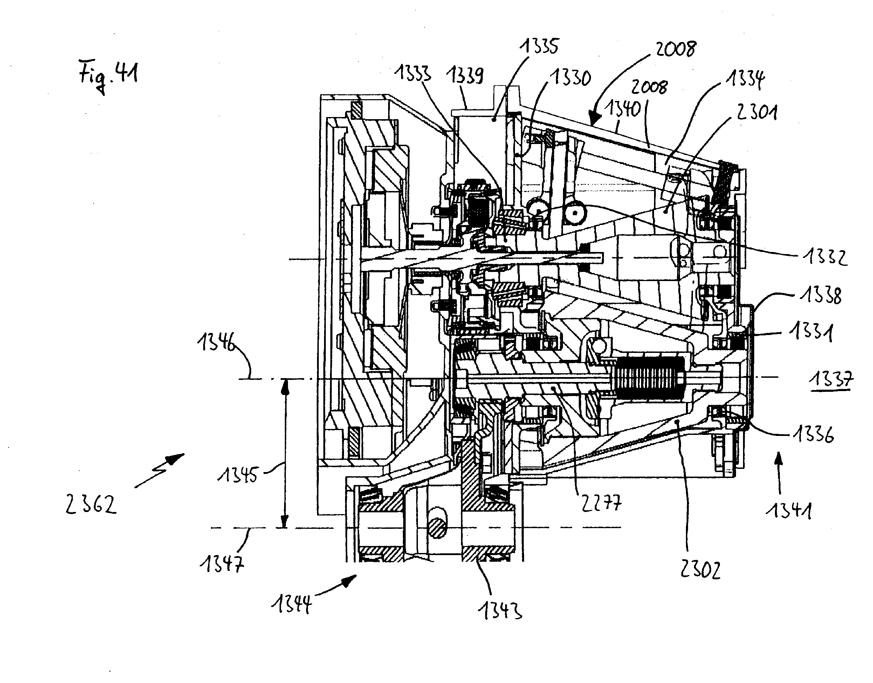

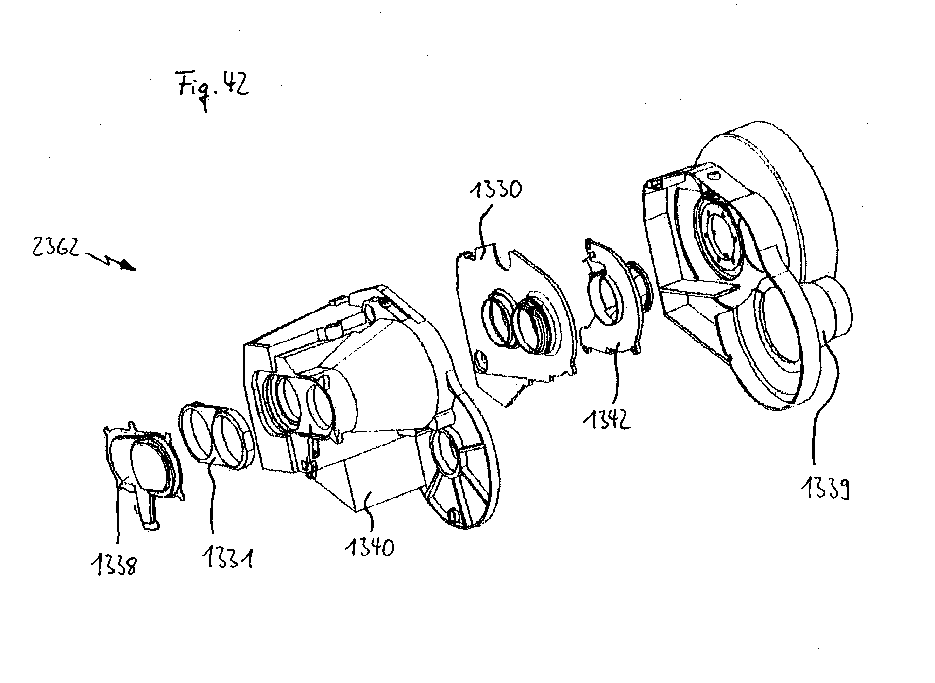

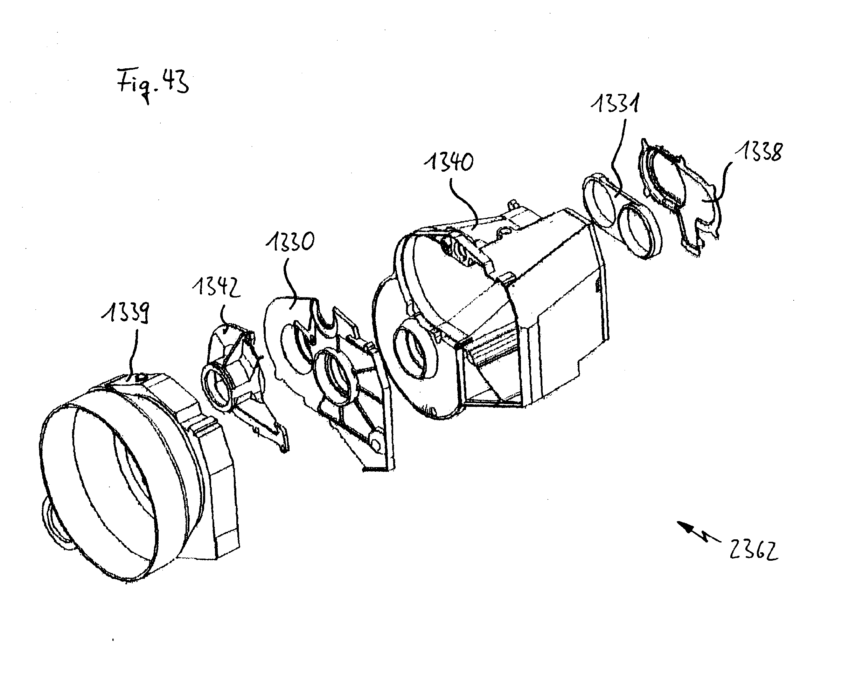

Das in den Figuren 41 bis 43 dargestellte Kegelreibringgetriebe 2363 entspricht in seinem konstruktiven Aufbau im Wesentlichen den hier behandelten Getrieben. Ein wesentlicher Unterschied ist, dass die Reibkegel 2301, 2302 in diesem Ausführungsbeispiel sowohl in einer ersten separaten Lagerbrille 1330 aus Stahl als auch in einer weiteren separaten Lagerbrille 1331 aus Stahl gelagert sind. Es versteht sich, dass zum Herstellen der separaten Lagerbrillen 1330 und 1331 auch ein anderes, entsprechend geeignetes Material genutzt werden kann.

Insbesondere auf Grund der stabilen Lagerbrillen 1330, 1331 aus Stahl ist es möglich, dass das übrige Kegelreibringgehäuse 2008 zum einen aus leichterem Material, wie beispielsweise aus Aluminium, und zum anderen besonders dünnwandig gefertigt werden kann. Die Lagerbrillen 1330 und 1331 nehmen hierbei vorzugsweise die kompletten Hauptkräfte, wie etwa Radial- und die Axialkräfte, auf, die im Wesentlichen durch das Verspannen der beiden Reibkegel 2301 und 2302 entstehen. Vorteilhafter Weise muss dementsprechend das Kegelreibringgehäuse 2008 an sich lediglich nur Nebenkräfte aufnehmen, wie beispielsweise Momentenkräfte sich einander verdrehende Lagerbrillen 1330, 1331, so dass es, wie erwähnt, wesentlich filigraner und damit leichter konstruiert werden kann. Dies führt zu einer enormen Gewichtsersparnis gegenüber herkömmlichen Getrieben. Prinzipiell reicht es vorliegend gegebenenfalls schon aus, die Reibkegel 2301, 2302 an nur einer ihrer Seiten in einer Lagerbrille zu lagern.

Allein schon auf Grund der Tatsache, dass durch die Lagerbrillen 1330 und 1331 hinsichtlich eines Getriebegehäuses 2008 viel Gewicht eingespart wird, ist die Lagerung wenigstens einer Seite der beiden Reibkegel 2301, 2302 in einer gemeinsamen Lagerbrille 1330 oder 1331, die vorzugsweise aus einem vom übrigen Getriebegehäuse 2008 abweichenden Material gebildet ist, auch unabhängig von den übrigen Merkmalen vorliegender Erfindung vorteilhaft. Besonders vorteilhaft sind dementsprechend zwei solcher Lagerbrillen 1330, 1331 für jeweils eine Seite der Reibkegel 2301, 2302.

Vorzugsweise kann eine Dichtung, insbesondere eine Wellendichtung 1332 für die an der Lagerbrille 1330 gelagerten Reibkegelwelle 1333 des Reibkegels 2301, unmittelbar an der Lagerbrille 1330 vorgesehen sein. Hierdurch kann die Lagerbrille 1330 für sich als eine Fluidraumtrennung wirken, so dass auf diesbezügliche zusätzliche dichtende Baugruppen verzichtet werden kann. Dieses ist besonders dann vorteilhaft, wenn durch die stählerne Lagerbrille 1330 Getriebeglieder umfassende Räume voneinander getrennt werden sollen.

Im vorliegenden Ausführungsbeispiel trennt beispielsweise die Lagerbrille 1330 einen mit einem Traktionsfluid gefüllten Fluidraum 1334, in welchem die Reibkegel 2301, 2302 umlaufen, von einem angrenzenden weiteren Getrieberaum 1335.

Im Bereich der Lagerbrille 1331 ist eine Reibkegelzapfendichtung 1336 an dem Reibkegelgehäuse 2008 vorgesehen. Die Lagerbrille 1331 und die Reibkegelzapfendichtung 1336 sind gegenüber einer Umgebung 1337 durch ein Abdeckblech 1338 abgeschirmt.

Um die Zahl der Befestigungselemente für die vorliegenden Lagerbrillen 1330, 1331 zu minimieren und hiermit unter anderem Bauraum einzusparen, ist es vorteilhaft, wenn wenigstens eine der Lagerbrillen 1330, 1331 lediglich zwischen einer ersten Gehäusehälfte 1339 des Kegelreibringgetriebegehäuses 2008 und einer weiteren Gehäusehälfte 1340 des Kegelreibringgetriebegehäuses 2008 eingeklemmt ist. Hierdurch erleichtert sich auch die Herstellung, da für die Lagerbrille 1330 keine separaten Befestigungselemente, wie Schraubenlöcher oder ähnliches, vorgesehen werden müssen. Andererseits kann es günstig sein, eine Dichtung über ein einen Getriebegliederraum umgebendes Gehäuse zu realisieren, was aus dem Stand der Technik an sich bereits bekannt ist.

Im Zusammenhang mit der vorbeschriebenen Lagerbrille 1331, und wenn beispielsweise auf lediglich einer Seite der Lagerbrille 1331 von der Lagerbrille 1331 gelagerte Getriebeglieder 2302 zu finden sind, kann es vorteilhaft sein, die Lagerbrille 1331 außerhalb eines abgedichteten Raumes, wie etwa des Fluidraumes 1334, anzuordnen. Auf diese Weise ist die Lagerbrille 1331 leicht zugänglich und es entfällt eine aufwändige Brillenabdichtung. Die Lagerbrille 1331 kann dann auf ihrer den Getriebegliedern 2302 abgewandten Seite 1341 kostengünstig mit einem einfachen Abdeckblech 1338 abgedeckt werden.

Um die relativ groß bauende Lagerbrille 1330 besonders gut an dem Kegelreibringgetriebegehäuse 2008 befestigen zu können, weist das Kegelreibringgetriebe 2363 zusätzlich einen Lagerbrillenansatz 1342 auf. Mittels des Lagerbrillenansatzes 1342 gelingt eine passgenaue Verbindung zwischen der Lagerbrille 1330 und dem ersten Gehäuseteil 1339.

Es versteht sich, dass insbesondere die Lagerbrille 1330 so ausgestaltet werden kann, dass an ihr ein Getriebeglied 1343 eines Differenzialgetriebes, welches Bestandteil des Kegelreibringgetriebes 2363 ist, angeflanscht werden kann. Vorteilhafter Weise lagert die stählerne Lagerbrille 1330 das Getriebeglied 1343 des Differenzialgetriebes 1344 gegenüber dem zweiten Reibkegel 2302, insbesondere gegenüber einer Abtriebswelle 2277 des zweiten Reibkegels 2302, derart stabil, dass sich ein Abstand 1345 einer Abtriebswellenrotationsachse 1346 zu einer Differenzialgetrieberotationsachse 1347 hinsichtlich Temperatur- und Lastschwankungen besonders gering, idealer Weise gar nicht, verändert. Hierdurch wird erzielt, dass die miteinander wirkende Bauteilgruppe Abtriebswelle 2277 und Getriebeglied 1343 des Differenzialgetriebes 1344 in nahezu allen Betriebszuständen möglichst verschleißarm und geräuscharm miteinander wechselwirken.

Darüber hinaus können ebenfalls Kräfte zwischen dem Differenzialgetriebe 1344 und dem Kegelreibringgetriebe 263, insbesondere zwischen dem Getriebeglied 1343 und der Abtriebswelle 2277, besonders vorteilhaft mittels der Lagerbrille 1330 übertragen werden, ohne dabei das Kegelreibringgetriebegehäuse 2008 zu belasten.

Wie unmittelbar ersichtlich, ist es möglich, die beiden Lagerbrillen in einer variierten Ausführungsform über ein separates Gestell, beispielsweise über Stangen bzw. über ein Gestänge miteinander zu verbinden, um so das Gehäuse weiter zu entlasten.

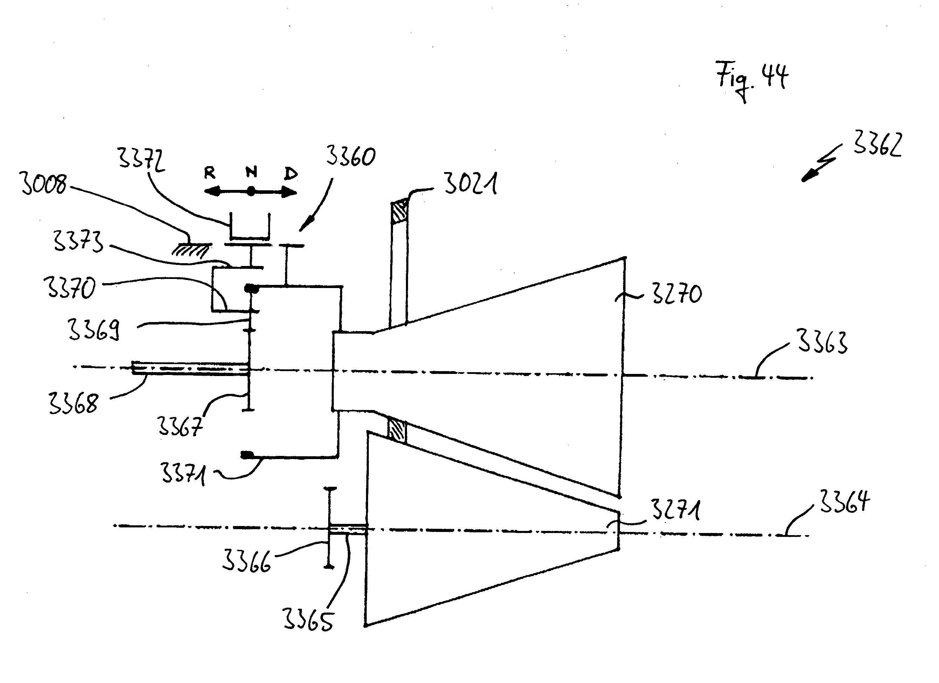

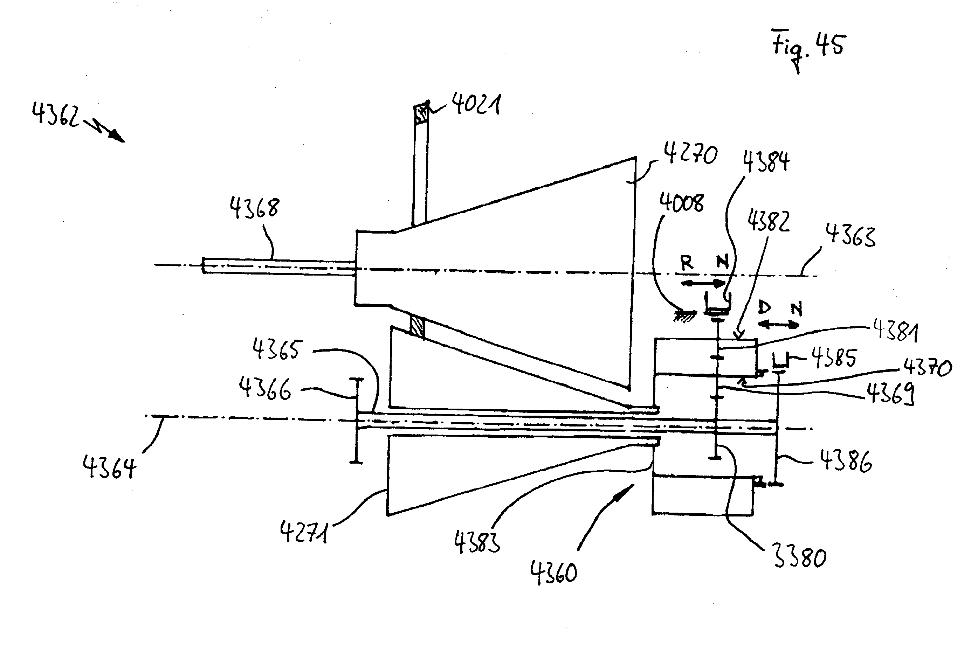

Wie in den Figuren 44 und 45 dargestellt, kann ein Rückwärtsgang R bei einem Kegelreibringgetriebe 3363 (Figur 44), 4363 (Figur 45), vorzugsweise unabhängig von den übrigen Merkmalen vorliegender Erfindung, auch durch ein Planetengetriebe 3360 oder ein Doppelplanetengetriebe 4360 realisiert werden. Insbesondere mit dem Doppelplanetengetriebe 4360 kann bei kleinem Bauraum und einer minimalen Anzahl von Getriebegliedern im Zusammenspiel mit den durch ein Kegelreibringgetriebe 4362 vorgegebenen Drehrichtungen ein Rückwärtsgang R realisiert werden, bei welchem ein Drehmoment nicht über stillstehende Zahnräder übertragen werden muss, wie dieses bei Anordnungen aus dem Stand der Technik der Fall ist.

Das Planetengetriebe 3360 des Kegelreibringgetriebes 3362 ist eingangsseitig vor einem Eingangskegel 3270 des Kegelreibringgetriebes 3362 angeordnet. Der Eingangskegel 3270 steht über einen Reibring 3021 mit einem Ausgangskegel 3271 des Kegelreibringgetriebes 3362 in Wirkkontakt. Der Eingangskegel 3270 rotiert auf einer Eingangskegelachse 3363, während der Ausgangskegel 3271 auf einer Ausgangskegelachse 3364 rotiert. An dem Ausgangskegel 3271 ist abtriebsseitig eine Ausgangswelle 3365 angeordnet, die ein Ausgangswellensonnenrad 3366 aufweist.

Das Planetengetriebe 3360 wird über ein Eingangswellensonnenrad 3367 einer Eingangswelle 3368 betrieben. Mit dem Einganswellensonnenrad 3367 steht unmittelbar ein Planetenrad 3369 in Kontakt. Das Planetenrad 3369 rotiert nicht nur um seine Planetenradachse 3370, sondern rotiert gleichzeitig um die Eingangswellenachse 3363 und kämmt dabei mit einem Hohlrad 3371 des Planetengetriebes 3360. Mittels des Hohlrades 3367, welches ebenfalls auf der Eingangswellenachse 3363 rotiert, werden Drehmomente aus der Eingangswelle 3368 auf den Eingangskegel 3270 übertragen.

Ist ein Schaltgestänge 3372 des Planetengetriebes 3360 in einer Neutralstellung N, so läuft das Planetenrad 3369 um die Eingangskegelachse 3363 um und kämmt dabei zum einen mit dem Eingangswellensonnenrad 3367 und zum anderen mit dem Hohlrad 3371 derart, dass zwischen der Eingangswelle 3368 und dem Hohlrad 3371 keine ausreichenden Antriebskräfte übertragen werden, um den Eingangskegel 3270 in Rotation zu versetzen.

Wird das Schaltgestänge 3372 auf die Position R verschoben, so wird ein Steg 3373 des Planetenrades 3369 an einem Kegelreibringgehäuse 3008 festgelegt, so rotiert das Planetenrad 3369 um seine Planetenradachse 3370 und das Hohlrad 3367 rotiert hierbei gegensinnig zu dem Eingangssonnenrad 3367. Somit ist ein Rückwärtsgang realisiert.

Wird das Schaltgestänge 3372 von der Neutralposition N in Richtung der Position D verschoben, wird der Steg 3373 an dem Hohlrad 3371 festgelegt, sodass das Planetenrad 3369 nicht um die Eingangswellenachse 3363 rotieren kann. Somit ist das Planetenrad 3369 gegenüber dem Hohlrad 3371 festgelegt, sodass zwischen dem Hohlrad 3371 und dem Planetenrad 3369 keine Relativbewegung möglich ist. Hierdurch wird eine Drehbewegung des Eingangswellensonnenrades 3367 über das Planetenrad 3369 auf den Eingangskegel 3270 übertragen, wodurch ein Vorwärtsgang realisiert ist.

Bei dem Kegelreibringgetriebe 4362 ist die Eingangswelle 4368 direkt mit dem Eingangskegel 4270 verbunden, sodass eine Kraftübertragung von der Eingangswelle 4368 auf den Eingangskegel 4270 unmittelbar erfolgt. In diesem Ausführungsbeispiel ist das Doppelplanetengetriebe 4360 ausgangsseitig zwischen dem Ausgangskegel 4271 und der Ausgangswelle 4375 angeordnet.

Das Doppelplanetengetriebe 4360 weist ein Ausgangswellensonnenrad 3380 auf, welches mit einem ersten Planetenrad 4369 mit einer ersten Planetenradachse 4370 kämmt. Mit dem ersten Planetenrad 4369 kämmt wiederum ein zweites Planetenrad 4381, welches um eine zweite Planetenradachse 4382 rotiert. Die beiden Planetenräder 4369 und 4381 sind über ein Planetenradgestell 4383 unmittelbar mit dem Ausgangskegel 4271 verbunden.

Um insbesondere das zweite Planetenrad 4381 festzulegen, weist das Doppelplanetenrad 4360 ein erstes Schaltgestänge 4384 auf, worüber ein Rückwärtsgang geschaltet werden kann. Mittels eines zweiten Schaltgestänges 4385 kann das Planetenradgestell 4383 gegenüber der Abtriebswelle 4365 festgelegt werden, sodass ein Vorwärtsgang realisiert ist.

Wird das erste Schaltgestänge 4384 in die Position R verschoben, kann das zweite Planetenrad 4381 nicht mehr um die zweite Planetenradachse 4382 rotieren, sodass das erste Planetenrad 4369 um die Ausgangskegelachse 4364 rotiert. Dabei dreht sich die Umlaufrichtung des Ausgangskegels 4271 um, sodass die Abtriebswelle 4365 entgegensetzt umläuft.

Wird hingegen das zweite Schaltgestänge 4385 in die Position D gebracht, sodass das Planetenradgestell 4383 und die Abtriebswelle über ein zweites Wellensonnerad 4386 miteinander fest verbunden sind, wird eine Rotationsrichtung des Ausgangskegels 4271 über das Planetenradgestell 4383 unmittelbar an das zweite Ausgangswellensonnenrad 4386 und damit auch auf die Ausgangswelle 4365 übertragen. Hierdurch ist ein Vorwärtsgang realisiert.

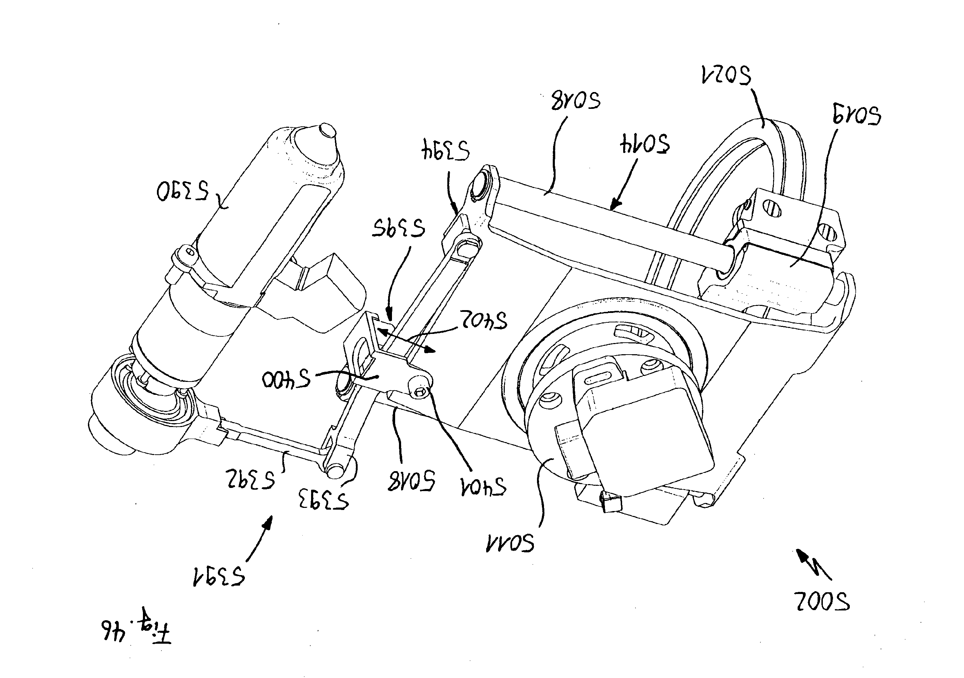

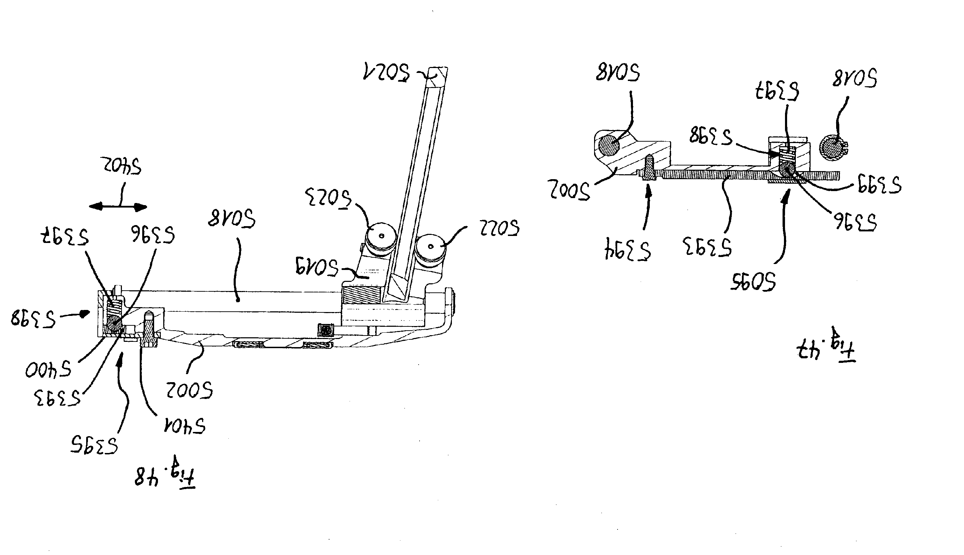

Der in den Figuren 46 bis 48 gezeigte Käfig 5002 weist eine axiale Führungseinrichtung 5014 mit zwei Führungsachsen 5018, einer linken und einer rechten, auf. An den Führungsachsen 5018 ist eine Verstellbrücke 5019 axial frei verlagerbar geführt. Mit der Verstellbrücke 5019 wird ein Reibring 5021, der zwischen zwei Reibkegeln (nicht gezeigt) Kräfte überträgt, mittels eines ersten Rollenhalters 5022 und mittels eines zweiten Rollenhalters 5023 gehalten.

Der Käfig 5002 ist an einem Reibringgetriebegehäuse (hier nicht dargestellt) um eine Drehachse 5011 gelagert. Die Verstellung des Käfigs 5002 um die Drehachse 5011 geschieht mittels eines Exzentermotors 5390, der mittels eines Anlenkers 5391 mit dem Käfig 5002 wirkverbunden ist. In diesem Ausführungsbeispiel ist der Anlenker 5091 zweigeteilt und besteht aus einer Anlenkerstange 5092, welche an dem Exzentermotor 5390 befestigt ist, und aus einer Käfiganlenkerstange 5093, welche unmittelbar über einen Käfiganlenkerdrehpunkt 5094 an dem Käfig 5002 befestigt ist.

Mittels des Anlenkers 5091 werden geringe Anstellbewegungen des Exzentermotors 5390 exakt an den Käfig 5002 übertragen, sodass dieser sich um die Drehachse 5011 dreht, wodurch sich der Reibring 5021 gegenüber den Reibkegeln (hier nicht dargestellt) anstellt und mit der Verstellbrücke 5019 entlang der Führungsachsen 5018 entsprechend verfährt und sich neu positioniert.

Damit Störungen im Bereich des Exzentermotors 5390 die Funktion des Käfigs 5002 nicht derart blockiert, dass der Betrieb des Käfigs 5002 vollständig ausfällt, ist für solche Notsituationen im Bereich der Käfiganlenkerstange 5393 eine Überlastsicherung 5395 vorgesehen. Bauteile, wie eine Positionierkugel 5396 und eine Positionierfeder 5397, der Überlastsicherung 5395 sind am Käfig 5002 beziehungsweise innerhalb einer dafür vorgesehenen Aufnahme 5398 am Käfig 5002 angeordnet.

Die Käfiganlenkerstange 5393 ist oberhalb der Aufnahme 5398 derart platziert, dass die Positionierkugel 5396 von der Federkraft der Positionierfeder 5397 in eine Positionierkugelausnehmung 5399 gedrückt wird. Hierdurch ist die Käfiganlenkerstange 5393 im normalen Betriebszustand des Käfigs 5002 und des Exzentermotors 5390 definiert gegenüber dem Käfig 5002 gehalten und fixiert. Damit die Käfiganlenkerstange 5393 durch die Federkraft der Positionierfeder 5397 nicht weggedrückt wird, umfasst die Überlastsicherung 5395 eine Überlastsicherungsabdeckung 5400, welche c-förmig den Käfig 5002 im Bereich der Überlastsicherung 5395 umgreift. Damit die Überlastsicherungsabdeckung 5400 sicher an Ihren angestammten Platz verbleibt, ist sie mittels einer Sicherungsschraube 5401 zusätzlich an dem Käfig 5002 befestigt.

Sollte während des Betriebs eine Überlast auftreten, kann die Käfiganlenkerstange 5393 innerhalb der Überlastsicherung 5395 gemäß den Richtungen des Doppelfeiles 5402 ausweichen, sodass Schäden an dem Käfig 5002, an dem Anlenker 5391 oder an dem Exzentermotor 5390 zumindest bei geringen Überlasten verhindert werden.

Die Überlastsicherung 5395 wird ausgelöst, sobald die Überlastkräfte die Kräfte der Positionierfeder 5397 sowie der Reibwiderstände zwischen der Käfiganlenkerstange 5393 und der Positionierkugel 5396, dem Käfig 5002 sowie der Überlastsicherungsabdeckung 5400 übersteigen.

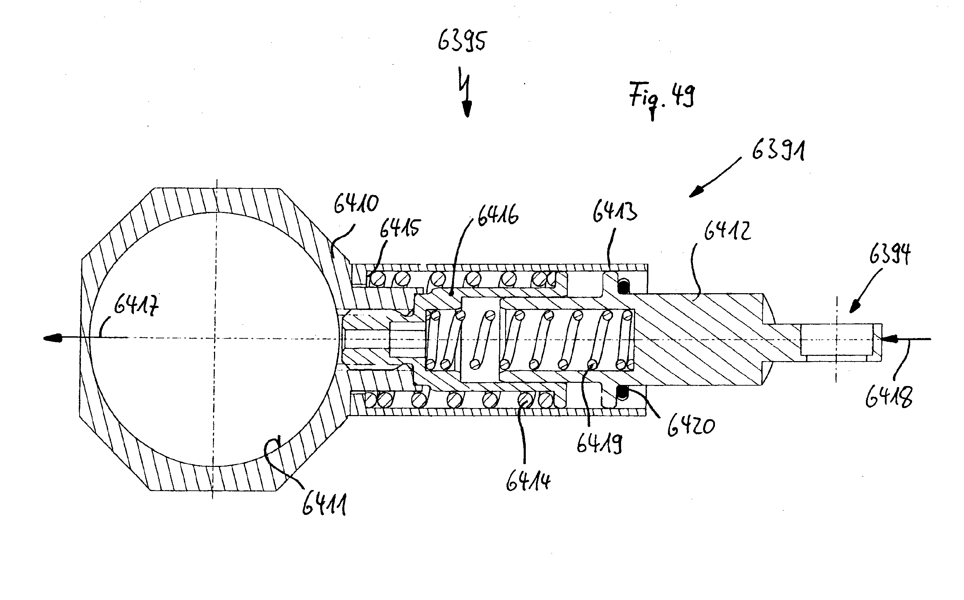

Die in der Figur 49 gezeigte Überlastsicherung 6395 ist innerhalb eines Anlenkers 6391 angeordnet, sodass die Mechanik der Überlastsicherung 6395 vor äußeren Einflüssen durch den Anlenker 6391 besonders gut geschützt ist. Die Überlastsicherung 6395 weist ein Zugelement 6410 auf, welches dafür vorgesehen ist, unmittelbar an einem Führungskäfig (hier nicht dargestellt) für eine Verstellbrücke (hier nicht dargestellt) mittels eines Käfiganlenkerdrehpunkts 6394 befestigt zu werden. Darüber hinaus weist die Überlastsicherung 6395 ein Druckelement 6412 auf, welches einen Lagerring 6411 zum Koppeln mit einer Exzenterscheibe (hier nicht dargestellt) eines Exzenterantriebs (hier nicht dargestellt) umfasst. Mittels des Lagerrings 6411 ist der Anlenker 6391 sicher mit dem Exzenterantrieb verbindbar. Sowohl das Zugelement 6410 als auch das Druckelement 6412 sind in einem Anlenkerrohr 6413 verlagerbar zu einander geführt.

Das Zugelement 6410 ist innerhalb des Anlenkerrohrs 6413 mittels einer ersten Druckfeder 6414 verspannt. Die Druckfeder 6414 stützt sich hierbei zum einen an einem Anlenkerrohrkragen 6415 des Anlenkerrohrs 6413 ab und zum anderen an einem Anlenkerflansch 6416, der an das Zugelement 6410 geschraubt ist. Derart eingeklemmt ist die erste Druckfeder 6414 entsprechend vorspannt. Mittels der ersten Druckfeder 6414 können Zugkräfte 6417, die auf den Anlenker 6391 wirken, von der Überlastsicherung 6395 kompensiert werden, indem sich das Zugelement 6410 relativ zu dem Anlenkerrohr 6413 und dem Druckelement 6412 in Richtung der Zugkräfte 6417 bewegt.

Um Druckkräfte 6418 zu kompensieren, weist die Überlastsicherung 6395 zwischen dem Druckelement 6412 und dem Zugelement 6410 beziehungsweise dem Anlenkerflansch 6416 eine zweite Druck-feder 6419 auf. Mittels der Federkraft der zweiten Druckfeder 6419 können Druckkräfte 6418, die unter einem kritischen Wert liegen, von der Überlastsicherung 6395 gut kompensiert werden. Hierzu federt das Druckelement 6412 in das Anlenkerrohr 6413 beziehungsweise in den Anlenkerflansch 6416 ein.

Im normalen Betriebszustand drückt die zweite Druckfeder 6419 das Druckelement 6412 von dem Zugelement 6410 weg, sodass das Druckelement 6412 im Normalfall an einem Sicherungsring 6420 anliegt, der an dem Anlenkerrohr 6413 angeordnet ist. Der Sicherungsring 6420 stellt in diesem Ausführungsbeispiel eine Sollbruchstelle der Überlastsicherung 6395 bereit, welche bei Überlast, die einen kritischen Wert überschreitet, zerstört wird.

Somit hat die vorliegende Überlastsicherung 6395 zum einen mit dem Sicherungsring 6420 ein zerstörbares Überlastsicherungsmittel, welches im vorliegenden Fall insbesondere bei Überlastdruckkräften, welche einen kritischen Wert übersteigen, zerstört wird. Zum anderen verfügt die Überlastsicherung 6395 mit dem federnd gelagerten Zugelement 6410 beziehungsweise Druckelement 6412 über zerstörungsfreie Überlastsicherungsmittel, mit denen dynamisch wirkende Überlastsicherungsmittel realisiert sind, die Überlastkräfte kompensieren, welche einen kritischen Wert nicht überschreiten. Hierbei sind die Federn jeweils derart stark gewählt, dass sich der Anlenker 6391 im Normalbetrieb starr darstellt und erst bei Überlast in gewünschter und vorstehend beschriebener Weise nachgibt.

Die vorstehend beschriebene Überlastsicherung 6395 baut besonders kompakt, da sie innerhalb des Anlenkers 6391 integriert ist, wobei der Anlenker 6391 beziehungsweise die Überlastsicherung 6395 unmittelbar zwischen einem Antrieb und einem diesbezüglichen Käfig angeordnet ist und wirkt.

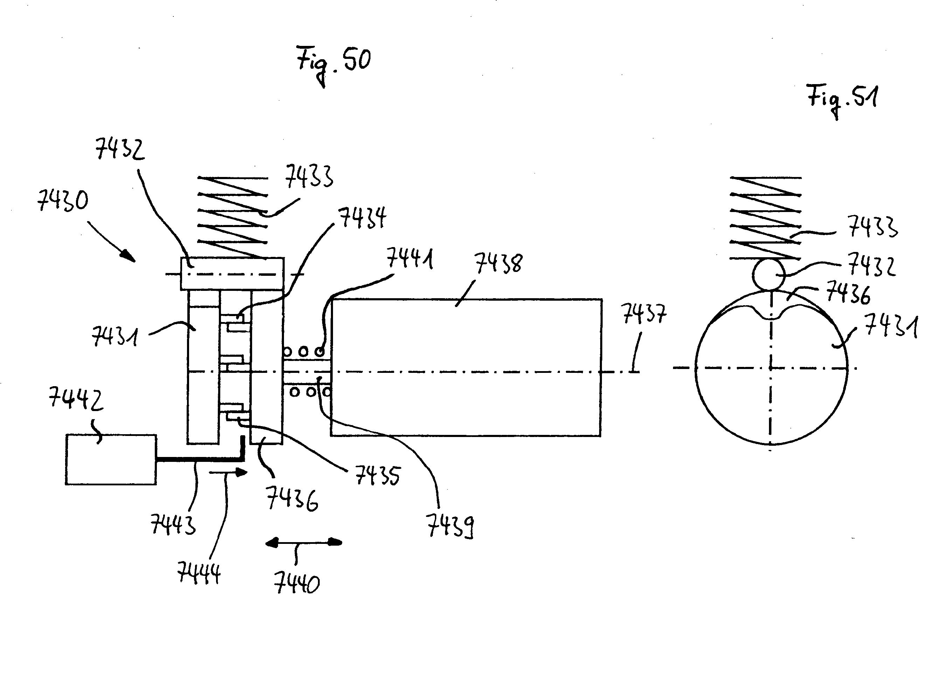

Alternativ oder kumulativ zu den in den Figuren 46 bis 49 dargestellten Überlastsicherungen kann eine Ausfallsicherung 7430, wie in den Figuren 50 bis 53 illustriert, hinsichtlich einer Verstellbrücke (nicht gezeigt) oder eines Führungskäfigs (nicht gezeigt) einer Verstellbrücke vorgesehen werden. Eine derartige Ausfallsicherung 7430 weist zum einen eine Nockenscheibe 7431, einen Nockenfolger 7432 und eine Nockenfolgerandrückfeder 7433 auf. Die Nockenscheibe 7431 der Ausfallsicherung 7430 steht im ordnungsgemäßen Betriebszustand mittels erster Mitnehmer 7434 der Nockenscheibe 7431 mit zweiten Mitnehmern 7435 einer Haltescheibe 4736 in Kontakt. Die Haltescheibe 7436 ist entlang einer Antriebsachse 7437 eines Antriebs 7438 auf einer Antriebswelle 4739 axial verschiebbar gemäß den Richtungen des Doppelfeiles 7440 gelagert.

Die Haltescheibe 7436 wird mittels einer Haltescheibenfeder 7441 in Richtung der Nockenscheibe 7431 gedrückt und fixiert, sodass ein Kraftfluss von dem Antrieb 7438 über die Antriebswelle 7439 und der Haltescheibe 7436 mit zweiten Mitnehmern 7435 auf die ersten Mitnehmer 7434 der Nockenscheibe 7431 und von dort auf den Käfig beziehungsweise auf die Verstellbrücke übertragen wird.

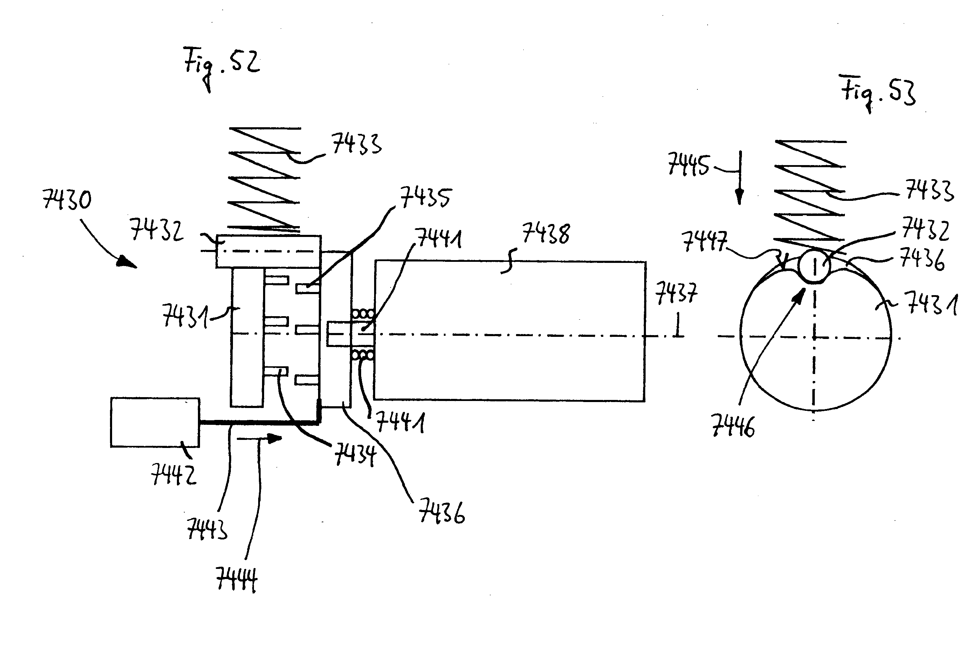

Um die Haltescheibe 7436 von der Nockenscheibe 7431 zu entkoppeln, ist ein Ausrücker 7442 vorgesehen, der mittels eines Ausrückerkolbens 7443 in der Lage ist, die Haltescheibe 7436 von der Nockenscheibe 7431 weg zu drücken, bis die ersten Mitnehmer 7434 und die zweiten Mitnehmer 7435 den Kontakt zueinander verlieren. Zum Entkoppeln wird der Ausrückerkolben 7434 einfach in Richtung 7444 bewegt, sodass die Haltescheibe 7436, wie in den Figuren 52 und 53 gezeigt, vollständig von der Nockenscheibe entkoppelt ist. Hierbei hat sich die Haltescheibe 7436 gegenüber der Antriebswelle 7439 relativ verlagert und näher an den Antrieb 7438 verschoben, sodass die Haltescheibenfeder 7441 zusammengestaut ist.

Ist die Haltescheibe 7436 durch den Ausrückerkolben 7443 von der Nockenscheibe 7431 entkoppelt, ist die Haltescheibe 7436 bis hinter den Nockenfolger 7432 verlagert, sodass der Nockenfolger 7432 auf Grund der Andrückkraft 7445 der Nockenfolgerandrückfeder 7433 in eine Senke 7446 der Nockenscheibe 7431 gedrückt wird (siehe insbesondere Figur 53).

Durch die hier vorgestellte Ausfallsicherung 7430 ist sichergestellt, dass bei einer Fehlfunktion des Antriebs 7438 die freie Verstellung eines Käfigs beziehungsweise einer Verstellbrücke gewährleistet ist, indem der Ausrücker 7442 die Nockenscheibe 7431 von dem Antrieb 7438 entkoppelt und dabei der Nockenfolger 7432 in die Senke 7446 des Nockenfolgers 7431 gedrückt wird. Dadurch wird die Nockenscheibe 7431 in einer Notlaufposition fixiert, sodass die Funktionsfähigkeit eines Reibringgetriebes, welches die Ausfallsicherung 7430 aufweist, gewährleistet ist. Die Notlaufposition liegt vor, wenn die Nockenscheibe 7431 derart ausgerichtet ist, dass der Nockenfolger 7432 in der Senke 7446 der Nockenscheibe 7431 angeordnet ist.

Die Federkraft der Nockenfolgerandrückfeder 7433 kann derart ausgelegt sein, dass ein Reibring eines Reibringgetriebes in der Lage ist, die Nockenscheibe 7431 in eine finale Ruheposition bzw. Notlaufposition, in welcher der Nockenfolger 7432 in der Senke 7446 angeordnet ist, zu drehen, sobald der Reibring einen entsprechenden Endanschlag (hier nicht gezeigt) erreicht und gegen diesen anläuft. Auf diese Weise lässt sich ohne weiteres eine zuverlässige Ausfallsicherung realisieren, die den Reibring mit einer vorgegebenen Verstellgeschwindigkeit beispielsweise in Richtung auf eine Anfahrposition verstellt, wobei der Reibring durch den Endanschlag dann in diese Position stabilisiert ist. Bei der beschriebenen Funktionsweise der Ausfallsicherung 7430 ist zu berücksichtigen, dass in der Regel ein Antrieb nur kleine Winkelausschläge vornehmen muss, wobei gegebenenfalls zwischen dem Antrieb und der Nockenscheibe 7431 ein geeignetes Getriebe (hier nicht dargestellt) vorgesehen werden kann. Insofern reicht in den meisten Anwendungsbereichen ein Höhenprofil 7447 einer Nockenkurve der Nockenscheibe 7431 in der Regel aus, um die Nockenscheibe 7431 in eine Notlaufposition zu halten.

Es versteht sich, dass auch die Haltescheibe 7436 mit einem Nocken versehen werden kann, der jedoch nicht im Arbeitsbereich einer Nockenscheibe angeordnet ist. Nach dem Beseitigen einer Störung, also wenn auch ein Ausrückerkolben eines Ausrückers wieder eingerückt ist, kann die Haltescheibe 7436 mittels eines Antriebs rotiert werden, bis ein Nocken der Haltescheibe 7436 den Nockenfolger 7432 erreicht. Dann kann eine Nockenfolgerandrückfeder 7441 entspannt werden, die bis dahin von einem Nockenfolger in einer Senke gedrückt wurde, sodass eine Kupplung zwischen den beiden Scheiben 7431 und 7436 wieder eingreifen kann. Wird dann die gesamte Anordnung wieder zurück gedreht, befindet sie sich wieder in ihrer normalen Betriebsposition.

**Bezugszeichenliste:**

| | | | |
|---|---|---|---|
| 1 | Anordnung | 104 | elastische Lagereinrichtung |
| 2 | Käfig | 110 | Anstellhebel |
| 3 | Blechkonstruktion | 111 | Drehachse |
| 4 | erste elastische Lagereinrichtung | 112 | Anstellhebelaufnahmeblech |
| 5 | zweite elastische Lagereinrichtung | 113 | Doppelpfeil |
| 6 | dritte elastische Lagereinrichtung | 114 | axiale Führungseinrichtung |
| 7 | Bohrungen | 118 | Führungsachse |
| 8 | Reibringgetriebegehäuse | 119 | Verstellbrücke |
| 9 | Querschnittsverjüngung | 121 | Reibring |
| 10 | Anstellhebel | 122 | erster Rollenhalter |
| 11 | Drehachse | 123 | zweiter Rollenhalter |
| 12 | Anstellhebelaufnahmeblech | 124 | Wälzkörperachse |
| 13 | Doppelpfeil | 125 | Drehsicherung |
| 14 | axiale Führungseinrichtung | 126 | Drehsicherungszapfen |
| 15 | u-förmig gebogener Bereich | 127 | Laufschiene |
| 16 | erster Schenkel der Blechkonstruk- tion | 128 | erste Flächenseite |
| | | 129 | Fläche |
| 17 | zweiter Schenkel der Blechkonstruktion | 130 | zweite Flächenseite |
| 18 | Führungsachse | 140 | Gummielement |
| 19 | Verstellbrücke | 141 | fester Befestigungskern |
| 20 | Pfeilrichtungen | 142 | Gummielementlänge |
| 21 | Reibring | 201 | Anordnung |
| 22 | erster Rollenhalter | 202 | Käfig |
| 23 | zweiter Rollenhalter zweiter Rollenhalter | 204 | elastische Lagereinrichtung |
| 24 | Wälzkörperachse | 208 | Reibringgetriebegehäuse |
| 25 | Drehsicherung | 214 | axiale Führungseinrichtung |
| 26 | Drehsicherungszapfen | 218 | Führungsachse |
| 27 | Laufschiene | 219 | Verstellbrücke |
| 28 | erste Flächenseite | 221 | Reibring |
| 29 | Fläche | 222 | erster Rollenhalter |
| 30 | zweite Flächenseite | 223 | zweiter Rollenhalter |
| 101 | Anordnung | 224 | Wälzkörperachse |
| 102 | Käfig | 225 | Drehsicherung |
| | | 226 | Drehsicherungszapfen |
| 227 | Laufschiene | 357 | zweite Führungsachse |
| 228 | erste Flächenseite | 358 | Zapfen |
| 229 | Fläche | 359 | Querantrieb |
| 230 | zweite Flächenseite | 360 | Flüssigkeitskupplung |
| 245 | Verstellmotor | 361 | Schalteinheit |
| 246 | Getriebeanordnung | 362 | Kegelreibringgetriebe |
| 247 | gegenüberliegende Seite | 363 | Abtrieb |
| 248 | Blattfeder | 364 | Welle |
| 248A | Führungsbuchse | 365 | Bremsscheibe |
| 248B | Tellerfeder | 366 | Bremsbacken |
| 248C | Gummielementführung | 367 | freilaufendes Zahnrad |
| 248D | Lagerkopf | 368 | Vorgelege |
| 248E | Lagerstange | 369 | Schaltmuffe |
| 248F | Lagerpfanne | 370 | Ritzel |
| 249 | Lager für die Führungsstange | 371 | Antriebswelle |
| 302 | Käfig | 372 | Stelle |
| 308 | Reibringgetriebegehäuse | 373 | Ansätze |
| 311 | Drehachse | 374 | Ansätze |
| 319 | Verstellbrücke | 375 | Umfangsnut |
| 321 | Reibring | 376 | Flansche |
| 321A | Spalt | 377 | Verstellspindel |
| 322 | erster Rollenhalter | 378 | Abtriebswelle |
| 323 | zweiter Rollenhalter | 379 | Anpasseinrichtung |
| 329 | Fläche | 380 | Abtriebsritzel |
| 345 | Verstellmotor | 381 | Abtriebsritzel |
| 350 | erste Kegelreibradachse | 382 | zugewandter Flansch |
| 351 | zweite Kegelreibradachse | 383 | Radialverzahnung |
| 352 | erstes Kegelreibrad | 384 | Radialverzahnung |
| 353 | zweites Kegelreibrad | 385 | Trennwand |
| 354 | erstes Querhaupt | 386 | Planetengetriebe |
| 355 | zweites Querhaupt | 387 | Welle |
| 356 | erste Führungsachse | 388 | Abtriebswelle |
| 389 | Ritzel | 611 | Drehachse |
| 390 | Getriebeabtriebswelle | 618 | Führungsachse |
| 391 | Zahnrad | 619 | Verstellbrücke |
| 392 | Ritzel, welches einstückig mit dem Zahnrad verbunden ist | 621 | Reibring |
| | | 622 | erster Rollenhalter |
| 393 | Planetenzahnräder | 623 | zweiter Rollenhalter |
| 394 | Planetenträger | 624 | Wälzkörperachse |
| 395 | zylindrischer Ansatz | 629 | Fläche |
| 396 | Hohlrad | 702 | Käfig |
| 397 | Längsverzahnung | 704 | Lagereinrichtung |
| 398 | Lammelenkupplung | 711 | Fläche |
| 399 | Bremse | 802 | Käfig |
| 402 | Käfig | 804 | Lagereinrichtung |
| 408 | Reibringgetriebegehäuse | 811 | Drehachse |
| 411 | Drehachse | 908 | Reibringgetriebegehäuse |
| 414 | axiale Führungseinrichtung | 1100 | Kulissenanordnung |
| 419 | Verstellbrücke | 1101 | erste zylindrische Führungsachse |
| 421 | Reibring | 1102 | zweite zylindrische Führungsachse |
| 422 | erste Lagerstelle | 1103 | Kulisse |
| 423 | zweite Lagerstelle | 1104 | erste Kulissennut |
| 424 | Wälzkörperachse | 1105 | zweite Kulissennut |
| 452 | erstes Kegelreibrad | 1106 | Kulissenplatte |
| 519 | Verstellbrücke | 1107 | erster Kulissenstein |
| 521 | Reibring | 1108 | zweiter Kulissenstein |
| 522 | erste Lagerstelle | 1109 | Ringfolger |
| 523 | zweite Lagerstelle | 1110 | Stellhebel |
| 521A | Spalt | 1111 | Führungsstift |
| 552 | erstes Kegelreibrad | 1112 | Doppelpfeil |
| 553 | zweites Kegelreibrad | 1113 | Führungsnut |
| 602 | Käfig | 1114 | mittlere Längsachse des Stellhebels |
| 604 | Lagereinrichtung | 1115 | Null-Achse |
| 608 | Reibringgetriebegehäuse | 1116 | Null-Position |
| 1117 | erste Rolle | 1251 | Lagerkugel |
| 1118 | zweite Rolle | 1252 | Druckfeder |
| 1201 | erste zylindrische Führungsachse | 1253 | Endanschlagsbolzenabsatz |
| 1202 | zweite zylindrische Führungsachse | 1254 | Gehäuseanschlag |
| 1206 | Kulissenplatte | 1255 | Lagerscheibe |
| 1210 | Stellhebel | 1256 | Gleitlager |
| 1211 | Führungsstift | 1257 | Doppelrichtungen |
| 1213 | Führungsnut | 1258 | Anfangsdicke |
| 1220 | Linearantrieb | 1259 | Enddicke |
| 1221 | erster Endanschlag | 1270 | Eingangskegel |
| 1222 | zweiter Endanschlag | 1271 | Ausgangskegel |
| 1223 | Verstellweg | 1272 | Antriebswelle |
| 1224 | erster Hubmagnet | 1273 | Zylinderrollenlager des Eingangskegels |
| 1225 | zweiter Hubmagnet | | |
| 1226 | Verstellachse | 1274 | Kegelrollenlager des Eingangskegels |
| 1227 | Verstellkolben | 1275 | Zylinderrollenlager des Ausgangs-kegelsgels |
| 1228 | Metallkern | | |
| 1229 | Magnetspule | 1276 | Zylinderrollenlager des Ausgangskegels |
| 1230 | Hubmagnetgehäuse | | |
| 1231 | Federelement | 1277 | Abtriebswelle |
| 1232 | Mittellage | 1278 | Kegelrollenlager der Abtriebswelle |
| 1240 | verstellbarer Endanschlag | 1279 | axiale Richtung |
| 1241 | verstellbarer Endanschlagsbolzen | 1280 | Anpresseinrichtung |
| 1242 | Drehmagnet | 1281 | erste Anstellscheibe |
| 1243 | Verstellmechanik | 1282 | zweite Anstellscheibe |
| 1244 | elektrisches Kabel | 1283 | Kugeln |
| 1245 | elektrisches Kabel | 1284 | Federanordnung |
| 1246 | Schraubverbindungen | 1285 | hydraulische Druckreguliereinrichtung |
| 1247 | Verstellmechanikgehäuse | 1286 | Hubmagnet |
| 1248 | Gewindebuchsen | 1287 | magnetischer Kolben |
| 1249 | Drehmagnetwelle | 1288 | Zusatzwelle |
| 1250 | Anstellscheibe | 1289 | Rotationsachse der Ausgangswelle |
| 1290 | Lagerungsbohrung | 1341 | abgewandte Seite |
| 1291 | Hydraulikölbohrung | 1342 | Lagerbrillenansatz |
| 1292 | Hydraulikölraum | 1343 | Getriebeglied |
| 1300 | geteilter Reibring | 1344 | Differentialgetriebe |
| 1301 | erster Reibkegel | 1345 | Abstand |
| 1302 | zweiter Reibkegel | 1346 | Abtriebswellenrotationsachse |
| 1303 | geteilte äußere Lauffläche | 1347 | Differentialgetrieberotationsachse |
| 1304 | äußerer Spalt | 1508 | Reibringgetriebegehäuse |
| 1305 | erste äußere Laufflächenhälfte | 1521 | Reibring |
| 1306 | zweite äußere Laufflächenhälfte | 2008 | Kegelreibringgehäuse |
| 1307 | geteilte innere Lauffläche | 2277 | Abtriebswelle |
| 1308 | innerer Spalt | 2301 | erster Reibkegel |
| 1309 | erste innere Laufflächenhälfte | 2302 | zweiter Reibkegel |
| 1310 | zweite innere Laufflächenhälfte | 2362 | Kegelreibringgetriebe |
| 1311 | Spalt | 3270 | Eingangskegel |
| 1312 | Spaltbreite | 3271 | Ausgangskegel |
| 1313 | Reibringrotationsachse | 3360 | Planetengetriebe |
| 1314 | Reibkegelrotationsachse | 3362 | Kegelreibringgetriebe |
| 1315 | Reibkegelrotationsachse | 3363 | Eingangskegelachse |
| 1316 | Fasen | 3364 | Ausgangskegelachse |
| 1317 | Gesamtbreite | 3365 | Ausgangswelle |
| 1330 | erste separate Lagerbrille | 3366 | Ausgangswellensonnenrad |
| 1331 | zweite separate Lagerbrille | 3367 | Eingangswellensonnenrad |
| 1332 | Wellendichtung | 3368 | Eingangswelle |
| 1333 | Reibkegelwellen | 3369 | Planetenrad |
| 1334 | Fluidraum | 3370 | Planetenradachse |
| 1335 | weiterer Getrieberaum | 3371 | Hohlrad |
| 1336 | Reibkegelzapfendichtung | 3372 | Schaltgestänge |
| 1337 | Umgebung | 3373 | Steg |
| 1338 | Abdeckblech | 4008 | Kegelreibringgehäuse |
| 1339 | erste Gehäusehälfte | 4270 | Eingangskegel |
| 1340 | zweite Gehäusehälfte | 4271 | Ausgangskegel |
| 4360 | Doppelplanetengetriebe | 5398 | Aufnahme |
| 4362 | Kegelreibringgetriebe | 5399 | Positionierkugelaufnahme |
| 4363 | Eingangskegelachse | 5400 | Überlastsicherungsabdeckung |
| 4364 | Ausgangskegelachse | 5401 | Sicherungsschraube |
| 4365 | Ausgangswelle | 5402 | Doppelfeil |
| 4366 | Ausgangswellenzahnrad | 6391 | Anlenker |
| 4368 | Eingangswelle | 6394 | Käfiganlenkerdrehpunkt |
| 4369 | erstes Planetenrad | 6395 | Überlastsicherung |
| 4370 | erste Planetenradachse | 6410 | Druckelement |
| 4380 | erstes Ausgangswellensonnenrad | 6411 | Lagerring |
| 4381 | zweites Planetenrad | 6412 | Zugelement |
| 4382 | zweite Planetenradachse | 6413 | Anlenkerrohr |
| 4383 | Planetenradgestell | 6414 | erste Druckfeder |
| 4384 | erstes Schaltgestänge | 6415 | Anlenkerrohrkragen |
| 4385 | zweites Schaltgestänge | 6416 | Anlenkerrohrflansch |
| 4386 | zweites Ausgangswellensonnenrad | 6417 | Zugkräfte |
| 5002 | Käfig | 6418 | Druckkräfte |
| 5011 | Drehachse | 6419 | zweite Druckfeder |
| 5014 | axiale Führungseinrichtung | 6420 | Sicherungsring |
| 5018 | Führungsachse | 7430 | Ausfallsicherung |
| 5019 | Verstellbrücke | 7431 | Nockenscheibe |
| 5021 | Reibring | 7432 | Nockenfolger |
| 5022 | erster Rollenhalter | 7433 | Nockenfolgerandrückfeder |
| 5022 | zweiter Rollenhalter | 7434 | erste Mitnehmer |
| 5390 | Exzentermotor | 7435 | zweite Mitnehmer |
| 5391 | Anlenker | 7436 | Haltescheibe |
| 5392 | Exzenteranlenkerstange | 7437 | Antriebsachse |
| 5393 | Käfiganlenkerstange | 7438 | Antrieb |
| 5394 | Käfiganlenkerdrehpunkt | 7439 | Antriebswelle |
| 5395 | Überlastsicherung | 7440 | Doppelfeil |
| 5396 | Positionierkugel | 7441 | Haltescheibefeder |
| 5397 | Positionierfeder | 7442 | Ausrücker |
| 7443 | Ausrückerkolben | 7446 | Senke |
| 7444 | Richtung | 7447 | Höhenprofil |
| 7445 | Andrückkraft | | |

## Patentansprüche

1. Reibringgetriebe mit einem Reibring (421; 521) und zwei um Wälzkörperachsen (424) umlaufenden, voneinander um einen Spalt (521 A) beabstandet angeordneten Wälzkörpern (452; 552, 553), bei welchem der Reibring (421; 521) entlang des Spaltes (521 A) auf Grund der Rotation des Reibringes (421; 521) und der Wälzkörper (452; 552, 553) in Abhängigkeit von einem Anstellwinkel bezüglich des Spaltes (521A) verlagerbar und in seinem Anstellwinkel über eine Verstellbrücke (419; 519) angelenkt ist, die den Reibring (421; 521) an wenigstens zwei Lagerstellen (422, 423; 522, 523) lagert, ***dadurch gekennzeichnet, dass*** wenigstens eine Lagerstelle (423) des Reibringes (421; 521) bezüglich der Verstellbrücke (419; 519) und/oder bezüglich einer weiteren Lagerstelle (422) des Reibringes (421; 521) verlagerbar angeordnet ist.

2. Reibringgetriebe nach Anspruch 1, ***dadurch gekennzeichnet, dass*** die Verstellbrücke zwischen zwei Lagerstellen ein Gelenk aufweist.

3. Reibringgetriebe mit einem Reibring (421; 521) und zwei um Wälzkörperachsen (424) umlaufenden, voneinander um einen Spalt (521A) beabstandet angeordneten Wälzkörpern (452; 552, 553), bei welchem der Reibring (421; 521) entlang des Spaltes (521A) auf Grund der Rotation des Reibringes (421; 521) und der Wälzkörper (452; 552, 553) in Abhängigkeit von einem Anstellwinkel bezüglich des Spaltes (521A) verlagerbar und in seinem Anstellwinkel über eine Verstellbrücke (419; 519) angelenkt ist, die den Reibring (421; 521) an wenigstens zwei Lagerstellen (422, 423; 522, 523) lagert, ***dadurch gekennzeichnet, dass*** eine Lagerstelle (423) verlagerbar an einer Kulissenanordnung (1100) geführt ist.

4. Reibringgetriebe nach Anspruch 3, ***dadurch gekennzeichnet, dass*** die Kulissenanordnung (1100) sowohl eine erste Bauteilgruppe aus einer Kulisse (1103) mit Kulissennuten (1104, 1105) und einer Kulissenplatte (1106) als auch eine zweite Bauteilgruppe aus Kulissensteine (1107, 1108) aufweist.

5. Reibringgetriebe mit zwei voneinander um einen Spalt (521A) beabstandeten Wälzkörpern (452; 552, 553), die auf axialen Wälzkörperachsen (424) umlaufend über einen Reibring (421; 521) miteinander korrespondieren, wobei der Reibring (421; 521) in einer axial frei verlagerbaren Verstellbrücke (419; 519) um einen Verstellweg axial entlang dem Spalt (521A) verlagerbar angeordnet ist, ***gekennzeichnet durch*** Mittel zum Auslenken einer verlagerbaren Lagerstelle (423), mit welchen die verlagerbare Lagerstelle (423) von einer Null-Achse (1115) aus einer Null-Position (1116) ausgelenkt wird.

6. Reibringgetriebe nach Anspruch **5, *dadurch gekennzeichnet, dass*** in etwa quer zu der Null-Achse (1115) Kulissensteine (1107, 1108) in Kulissennuten (1104, 1105) verschiebbar angeordnet sind.

7. Reibringgetriebe nach einem der Ansprüche 5 oder 6, ***dadurch gekennzeichnet, dass*** Auslenkmittel einen Stellhebel (1110) aufweisen.

8. Reibringgetriebe nach Anspruch 7, ***dadurch gekennzeichnet, dass*** der Stellhebel (1110) exzentrisch zur Null-Achse (1115) gelagert ist.

9. Reibringgetriebe nach einem der Ansprüche 5 bis 8, ***dadurch gekennzeichnet, dass*** eine Null-Position (1116) in einem Schnittpunkt der Null-Achse (1115) und der Mittellängsachse (1114) eines Stellhebels (1110) liegt.

10. Reibringgetriebe nach einem der Ansprüche 5 bis 9, ***dadurch gekennzeichnet, dass*** die Auslenkmittel eine Aufnahme für einen Ringfolger (1109) aufweisen.

11. Reibringgetriebe nach Anspruch 10, ***dadurch gekennzeichnet, dass*** die Ringfolgeraufnahme eine Führungsnut (1113) aufweist.

12. Reibringgetriebe nach einem der Ansprüche 1 bis 11, ***dadurch gekennzeichnet, dass*** ein Ringfolger (1109) an einer Kulissenplatte (1106) angeordnet ist.

13. Reibringgetriebe nach einem der Ansprüche 5 bis 12, ***dadurch gekennzeichnet, dass*** die Auslenkmittel an einem Gehäuse (8) des Reibringgetriebes gelagert sind.

14. Reibringgetriebe nach einem der Ansprüche 5 bis 13, ***dadurch gekennzeichnet, dass*** die Null-Achse (1115) im Wesentlichen parallel zu dem Spalt (321A) der axialen Führungseinrichtung (14) verläuft.

15. Reibringgetriebe mit zwei voneinander um einen Spalt (521A) beabstandeten Wälzkörpern (452; 552, 553), die auf axialen Wälzkörperachsen (424) umlaufend über einen Reibring (421; 521) miteinander korrespondieren, wobei der Reibring (421; 521) in einer axial frei verlagerbaren Verstellbrücke (419; 519) um einen Verstellweg axial entlang dem Spalt (521A) verlagerbar angeordnet ist, ***gekennzeichnet durch*** Mittel zum Einlenken einer verlagerbaren Lagerstelle (423), mit welchen die verlagerbare Lagerstelle, welche von einer Null-Achse (1115) aus einer ersten Null-Position (1116) ausgelenkt wurde, in eine weitere Null-Position auf der Null-Achse (1115) eingelenkt wird.

16. Reibringgetriebe nach Anspruch 40, ***dadurch gekennzeichnet, dass*** die Einlenkmittel der verlagerbaren Lagerstelle (423) einen Reibring (21) aufweisen.
